(19)

Europäisches Patentamt
European Patent Office
Office européen des brevets

(11) **EP 4 568 388 A1**

(12) **EUROPEAN PATENT APPLICATION**
published in accordance with Art. 153(4) EPC

(43) Date of publication:
**11.06.2025 Bulletin 2025/24**

(21) Application number: **23856407.4**

(22) Date of filing: **31.07.2023**

(51) International Patent Classification (IPC):
*H04W 72/04* (2023.01)

(52) Cooperative Patent Classification (CPC):
**H04W 16/02; H04W 16/14; H04W 72/04**

(86) International application number:
**PCT/CN2023/110227**

(87) International publication number:
**WO 2024/041317 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.08.2022  CN 202211002244
07.04.2023  CN 202310405623**

(71) Applicant: **Huawei Technologies Co., Ltd.
Shenzhen, Guangdong 518129 (CN)**

(72) Inventors:
• **ZHANG, Tianhong
  Shenzhen, Guangdong 518129 (CN)**
• **YANG, Fan
  Shenzhen, Guangdong 518129 (CN)**
• **HUANG, Haining
  Shenzhen, Guangdong 518129 (CN)**
• **LI, Junyao
  Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD, AND APPARATUS**

(57)    A communication method and apparatus are disclosed. The method includes: A first terminal apparatus obtains configuration information of a resource pool (S201). When the resource pool includes a first resource, the first terminal apparatus determines a third resource from the first resource (S202); or when the resource pool includes the first resource and a second resource, the first terminal apparatus determines a third resource from the first resource and/or the second resource (S202), where the third resource is a resource used for transmitting sidelink information in a second communication system. The first terminal apparatus transmits sidelink information to a second terminal apparatus on the third resource (S203). The first resource is a resource used for transmitting sidelink information in a first communication system and sidelink information in the second communication system. The second resource is a resource used for transmitting sidelink information in the second communication system. According to embodiments of this application, the first resource and the second resource may belong to one resource pool or different resource pools. In this way, a relationship between the first resource, the second resource, and the resource pool is specified.

FIG. 7

## Description

This application claims priorities to Chinese Patent Application No. 202211002244.4, filed with the China National Intellectual Property Administration on August 21, 2022 and entitled "COMMUNICATION METHOD AND APPARATUS", and to Chinese Patent Application No. 202310405623.6, filed with the China National Intellectual Property Administration on April 7, 2023 and entitled "COMMUNICATION METHOD AND APPARATUS".

## TECHNICAL FIELD

This application relates to the communication field, and more specifically, to a communication method and apparatus.

## BACKGROUND

The Release 16 (R16 for short) includes long term evolution (long term evolution, LTE)-dedicated resources and new radio (new radio, NR)-dedicated resources. The "LTE-dedicated resources" may be understood as resources dedicated for transmission of sidelink (sidelink, SL) information in an LTE communication system. The "NR-dedicated resources" may be understood as resources dedicated for transmission of sidelink information in an NR communication system.

In the Release 18 (R18 for short), in view of limited spectrum resources, a part of the LTE-dedicated resources may be used for transmitting sidelink information in the NR communication system. In other words, the R18 includes NR-dedicated resources and R18 NR and LTE shared resources.

However, currently, a relationship between an NR-dedicated resource, an R18 NR and LTE shared resource, and a resource pool is not specified.

## SUMMARY

This application provides a communication method and apparatus, to specify a relationship between an NR-dedicated resource, an R18 NR and LTE shared resource, and a resource pool.

According to a first aspect, a communication method is provided, and includes:

A first terminal apparatus obtains configuration information of a resource pool. When the resource pool includes a first resource, the first terminal apparatus determines a third resource from the first resource; or when the resource pool includes the first resource and a second resource, the first terminal apparatus determines a third resource from the first resource and/or the second resource, where the third resource is a resource used for transmitting sidelink information in a second communication system. The first terminal apparatus transmits sidelink information to a second terminal apparatus on the third resource. The first resource is a resource used for transmitting sidelink information in a first communication system and sidelink information in the second communication system. The second resource is a resource used for transmitting sidelink information in the second communication system.

According to this embodiment of this application, in a manner, the resource pool includes the first resource and does not include the second resource; and in a manner, the resource pool includes the first resource and the second resource. In other words, the first resource and the second resource may belong to one resource pool or different resource pools. In this way, a relationship between the first resource, the second resource, and the resource pool is specified.

The first communication system may also be understood as a first radio access technology (radio access technology, RAT). For example, the first communication system is an LTE sidelink communication system. The second communication system may also be understood as a second radio access technology. For example, the second radio access technology is an NR sidelink communication system.

With reference to the first aspect, in some implementations of the first aspect, a communication protocol of the second communication system includes a first-release protocol and a second-release protocol, and a resource pool including the first resource is a first resource pool. That the first terminal apparatus determines a third resource from the first resource includes:

When the second terminal apparatus is a terminal apparatus supporting the first-release protocol, the first terminal apparatus determines the third resource from the first resource; or when the second terminal apparatus is a terminal apparatus supporting the second-release protocol and a receiving resource pool for the second terminal apparatus includes a part or all of the first resource, the first terminal apparatus determines the third resource from the first resource.

That the second terminal apparatus supports the second-release protocol may also be understood as that the second terminal apparatus does not support the first-release protocol.

In this implementation, the first terminal apparatus sends sidelink control information to the second terminal apparatus, and a propagation type indicated by the sidelink control information is unicast.

In this implementation, that "the first terminal apparatus determines the third resource from the first resource" may also be understood as that "the first terminal apparatus determines the third resource from the first resource pool". The first resource pool is a resource pool used for transmitting sidelink information in the first communication system and sidelink information in the second communication system.

With reference to the first aspect, in some implementations of the first aspect, a communication protocol of the second communication system includes a first-release protocol and a second-release protocol, and a resource pool including the second resource is a second resource pool. That the first terminal apparatus determines a third resource from the second resource includes:

When a propagation type for transmitting sidelink information to the second terminal apparatus is multicast or broadcast, the first terminal apparatus determines the third resource from the second resource; or when the second terminal apparatus is a terminal apparatus supporting the second-release protocol, the first terminal apparatus determines the third resource from the second resource.

In this implementation, that "the first terminal apparatus determines the third resource from the second resource" may also be understood as that "the first terminal apparatus determines the third resource from the second resource pool". The second resource pool is a resource pool used for transmitting sidelink information in the second communication system.

With reference to the first aspect, in some implementations of the first aspect, a communication protocol of the second communication system includes a first-release protocol and a second-release protocol, a resource pool including the first resource is a first resource pool, and a resource pool including the second resource is a second resource pool. That the first terminal apparatus determines a third resource from the first resource and/or the second resource includes:

When the second terminal apparatus is a terminal apparatus supporting the first-release protocol, the first terminal apparatus determines the third resource from the first resource and/or the second resource; or when the second terminal apparatus is a terminal apparatus supporting the second-release protocol and a receiving resource pool for the second terminal apparatus includes a part or all of the first resource, the first terminal apparatus determines the third resource from the first resource and/or the second resource.

In this implementation, that "the first terminal apparatus determines the third resource from the first resource and/or the second resource" may also be understood as that "the first terminal apparatus determines the third resource from the first resource pool and/or the second resource pool".

With reference to the first aspect, in some implementations of the first aspect, a communication protocol of the second communication system includes a first-release protocol and a second-release protocol, and a resource pool including the first resource and the second resource is a third resource pool. That the first terminal apparatus determines a third resource from the first resource includes:

When the second terminal apparatus is a terminal apparatus supporting the first-release protocol, the first terminal apparatus determines a candidate resource set from the first resource, where the candidate resource set includes the third resource; or when the second terminal apparatus is a terminal apparatus supporting the second-release protocol and a receiving resource pool for the second terminal apparatus includes a part or all of the first resource, the first terminal apparatus determines the candidate resource set from the first resource.

With reference to the first aspect, in some implementations of the first aspect, a communication protocol of the second communication system includes a first-release protocol and a second-release protocol, and a resource pool including the first resource and the second resource is a third resource pool. That the first terminal apparatus determines a third resource from the second resource includes:

When a propagation type for transmitting sidelink information to the second terminal apparatus is multicast or broadcast, the first terminal apparatus determines a candidate resource set from the second resource, where the candidate resource set includes the third resource; or when the second terminal apparatus is a terminal apparatus supporting the second-release protocol, the first terminal apparatus determines the candidate resource set from the second resource.

With reference to the first aspect, in some implementations of the first aspect, a communication protocol of the second communication system includes a first-release protocol and a second-release protocol, and a resource pool including the first resource and the second resource is a third resource pool. That the first terminal apparatus determines a third resource from the first resource and the second resource includes:

When the second terminal apparatus is a terminal apparatus supporting the first-release protocol, the first terminal apparatus determines a candidate resource set from the first resource and the second resource, where the candidate resource set includes the third resource; or when the second terminal apparatus is a terminal apparatus supporting the second-release protocol and a receiving resource pool for the second terminal apparatus includes a part or all of the first resource, the first terminal apparatus determines the candidate resource set from the first resource and the second resource.

In this implementation, that "the first terminal apparatus determines the third resource from the first resource and the second resource" may also be understood as that "the first terminal apparatus determines the third resource from the third resource pool".

With reference to the first aspect, in some implementations of the first aspect, that the first terminal apparatus determines the candidate resource set from the first resource and the second resource includes:

The first terminal apparatus determines, from the second resource, a first candidate resource set used for initial transmission; and/or the first terminal apparatus determines, from the first resource and the second resource, a second candidate resource set used for retransmission.

With reference to the first aspect, in some implementations of the first aspect, that the first terminal apparatus obtains configuration information of the third resource pool includes:

The first terminal apparatus receives first information, where the first information indicates the configuration information of the third resource pool. The first terminal apparatus obtains the configuration information of the third resource pool based on the first information.

With reference to the first aspect, in some implementations of the first aspect, that the first terminal apparatus obtains configuration information of the third resource pool includes:

The first terminal apparatus receives second information and third information, where the second information indicates configuration information of a resource pool to which the first resource belongs, and the third information indicates configuration information of a resource pool to which the second resource belongs. The first terminal apparatus obtains the configuration information of the third resource pool based on the second information and the third information.

With reference to the first aspect, in some implementations of the first aspect, if the second information includes information about a time unit to which the first resource belongs and the third information includes information about a time unit to which the second resource belongs, a time unit of the third resource pool includes the time unit to which the first resource belongs and the time unit to which the second resource belongs.

With reference to the first aspect, in some implementations of the first aspect, the method further includes:

The first terminal apparatus receives fourth information from the second terminal apparatus, where the fourth information indicates the first-release protocol and/or the second-release protocol. The first terminal apparatus determines, based on the fourth information, a protocol release supported by the second terminal apparatus.

In this implementation, the second terminal apparatus sends sidelink control information to the first terminal apparatus, the sidelink control information is used to schedule the fourth information, and a propagation type indicated by the sidelink control information is unicast.

With reference to the first aspect, in some implementations of the first aspect, the method further includes:

The first terminal apparatus receives fifth information from the second terminal apparatus, where the fifth information indicates information about the receiving resource pool for the second terminal apparatus. The first terminal apparatus determines, based on the fifth information, that the receiving resource pool for the second terminal apparatus includes the first resource; or the first terminal apparatus determines, based on the fifth information, that the receiving resource pool for the second terminal apparatus does not include the first resource.

In this implementation, the second terminal apparatus sends sidelink control information to the first terminal apparatus, the sidelink control information is used to schedule the fifth information, and a propagation type indicated by the sidelink control information is unicast.

With reference to the first aspect, in some implementations of the first aspect, the second terminal apparatus is a terminal apparatus supporting the first-release protocol, and the method further includes:

The first terminal apparatus sends first SCI. The first SCI includes a first field and a second field. The first field indicates a logical slot offset between a resource on which the first SCI is located and a reserved resource. A value of the second field is a first value, and the second field indicates that the logical slot offset is determined based on the second resource; or a value of the second field is a second value, and the second field indicates that the logical slot offset is determined based on the first resource and the second resource.

With reference to the first aspect, in some implementations of the first aspect, the second terminal apparatus is a terminal apparatus supporting the first-release protocol, and the method further includes:

The first terminal apparatus sends first SCI. The first SCI includes a first field and a third field. The first field indicates a logical slot offset between a resource on which the first SCI is located and a reserved resource. The third field includes at least two bits. A value of the third field is a first value, and the third field indicates that the first terminal apparatus is able to receive collision information, and indicates that the logical slot offset is determined based on the second resource; or a value of the third field is a second value, and the third field indicates that the first terminal apparatus is able to receive collision information, and indicates that the logical slot offset is determined based on the first resource and the second resource.

With reference to the first aspect, in some implementations of the first aspect, the second terminal apparatus is a terminal apparatus supporting the first-release protocol, and the method further includes:

The first terminal apparatus sends first SCI. The first SCI includes a first field and a fourth field. The first field indicates a first logical slot offset between a resource on which the first SCI is located and a first reserved resource, and the first logical slot offset is determined based on the second resource. The fourth field indicates a second logical slot offset between the first reserved resource and a second reserved resource, and the second logical slot offset is determined based on the first resource and the second resource. An actual reserved resource indicated by the first SCI is the second reserved resource.

In other words, the first reserved resource is not an actual reserved resource indicated by the first SCI.

With reference to the first aspect, in some implementations of the first aspect, the method further includes: The first terminal apparatus sends the first SCI on the first resource, where the first SCI indicates a third reserved resource, and the third reserved resource is an actual reserved resource indicated by the first SCI. When the third reserved resource overlaps a fourth reserved resource, the first terminal apparatus skips transmitting sidelink information on the third reserved resource, where the fourth reserved resource is a reserved resource for a third terminal apparatus.

With reference to the first aspect, in some implementations of the first aspect, the method further includes: The first terminal determines that a third reserved resource is a candidate resource used for sidelink transmission. When the third reserved resource overlaps a fourth reserved resource, the first terminal skips transmitting sidelink information on the third reserved resource, where the fourth reserved resource is a reserved resource for a third terminal.

With reference to the first aspect, in some implementations of the first aspect, the method further includes: The first terminal apparatus determines a third reserved resource from a candidate resource set, where the candidate resource set includes the first resource and the second resource; or the first terminal apparatus determines a third reserved resource from the first resource. The first terminal apparatus sends first SCI, where the first SCI indicates the third reserved resource. When the third reserved resource overlaps a fourth reserved resource, the first terminal apparatus skips transmitting sidelink information on the third reserved resource, where the fourth reserved resource is a reserved resource for a third terminal apparatus.

With reference to the first aspect, in some implementations of the first aspect, the method further includes:

The first terminal determines that a third reserved resource is a candidate resource used for sidelink transmission, where it is determined that a candidate resource set of the third reserved resource includes the first resource and the second resource, or the third reserved resource is determined by the first terminal from the first resource; and when the third reserved resource overlaps a fourth reserved resource, the first terminal skips transmitting sidelink information on the third reserved resource, where the fourth reserved resource is a reserved resource for a third terminal.

With reference to the first aspect, in some implementations of the first aspect, a priority value indicated by the first SCI is less than a priority value indicated by SCI sent by the third terminal apparatus.

With reference to the first aspect, in some implementations of the first aspect, the method further includes: The first terminal apparatus determines that the third reserved resource is preempted.

With reference to the first aspect, in some implementations of the first aspect, the method further includes: The first terminal reselects the preempted third reserved resource.

With reference to the first aspect, in some implementations of the first aspect, the method further includes: The first terminal determines to reevaluate the third reserved resource, and the first terminal reselects the reevaluated third reserved resource.

According to a second aspect, a communication method is provided, and includes: A first terminal apparatus obtains first information, where the first information indicates a fourth resource, and the fourth resource is a resource used for a terminal apparatus in a first communication system to transmit sidelink information. The first terminal apparatus excludes the fourth resource and a fifth resource, where the fourth resource includes the fifth resource in time domain. The first terminal apparatus determines a sixth resource from a resource excluding the fourth resource and the fifth resource. The first terminal apparatus transmits, on the sixth resource, sidelink information in a second communication system.

According to this embodiment of this application, when excluding resources, the first terminal apparatus excludes not only the fourth resource but also the fifth resource, to avoid a case that a resource selected by the first terminal apparatus conflicts with a reserved resource for the terminal apparatus in the first communication system.

With reference to the second aspect, in some implementations of the second aspect, the fifth resource includes a resource that is the same as the fourth resource in time domain.

With reference to the second aspect, in some implementations of the second aspect, the fifth resource includes resources in all subchannels in a subframe to which the fourth resource belongs.

With reference to the second aspect, in some implementations of the second aspect, the fifth resource includes resources, not overlapping the fourth resource, in all subchannels in a subframe to which the fourth resource belongs.

With reference to the second aspect, in some implementations of the second aspect, the fifth resource includes a resource that is the same as the fourth resource in time domain, that is adjacent to the fourth resource in frequency domain, and whose subchannel quantity is a first value.

According to this embodiment of this application, the first terminal apparatus excludes the resource that is the same as the fourth resource in time domain, that is adjacent to the fourth resource in frequency domain, and whose subchannel quantity is the first value. This can reduce mutual interference between sidelink information transmission of the terminal apparatus in the first communication system and sidelink information transmission of the first terminal apparatus.

With reference to the second aspect, in some implementations of the second aspect, the subframe to which the fourth resource belongs corresponds to at least one slot, and the fifth resource includes a resource in a non-first slot of the at least one slot.

According to this embodiment of this application, for example, the first communication system is LTE-V, and the second communication system is NR-V. The first symbol of an LTE-V subframe is a symbol used for automatic gain control (automatic gain control, AGC), and there is no symbol used for AGC in the middle of the LTE-V subframe. During reception in the NR-V, AGC needs to be performed on the first symbol. If the NR-V performs transmission in the first slot corresponding to the LTE-V subframe, AGC can be performed at a same time domain location. Reception and decoding in the LTE-V are not affected even if the NR-V does not perform transmission in a non-first slot corresponding to the LTE-V subframe.

With reference to the second aspect, in some implementations of the second aspect, that the first terminal apparatus determines a sixth resource from a resource excluding the fourth resource and the fifth resource includes:

The first terminal apparatus determines the sixth resource from an initial candidate resource set, where the initial candidate resource set includes a resource in the first slot of the at least one slot; or the first terminal apparatus determines the sixth resource from a candidate resource set, where a resource in a non-first slot of the at least one slot is excluded from the candidate resource set; or a MAC layer of the first terminal apparatus determines the sixth resource from a candidate resource set.

With reference to the second aspect, in some implementations of the second aspect, the initial candidate resource set includes a first initial candidate resource set, or the initial candidate resource set includes the first initial candidate resource set and a second initial candidate resource set. The first initial candidate resource set includes a resource in the first slot of the at least one slot within a resource selection window of the first terminal apparatus. The second initial candidate resource set includes a resource in a slot that does not overlap the fourth resource in time domain within the resource selection window.

With reference to the second aspect, in some implementations of the second aspect, a candidate resource in a non-first slot of the at least one slot within a resource selection window of the first terminal apparatus is excluded from the candidate resource set; and/or a resource in a slot that does not overlap the fourth resource in time domain within the resource selection window is not excluded from the candidate resource set.

With reference to the second aspect, in some implementations of the second aspect, that a MAC layer of the first terminal apparatus determines the sixth resource from a candidate resource set includes:

The MAC layer of the first terminal apparatus determines the sixth resource from the first slot of the at least one slot in the candidate resource set; and/or the MAC layer of the first terminal apparatus determines the sixth resource from a slot, in the candidate resource set, that does not overlap the fourth resource in time domain.

With reference to the second aspect, in some implementations of the second aspect, that the first terminal apparatus determines a sixth resource from a resource excluding the fourth resource and the fifth resource includes:

The first terminal apparatus determines the sixth resource from an initial candidate resource set, where the initial candidate resource set includes a candidate resource that does not overlap the fourth resource or the fifth resource in time domain within a resource selection window of the first terminal apparatus; or the first terminal apparatus determines the sixth resource from a candidate resource set, where a candidate resource that overlaps the fourth resource in time domain and a candidate resource that overlaps the fifth resource in time domain are excluded from the candidate resource set; or a MAC layer of the first terminal apparatus determines the sixth resource from a candidate resource, in a candidate resource set, that does not overlap the fourth resource or the fifth resource in time domain.

According to a third aspect, a communication method is provided, and includes:

A second terminal apparatus receives first SCI from a first terminal apparatus, where the first SCI indicates a reserved resource for the first terminal apparatus. The second terminal apparatus excludes the reserved resource for the first terminal apparatus based on the first SCI.

With reference to the third aspect, in some implementations of the third aspect, the first SCI includes a first field and a second field. The first field indicates a logical slot offset between a resource on which the first SCI is located and a reserved resource. A value of the second field is a first value, and the second field indicates that the logical slot offset is determined based on a second resource; or a value of the second field is a second value, and the second field indicates that the logical slot offset is determined based on a first resource and the second resource.

With reference to the third aspect, in some implementations of the third aspect, the first SCI includes a first field and a third field. The first field indicates a logical slot offset between a resource on which the first SCI is located and a reserved resource. The third field includes at least two bits. A value of the third field is a first value, and the third field indicates that the first terminal apparatus is able to receive collision information, and indicates that the logical slot offset is determined based on a second resource; or a value of the third field is a second value, and the third field indicates that the first terminal apparatus is able to receive collision information, and indicates that the logical slot offset is determined based on a first resource and the second resource.

With reference to the third aspect, in some implementations of the third aspect, the first SCI includes a first field and a fourth field. The first field indicates a first logical slot offset between a resource on which the first SCI is located and a first reserved resource, and the first logical slot offset is determined based on a second resource. The fourth field indicates a second logical slot offset between the first reserved resource and a second reserved resource, and the second logical slot offset is determined based on a first resource and the second resource. An actual reserved resource indicated by the first SCI is the second reserved resource.

With reference to the third aspect, in some implementations of the third aspect, the first terminal apparatus is a terminal apparatus supporting a first-release protocol, and the second terminal apparatus is a terminal apparatus supporting the first-release protocol.

According to a fourth aspect, a communication apparatus is provided. The communication apparatus may be the first terminal apparatus in the first aspect, or may be an apparatus (for example, a chip, a chip system, or a circuit) in the first terminal apparatus, or may be an apparatus that can be used with the first terminal apparatus.

In a possible implementation, the communication apparatus may include modules or units that are in a one-to-one correspondence with the methods/operations/steps/actions described in the first aspect. The modules or units may be hardware circuits or software, or may be implemented by a hardware circuit in combination with software.

In a possible implementation, the communication apparatus includes a transceiver unit and a processing unit connected to the transceiver unit.

The transceiver unit is configured to obtain configuration information of a resource pool. The resource pool includes a first resource, and the processing unit is configured to determine a third resource from the first resource; or the resource pool includes the first resource and a second resource, and the processing unit is configured to determine a third resource from the first resource and/or the second resource, where the third resource is a resource used for transmitting sidelink information in a second communication system. The transceiver unit is configured to transmit sidelink information to a second terminal apparatus on the third resource. The first resource is a resource used for transmitting sidelink information in a first communication system and sidelink information in the second communication system. The second resource is a resource used for transmitting sidelink information in the second communication system.

With reference to the fourth aspect, in some implementations of the fourth aspect, a communication protocol of the second communication system includes a first-release protocol and a second-release protocol, and a resource pool including the first resource is a first resource pool.

The second terminal apparatus is a terminal apparatus supporting the first-release protocol, and the processing unit is configured to determine the third resource from the first resource; or the second terminal apparatus is a terminal apparatus supporting the second-release protocol, a receiving resource pool for the second terminal apparatus includes a part or all of the first resource, and the processing unit is configured to determine the third resource from the first resource.

With reference to the fourth aspect, in some implementations of the fourth aspect, a communication protocol of the second communication system includes a first-release protocol and a second-release protocol, and a resource pool including the second resource is a second resource pool.

A propagation type for transmitting sidelink information to the second terminal apparatus is multicast or broadcast, and the processing unit is configured to determine the third resource from the second resource; or the second terminal apparatus is a terminal apparatus supporting the second-release protocol, and the processing unit is configured to determine the third resource from the second resource.

With reference to the fourth aspect, in some implementations of the fourth aspect, a communication protocol of the second communication system includes a first-release protocol and a second-release protocol, a resource pool including the first resource is a first resource pool, and a resource pool including the second resource is a second resource pool.

The second terminal apparatus is a terminal apparatus supporting the first-release protocol, and the processing unit is configured to determine the third resource from the first resource and/or the second resource; or the second terminal apparatus is a terminal apparatus supporting the second-release protocol, a receiving resource pool for the second terminal apparatus includes a part or all of the first resource, and the processing unit is configured to determine the third resource from the first resource and/or the second resource.

With reference to the fourth aspect, in some implementations of the fourth aspect, a communication protocol of the second communication system includes a first-release protocol and a second-release protocol, and a resource pool including the first resource and the second resource is a third resource pool.

The second terminal apparatus is a terminal apparatus supporting the first-release protocol, and the processing unit is configured to determine a candidate resource set from the first resource, where the candidate resource set includes the third resource; or the second terminal apparatus is a terminal apparatus supporting the second-release protocol, a receiving resource pool for the second terminal apparatus includes a part or all of the first resource, and the processing unit is configured to determine the candidate resource set from the first resource.

With reference to the fourth aspect, in some implementations of the fourth aspect, a communication protocol of the second communication system includes a first-release protocol and a second-release protocol, and a resource pool including the first resource and the second resource is a third resource pool.

A propagation type for transmitting sidelink information to the second terminal apparatus is multicast or broadcast, and the processing unit is configured to determine a candidate resource set from the second resource, where the candidate resource set includes the third resource; or the second terminal apparatus is a terminal apparatus supporting the second-release protocol, and the processing unit is configured to determine the candidate resource set from the second resource.

With reference to the fourth aspect, in some implementations of the fourth aspect, a communication protocol of the second communication system includes a first-release protocol and a second-release protocol, and a resource pool including the first resource and the second resource is a third resource pool.

The second terminal apparatus is a terminal apparatus supporting the first-release protocol, and the processing unit is configured to determine a candidate resource set from the first resource and the second resource, where the candidate resource set includes the third resource; or the second terminal apparatus is a terminal apparatus supporting the second-release protocol, a receiving resource pool for the second terminal apparatus includes a part or all of the first resource, and the processing unit is configured to determine the candidate resource set from the first resource and the second resource.

With reference to the fourth aspect, in some implementations of the fourth aspect, the processing unit is configured to determine, from the second resource, a first candidate resource set used for initial transmission; and/or the processing unit is configured to determine, from the first resource and the second resource, a second candidate resource set used for retransmission.

With reference to the fourth aspect, in some implementations of the fourth aspect, the transceiver unit is configured to receive first information, where the first information indicates configuration information of the third resource pool; and the transceiver unit is configured to obtain the configuration information of the third resource pool based on the first information.

With reference to the fourth aspect, in some implementations of the fourth aspect, the transceiver unit is configured to receive second information and third information, where the second information indicates configuration information of a resource pool to which the first resource belongs, and the third information indicates configuration information of a resource pool to which the second resource belongs; and the transceiver unit is configured to obtain configuration information of the third resource pool based on the second information and the third information.

With reference to the fourth aspect, in some implementations of the fourth aspect, if the second information includes information about a time unit to which the first resource belongs and the third information includes information about a time unit to which the second resource belongs, a time unit of the third resource pool includes the time unit to which the first resource belongs and the time unit to which the second resource belongs.

With reference to the fourth aspect, in some implementations of the fourth aspect, the transceiver unit is configured to receive fourth information from the second terminal apparatus, where the fourth information indicates the first-release protocol and/or the second-release protocol; and the processing unit is configured to determine, based on the fourth information, a protocol release supported by the second terminal apparatus.

With reference to the fourth aspect, in some implementations of the fourth aspect, the transceiver unit is configured to receive fifth information from the second terminal apparatus, where the fifth information indicates information about the receiving resource pool for the second terminal apparatus; and the processing unit is configured to determine, based on the fifth information, that the receiving resource pool for the second terminal apparatus includes the first resource; or the processing unit is configured to determine, based on the fifth information, that the receiving resource pool for the second terminal apparatus does not include the first resource.

With reference to the fourth aspect, in some implementations of the fourth aspect, the transceiver unit is configured to send first SCI. The first SCI includes a first field and a second field. The first field indicates a logical slot offset between a resource on which the first SCI is located and a reserved resource. A value of the second field is a first value, and the second field indicates that the logical slot offset is determined based on the second resource; or a value of the second field is a second value, and the second field indicates that the logical slot offset is determined based on the first resource and the second resource.

With reference to the fourth aspect, in some implementations of the fourth aspect, the transceiver unit is configured to send first SCI. The first SCI includes a first field and a third field. The first field indicates a logical slot offset between a resource on which the first SCI is located and a reserved resource. The third field includes at least two bits. A value of the third field is a first value, and the third field indicates that the first terminal apparatus is able to receive collision information, and indicates that the logical slot offset is determined based on the second resource; or a value of the third field is a second value, and the third field indicates that the first terminal apparatus is able to receive collision information, and indicates that the logical slot offset is determined based on the first resource and the second resource.

With reference to the fourth aspect, in some implementations of the fourth aspect, the transceiver unit is configured to send first SCI. The first SCI includes a first field and a fourth field. The first field indicates a first logical slot offset between a resource on which the first SCI is located and a first reserved resource, and the first logical slot offset is determined based on the second resource. The fourth field indicates a second logical slot offset between the first reserved resource and a second reserved resource, and the second logical slot offset is determined based on the first resource and the second resource. An actual reserved resource indicated by the first SCI is the second reserved resource.

With reference to the fourth aspect, in some implementations of the fourth aspect, the transceiver unit is configured to send the first SCI on the first resource, where the first SCI indicates a third reserved resource, and the third reserved resource is an actual reserved resource indicated by the first SCI. The third reserved resource overlaps a fourth reserved resource, and the transceiver unit is configured to skip transmitting sidelink information on the third reserved resource, where the fourth reserved resource is a reserved resource for a third terminal apparatus.

With reference to the fourth aspect, in some implementations of the fourth aspect, the processing unit is configured to determine a third reserved resource from a candidate resource set, where the candidate resource set includes the first resource and the second resource; or the processing unit is configured to determine a third reserved resource from the first resource. The transceiver unit is configured to send first SCI, where the first SCI indicates the third reserved resource. The third reserved resource overlaps a fourth reserved resource, and the transceiver unit is configured to skip transmitting sidelink information on the third reserved resource, where the fourth reserved resource is a reserved resource for a third terminal apparatus.

With reference to the fourth aspect, in some implementations of the fourth aspect, a priority value indicated by the first SCI is less than a priority value indicated by SCI sent by the third terminal apparatus.

With reference to the fourth aspect, in some implementations of the fourth aspect, the processing unit is configured to determine that the third reserved resource is preempted.

According to a fifth aspect, a communication apparatus is provided. The communication apparatus may be the first terminal apparatus in the second aspect, or may be an apparatus (for example, a chip, a chip system, or a circuit) in the first terminal apparatus, or may be an apparatus that can be used in cooperation with the first terminal apparatus.

In a possible implementation, the communication apparatus may include modules or units that are in a one-to-one correspondence with the methods/operations/steps/actions described in the second aspect. The modules or units may be hardware circuits or software, or may be implemented by a hardware circuit in combination with software.

In a possible implementation, the communication apparatus includes a transceiver unit and a processing unit connected to the transceiver unit.

The transceiver unit is configured to obtain first information, where the first information indicates a fourth resource, and the fourth resource is a reserved resource used for a terminal apparatus in a first communication system to transmit sidelink information. The processing unit is configured to exclude the fourth resource and a fifth resource, where the fourth resource includes the fifth resource in time domain. The processing unit is configured to determine a sixth resource from a resource excluding the fourth resource and the fifth resource. The transceiver unit is configured to transmit, on the sixth resource, sidelink information in a second communication system.

With reference to the fifth aspect, in some implementations of the fifth aspect, the fifth resource includes a resource that is the same as the fourth resource in time domain.

With reference to the fifth aspect, in some implementations of the fifth aspect, the fifth resource includes a resource that is the same as the fourth resource in time domain, that is adjacent to the fourth resource in frequency domain, and whose subchannel quantity is a first value.

With reference to the fifth aspect, in some implementations of the fifth aspect, the subframe to which the fourth resource belongs corresponds to at least one slot, and the fifth resource includes a resource in a non-first slot of the at least one slot.

With reference to the fifth aspect, in some implementations of the fifth aspect, the processing unit is configured to determine the sixth resource from an initial candidate resource set, where the initial candidate resource set includes a resource in the first slot of the at least one slot; or the processing unit is configured to determine the sixth resource from a candidate resource set, where a resource in a non-first slot of the at least one slot is excluded from the candidate resource set.

With reference to the fifth aspect, in some implementations of the fifth aspect, the initial candidate resource set includes a first initial candidate resource set, or the initial candidate resource set includes the first initial candidate resource set and a second initial candidate resource set. The first initial candidate resource set includes a resource in the first slot of the at least one slot within a resource selection window of the first terminal apparatus. The second initial candidate resource set includes a resource in a slot that does not overlap the fourth resource in time domain within the resource selection window.

With reference to the fifth aspect, in some implementations of the fifth aspect, a candidate resource in a non-first slot of the at least one slot within a resource selection window of the first terminal apparatus is excluded from the candidate resource set; and a resource in a slot that does not overlap the fourth resource in time domain within the resource selection window is not excluded from the candidate resource set.

With reference to the fifth aspect, in some implementations of the fifth aspect, the processing unit is configured to determine the sixth resource from the first slot of the at least one slot in the candidate resource set; and/or the processing unit is configured to determine the sixth resource from a slot, in the candidate resource set, that does not overlap the fourth resource in time domain.

With reference to the fifth aspect, in some implementations of the fifth aspect, the processing unit is configured to determine the sixth resource from an initial candidate resource set, where the initial candidate resource set includes a candidate resource that does not overlap the fourth resource or the fifth resource in time domain within a resource selection window of the first terminal apparatus; or the processing unit is configured to determine the sixth resource from a candidate resource set, where a candidate resource that overlaps the fourth resource in time domain and a candidate resource that overlaps the fifth resource in time domain are excluded from the candidate resource set; or the processing unit is configured to determine the sixth resource from a candidate resource, in a candidate resource set, that does not overlap the fourth resource or the fifth resource in time domain.

According to a sixth aspect, a communication apparatus is provided, and includes a communication interface and a processor. The communication interface is configured to output and/or input a signal. The processor is configured to execute a computer program or instructions stored in a memory, so that the communication apparatus performs the method according to any one of the possible implementations of the first aspect to the third aspect.

Optionally, the memory may be included in the communication apparatus. In a manner, the memory and the processor may be disposed separately. In another manner, the memory may be located in the processor and integrated with the processor.

Optionally, the memory may alternatively be outside the communication apparatus and coupled to the processor.

According to a seventh aspect, a computer-readable storage medium is provided, and includes a computer program. When the computer program is run on a computer, the computer is enabled to perform the method according to any one of the possible implementations of the first aspect to the third aspect.

According to an eighth aspect, a chip or a chip system is provided. The chip or the chip system includes a processing circuit and an input/output interface. The processing circuit is configured to perform the method according to any one of the possible implementations of the first aspect to the third aspect. The input/output interface is configured to input and/or output a signal.

According to a ninth aspect, a computer program product is provided. The computer program product includes a computer program (which may also be referred to as code or instructions). When the computer program is run, a computer is enabled to perform the method according to any one of the possible implementations of the first aspect to the third aspect.

According to a tenth aspect, a communication method is provided, and includes:

A first terminal apparatus obtains first information, where the first information indicates a fourth resource, and the fourth resource is a resource used for a terminal apparatus in a first communication system to transmit sidelink information. The first terminal apparatus excludes the fourth resource and a fifth resource, where the fifth resource includes a resource in a non-first slot of at least one slot, in a second communication system, that corresponds to a subframe in the first communication system. The first terminal apparatus determines a sixth resource, where the sixth resource includes at least one resource excluding the fourth resource and the fifth resource. The first terminal apparatus transmits, on the sixth resource, sidelink information in the second communication system.

It can be understood that, although the sixth resource includes at least one resource excluding the fourth resource and the fifth resource, in this embodiment of this application, the sixth resource may further include other resources, for example, include some resources in the fifth resource excluding the fourth resource.

According to this embodiment of this application, when excluding resources, the first terminal apparatus excludes the fourth resource, to avoid a case that a resource selected by the first terminal apparatus conflicts with a reserved resource for the terminal apparatus in the first communication system; and the first terminal apparatus excludes the fifth resource, to avoid a case that the second communication system starts to perform transmission in the middle of a subframe in the first communication system. This can prevent receive power of the first communication system from exceeding maximum receive power, and avoid inaccurate AGC of the first communication system, to reduce interference caused by the second communication system to sidelink information transmitted by the first communication system.

With reference to the tenth aspect, in some implementations of the tenth aspect, that the first terminal apparatus determines a sixth resource from a resource excluding the fourth resource and the fifth resource includes:

The first terminal apparatus determines the sixth resource from a candidate resource set, where a candidate resource in a non-first slot of the at least one slot, in the second communication system, that corresponds to the subframe in the first communication system is excluded from the candidate resource set.

With reference to the tenth aspect, in some implementations of the tenth aspect, that the first terminal apparatus determines a sixth resource from a resource excluding the fourth resource and the fifth resource includes:

The terminal device selects, from a candidate resource set, a candidate resource in the first slot of the at least one slot, in the second communication system, that corresponds to the subframe in the first communication system.

With reference to the tenth aspect, in some implementations of the tenth aspect, the sixth resource includes a candidate resource in a slot k that meets k mod($2^\mu$)=X mod($2^\mu$), and a start location of a subframe 0 in the first communication system is the same as a start location of a slot X in the second communication system.

It can be understood that, the candidate resource in the first slot of the at least one slot, in the second communication system, that corresponds to the subframe in the first communication system is a candidate resource in the slot k that meets k mod($2^\mu$)=X mod($2^\mu$).

Although the sixth resource includes a resource meeting the foregoing condition, the sixth resource may also include other resources, for example, some candidate resources in a slot k that does not meet k mod($2^\mu$)=X mod($2^\mu$).

With reference to the tenth aspect, in some implementations of the tenth aspect, an SCS in the second communication system is 15 kHz or 30 kHz. If a start location of a slot 0 in the second communication system is the same as a start location of a subframe in the first communication system, the sixth resource includes a candidate resource in a slot k that meets k mod($2^\mu$)=0, or the sixth resource includes a candidate resource in a slot k that does not meet k mod($2^\mu$)=1. If a start location of a slot 0 in the second communication system is different from a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

For example, the first communication system is an LTE-V communication system, and the second communication system is an NR-V communication system.

It can be understood that, although the sixth resource includes a resource meeting the foregoing condition, the sixth resource may also include other resources, for example, some candidate resources that do not meet the foregoing condition.

According to an eleventh aspect, a communication method is provided, and includes:

A first terminal apparatus obtains first information, where the first information indicates a fourth resource, and the fourth resource is a resource used for a terminal apparatus in a first communication system to transmit sidelink information. The first terminal apparatus excludes the fourth resource to obtain a candidate resource set. The first terminal apparatus determines a sixth resource, where the sixth resource includes a resource that is in the candidate resource set and that is in the first slot of at least one slot, in a second communication system, that corresponds to a subframe in the first communication system. The first terminal apparatus transmits, on the sixth resource, sidelink information in the second communication system.

It can be understood that the fourth resource may be a resource used for a first communication system module of the first terminal apparatus to transmit sidelink information, or may be a resource used for another terminal apparatus in the first communication system to transmit sidelink information.

Optionally, the candidate resource set excludes not only the fourth resource used for the terminal apparatus in the first communication system to transmit sidelink information, but also other resources, for example, a resource used for a terminal apparatus in the second communication system to transmit sidelink information, or a reserved periodic resource corresponding to a slot that is not monitored. This is not limited in this embodiment of this application.

It can be understood that, although the sixth resource includes the resource that is in the candidate resource set and that is in the first slot of the at least one slot, in the second communication system, that corresponds to the subframe in the first communication system, in this embodiment of this application, the sixth resource may further include other resources, for example, include some of resources that are in the candidate resource set and that are in a non-first slot of the at least one slot, in the second communication system, that corresponds to the subframe in the first communication system.

According to this embodiment of this application, when excluding resources, the first terminal apparatus excludes the fourth resource, to avoid a case that a resource selected by the first terminal apparatus conflicts with a reserved resource for the terminal apparatus in the first communication system. Sidelink information in the second communication system is transmitted on the resource in the first slot of the at least one slot, in the second communication system, that corresponds to the subframe in the first communication system, to avoid a case that the second communication system starts to perform transmission in the middle of the subframe in the first communication system. This can prevent receive power of the first communication system from exceeding maximum receive power, and avoid inaccurate AGC of the first communication system, to reduce interference caused by the second communication system to sidelink information transmitted by the first communication system.

With reference to the eleventh aspect, in some implementations of the eleventh aspect, that the first terminal apparatus determines a sixth resource includes:

determining, by the first terminal apparatus, the sixth resource from the candidate resource set, where a candidate resource in a non-first slot of the at least one slot, in the second communication system, that corresponds to the subframe in the first communication system is excluded from the candidate resource set.

With reference to the eleventh aspect, in some implementations of the eleventh aspect, that the first terminal apparatus determines a sixth resource includes:

The terminal device selects, from the candidate resource set, a candidate resource in the first slot of the at least one slot, in the second communication system, that corresponds to the subframe in the first communication system.

With reference to the eleventh aspect, in some implementations of the eleventh aspect, the sixth resource includes a candidate resource in a slot k that meets k mod($2^\mu$)=X mod($2^\mu$), and a start location of a subframe in the first communication system is the same as a start location of a slot X in the second communication system.

It can be understood that the sixth resource includes a candidate resource in a slot k that meets k mod($2^\mu$)=X mod($2^\mu$), and a start location of a subframe 0 in the first communication system is the same as a start location of a slot X in the second communication system.

With reference to the eleventh aspect, in some implementations of the eleventh aspect, an SCS in the second communication system is 15 kHz or 30 kHz. If a start location of a slot 0 in the second communication system is the same as a start location of a subframe in the first communication system, the sixth resource includes a candidate resource in a slot k that meets k mod($2^\mu$)=0, or the sixth resource includes a candidate resource in a slot k that does not meet k mod($2^\mu$)=1. If a start location of a slot 0 in the second communication system is different from a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

It can be understood that, although the sixth resource includes a resource meeting the foregoing condition, the sixth resource may also include other resources, for example, some candidate resources that do not meet the foregoing condition.

For example, the first communication system is an LTE-V communication system, and the second communication system is an NR-V communication system.

**BRIEF DESCRIPTION OF DRAWINGS**

FIG. 1 shows a communication system to which this application is applicable;
FIG. 2 shows a relationship between physical slots and logical slots;
FIG. 3 is a diagram showing that sidelink information is carried;
FIG. 4 is a diagram showing that a PSCCH and a PSSCH are carried in one subframe;
FIG. 5 is a diagram of reserved retransmission resources and reserved periodic resources in NR;
FIG. 6 shows a relationship between resources in the protocol of the release R16 and resources in the protocol of the release R18;
FIG. 7 is a diagram of an example of interaction in a method according to this application;
FIG. 8 shows a second technical problem addressed in this application;
FIG. 9 is a diagram of an example of interaction in a method according to this application;
FIG. 10 shows a third technical problem addressed in this application;
FIG. 11 is a diagram of an example of a method according to this application;
FIG. 12 is a diagram of an example of a method according to this application;
FIG. 13 is a diagram of resource exclusion performed by a first terminal apparatus;
FIG. 14 is a block diagram of a communication apparatus according to this application; and
FIG. 15 is a block diagram of a communication apparatus according to this application.

**DESCRIPTION OF EMBODIMENTS**

Technical solutions in embodiments of this application may be used in various 3rd generation partnership project (the 3rd generation partnership project, 3GPP) communication systems. Examples are as follows: an LTE system, for example, an LTE frequency division duplex (frequency division duplex, FDD) system or LTE time division duplex (time division duplex, TDD); a 5th generation (5th generation, 5G) communication system, also referred to as an NR communication system; and a future evolved communication system, for example, a 6th generation (6th generation, 6G) communication system.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" in this application may indicate "and/or". For example, A/B indicates A and/or B.

It should be understood that, in embodiments of this application, that "A corresponds to B" indicates that A is associated with B, and B may be determined based on A. However, it should be further understood that determining B based on A does not mean that B is determined only based on A, and B may alternatively be determined based on A and/or other information.

In embodiments of this application, "a plurality of" means two or more.

In embodiments of this application, descriptions such as first and second are merely intended to illustrate and distinguish between described objects, but not indicate a sequence or indicate a particular limitation on a quantity of described objects in embodiments of this application, and cannot constitute any limitation on embodiments of this application.

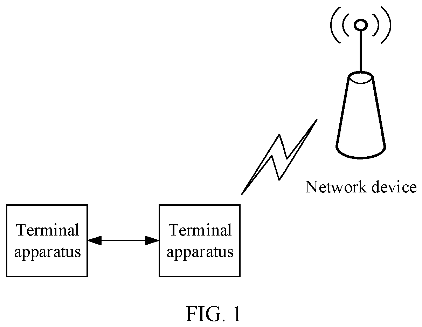

FIG. 1 shows a communication system to which this application is applicable. The system includes a terminal apparatus and a network device. Terminal apparatuses may communicate with each other based on a sidelink.

For ease of understanding, some nouns in this application are first described.

(1) Terminal apparatus

In this application, a terminal apparatus may be any device that provides voice and/or data connectivity for a user, and may also be referred to as a terminal, a terminal device, user equipment (user equipment, UE), a mobile station, a mobile terminal, or the like. The terminal device may be widely used in various scenarios, for example, customer-premises equipment (customer-premises equipment, CPE), a smart point of sale (point of sale, POS) machine, a sidelink (sidelink) scenario (for example, device-to-device (device-to-device, D2D) or vehicle-to-everything (vehicle-to-everything, V2X)), machine type communication (machine type communication, MTC), internet of things (internet of things, IOT), virtual reality, augmented reality, industrial control, self-driving, telemedicine, smart grid, smart furniture, smart office, smart wearable, smart transportation, and smart city. The terminal may be a mobile phone, a tablet computer, a computer with a wireless transceiver function, a wearable device, an uncrewed aerial vehicle, a vehicle-mounted device, an aerospace device, or the like. In embodiments of this application, a chip used in the foregoing devices may also be referred to as a terminal.

(2) Network device

In embodiments of this application, a network device may be an access network device, for example, a base station. The base station may be an evolved NodeB (evolved NodeB, eNB or eNodeB) in an LTE system, a next-generation base station in a 5G system, a next-generation base station in a 6G system or a communication system later than 6G, or the like. A specific technology and a specific device form that are used for the network device are not limited in embodiments of this application. For example, the network device may be a macro base station, a micro base station (also referred to as a small cell), a relay station, an access point, a transmission-reception point (transmission-reception point, TRP), a transmission point (transmission point, TP), a mobile switching center, a network device in a non-terrestrial network (non-terrestrial network, NTN) communication system (to be specific, the network device may be deployed on a high-altitude platform or a satellite), or a device that provides a base station function in a sidelink scenario (for example, D2D or V2X) or MTC communication. The network device may be a module or a unit that performs some functions of a base station, for example, may be a central unit (central unit, CU) or a distributed unit (distributed unit, DU). The CU and the DU separately perform some protocol stack functions of the base station. In addition, functions of the CU may be implemented by a plurality of entities. For example, control plane (control plane, CP) and user plane (user plane, UP) functions of the CU are separated to form a CU control plane (CU-CP) and a CU user plane (CU-UP). For example, the CU-CP and the CU-UP may be implemented by different functional entities, and are connected through an E1 interface. The CU-CP and the CU-UP may be coupled to the DU.

(3) A sidelink (sidelink, SL) is a link established between devices of a same type, and may also be referred to as a side-link, a secondary link, or the like. The link is referred to as a sidelink in this specification. The devices of a same type may be a link between terminal devices, a link between network devices, a link between relay nodes, or the like. This is not limited in embodiments of this application.

The link between terminal devices includes a D2D link defined in the 3GPP release (release, Rel)-12/13 and a V2X link defined by the 3GPP for vehicle-to-everything. The V2X includes direct communication of vehicle-to-vehicle (vehicle-to-vehicle, V2V), vehicle-to-infrastructure (vehicle-to-infrastructure, V2I), and vehicle-to-pedestrian (vehicle-to-pedestrian, V2P), and a vehicle-to-network (vehicle-to-network, V2N) or vehicle-to-everything V2X link, including the Rel-14/15. The V2X further includes an NR system-based V2X link in the Rel-16 and later releases that are currently being studied by the 3GPP, and the like. The V2V indicates communication between vehicles. The V2P indicates communication between a vehicle and a person (including a pedestrian, a bicycle rider, a driver, or a passenger). The V2I indicates communication between a vehicle and roadside infrastructure, for example, communication between a vehicle and a roadside unit or a road-side unit (roadside unit, RSU). In addition, the V2N may be included in the V2I, and the V2N indicates communication between a vehicle and a base station or a network. The RSU includes two types: a terminal-type RSU and a base station-type RSU. Because the terminal-type RSU is deployed on a road side, the terminal-type RSU is in a non-mobile state, and mobility does not need to be considered. The base station-type RSU can provide timing synchronization and resource scheduling for a vehicle that communicates with the base station-type RSU.

In embodiments of this application, the V2X includes LTE-V2X and NR-V2X. The LTE-V2X indicates LTE-based V2X, and is also referred to as LTE-V. The NR-V2X indicates NR-based V2X, and is also referred to as NR-V. Releases of the LTE-V include two releases: the Rel-14 and the Rel-15. Releases of the NR-V include the Rel-16, the Rel-17, the Rel-18, and later releases.

(4) Sidelink information, including a sidelink channel or a sidelink signal In embodiments of this application, all information transmitted for communication between terminal apparatuses is sidelink information, unless otherwise specified. For example, the sidelink channel may be a physical sidelink control channel (physical sidelink control channel, PSCCH), a physical sidelink shared channel (physical sidelink shared channel, PSSCH), a physical sidelink discovery channel (physical sidelink discovery channel, PSDCH), a physical sidelink feedback channel (physical sidelink feedback channel, PSFCH), or a physical sidelink broadcast channel (physical sidelink broadcast channel, PSBCH). The PSCCH may be configured to carry SCI (also referred to as sidelink control information in this specification). The SCI includes LTE SCI and NR SCI. To be specific, the SCI may be first-order SCI, or may be first-order SCI and second-order SCI. The first-order SCI may be denoted as SCI-1, and is also referred to as first-level SCI. The second-order SCI may be denoted as SCI-2, and is also referred to as second-level SCI. It can be understood that the first-order SCI is carried in the PSCCH, and the second-order SCI is carried in the PSSCH. SCI in LTE corresponds to first-order SCI in NR. The PSSCH may be configured to carry one or more of control information, service data (which may also be referred to as a media access control (media access control, MAC) protocol data unit (protocol data unit, PDU)), sidelink channel state information (channel state information, CSI), or the like. The PSSCH may be configured to carry data. The PSDCH may be configured to carry a discovery message. The PSFCH may be configured to carry sidelink feedback information. The sidelink feedback information may include feedback information for data information, for example, hybrid automatic repeat request (hybrid automatic repeat request, HARQ) acknowledgement information. The PSBCH may be configured to carry information related to sidelink synchronization. The sidelink signal may be a demodulation reference signal (demodulation reference signal, DMRS), a channel state information reference signal, a positioning reference signal, a synchronization signal, or the like.

Embodiments of this application mainly relate to LTE sidelink information and NR sidelink information. The LTE sidelink information is information sent through an LTE sidelink, and is also referred to as LTE information. The NR sidelink information is information sent through an NR sidelink, and is also referred to as NR information. From this perspective, an NR terminal apparatus may be a terminal apparatus that transmits information based on NR-V2X or an NR sidelink (NR sidelink), and an LTE terminal apparatus may be a terminal apparatus that transmits information based on LTE-V2X or an LTE sidelink (LTE sidelink). The LTE sidelink information and the NR sidelink information may coexist. In other words, "co-channel coexistence for LTE sidelink and NR sidelink" is supported. The NR information includes at least one of NR sidelink control information, NR sidelink data information, NR sidelink feedback information, NR collision indication information, NR sidelink broadcast information, an NR DMRS, an NR phase tracking reference signal (phase tracking reference signal, PTRS), an NR CSI-RS, and an NR synchronization signal. The LTE information includes at least one of LTE sidelink control information, LTE sidelink data information, NR sidelink discovery information, NR sidelink broadcast information, an NR DM-RS, and an NR synchronization signal.

(5) Priority

A priority of information is represented by a priority value. A smaller priority value of information indicates a higher priority of the information. For example, priority values of information may include {0, 1, 2, 3, 4, 5, 6, 7}, and a priority value of information being 0 indicates that the information has a highest priority. For another example, priority values of information may include {1, 2, 3, 4, 5, 6, 7, 8}, and a priority value of information being 1 indicates that the information has a highest priority. For example, that a priority of information to be sent by a terminal apparatus is higher than a specific priority threshold means that a priority value of the information to be sent by the terminal apparatus is less than a specific priority value (the two expressions are interchangeable unless otherwise specified).

(6) A resource pool (resource pool) is a set of time-frequency resources used for a terminal apparatus to perform sidelink communication. A resource pool includes one or more frequency domain units in frequency domain. The frequency domain unit may be a resource element (resource element, RE), a resource block (resources block, RB), a subchannel (subchannel), a carrier (carrier), a bandwidth part (bandwidth part, BWP), or the like. For ease of description, an example in which the frequency domain unit is a subchannel is used in this specification, unless otherwise specified. A resource pool includes one or more time units in time domain. The time unit may be a symbol, a slot (slot), a mini-slot (mini-slot), a subframe, a frame, a half-subframe, a half-frame, or the like. The one or more time units may be consecutive or discrete in terms of time. An example in which the time unit is a slot or a subframe is used in this specification, unless otherwise specified. For example, a time unit used for transmitting NR information may be a slot, and a time unit used for transmitting LTE information may be a slot or a subframe.

Time domain resources included in a resource pool may be consecutive or inconsecutive. Similarly, frequency domain resources included in a resource pool may be consecutive or inconsecutive. In LTE, a minimum granularity of a time domain resource may be a slot or a subframe (this is used as an example in this specification). In other words, a unit of a time domain resource is a slot or a subframe. In NR, a minimum granularity of a time domain resource may be a slot. A network device may preconfigure a resource pool. For example, in LTE, a network device may indicate, at a periodicity of 10 to 100 subframes by using an information element "SubframeBitmapSL-r14", subframes that belong to a resource pool in every 1024 radio frames in different TDD or FDD configurations; and in NR, a network device may indicate, at a periodicity of 10 to 160 slots by using an information element "sl-TimeResource-r16", slots that belong to a resource pool in every 1024 radio frames.

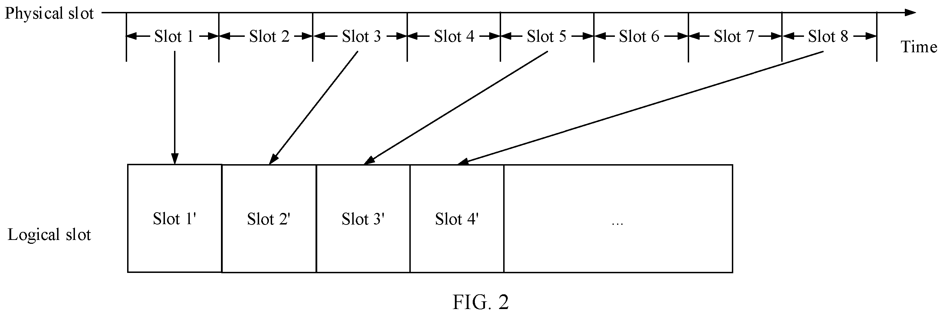

It should be noted that, that time units included in a resource pool in time domain are consecutive may mean that the time units are physically consecutive or logically consecutive. For example, FIG. 2 is a diagram of physically consecutive slots and logically consecutive slots. In FIG. 2, for example, the physically consecutive slots are a slot 1 to a slot 8. The slot 1 to the slot 8 may also be referred to as physical slots. The slot 1, the slot 3, the slot 5, and the slot 8 among the slot 1 to the slot 8 are configured to belong to one resource pool. In other words, the resource pool includes a physical slot 1, a physical slot 3, a physical slot 5, and a physical slot 8. From a perspective of the resource pool, the resource pool includes four slots, and the four slots may be a slot 1', a slot 2', a slot 3', and a slot 4'. To be specific, the resource pool includes four logically consecutive slots. It can be learned from FIG. 2 that the slot 1 among the physical slots is the slot 1' in the resource pool, the slot 3 among the physical slots is the slot 2' in the resource pool, the slot 5 among the physical slots is the slot 3' in the resource pool, and the slot 8 among the physical slots is the slot 4' in the resource pool. To be specific, physically inconsecutive slots may be logically consecutive. For ease of description, in this specification, slots that are logically consecutive but are not necessarily physically consecutive may be referred to as logical slots (logical slot). Correspondingly, a slot from a physical perspective is referred to as a physical slot. Similarly, subframes that are logically consecutive but are not necessarily physically consecutive may be referred to as logical subframes. Correspondingly, a subframe from a physical perspective is referred to as a physical subframe. For example, a total quantity of logical slots included in a resource pool used for transmitting NR information is $T_{NR}$, and a slot used for transmitting NR information may include a logical slot m, where a value range of m is {0, 1, ..., $T_{NR}$-1}. For another example, a total quantity of logical subframes included in a resource pool used for transmitting LTE information is $T_{LTE}$, and a subframe used for transmitting LTE information may include a logical subframe k, where a value range of k is {0, 1, ..., $T_{LTE}$-1}.

Resource pools may be classified into a sending resource pool and a receiving resource pool. To be specific, a terminal apparatus performs sending in the sending resource pool, and performs receiving in the receiving resource pool. Usually, to ensure sidelink communication between two terminal apparatuses, a sending resource pool to which a sending terminal apparatus belongs corresponds to a receiving resource pool to which a receiving terminal apparatus belongs. To be specific, time-frequency domain resources in the sending resource pool and the receiving resource pool and communication parameters configured in the resource pools are the same. It can also be considered that, for one sending resource pool, there is one receiving resource pool corresponding to the sending resource pool by default. This can ensure that the sending terminal device can communicate with the receiving terminal apparatus. Certainly, the receiving resource pool may also include a resource in the sending resource pool, and the sending resource pool may also include a resource in the receiving resource pool. For ease of description, in this specification, that a terminal apparatus performs sending in a resource pool means that the terminal apparatus performs sending on a resource in a sending resource pool, and that a terminal apparatus performs receiving in a resource pool means that the terminal apparatus performs receiving in a receiving resource pool corresponding to a sending resource pool. In NR, a network device may configure a receiving resource pool and a sending resource pool by using SL-BWP-PoolConfigCommon or SL-BWP-PoolConfig. Different resource pools may have different parameter configurations, for example, logical slots. Different resource pools may be distinguished by using resource pool indexes (for example, SL-ResourcePoolID). To be specific, different resource pools correspond to different SL-ResourcePoolIDs. If two resource pools have a same SL-Resource-PoolID, it can be considered that time-frequency resources of the two resource pools completely overlap.

(7) Transmission of sidelink information means that a terminal apparatus transmits sidelink information by using a resource in a resource pool. In this specification, transmission may be understood as sending and/or receiving. A resource in a resource pool may carry one or more of the following sidelink information: a PSCCH, a PSSCH, a PSFCH, and a DMRS. The PSCCH may carry first-order SCI. The PSSCH may carry second-order SCI and/or data. The PSFCH may carry feedback information. The PSCCH occupies two or three symbols in time domain. The PSCCH and the PSSCH are located in a same slot in time domain. A physical resource block (physical resource block, PRB) carrying the PSCCH starts from a PRB with a smallest sequence number in a subchannel with a smallest sequence number in an associated PSSCH. It can be understood that sidelink information in LTE does not include the PSFCH. In addition to carrying sidelink information, a resource in a resource pool may be further used for other purposes. For example, a resource in a resource pool may be further used for AGC. A symbol used for AGC is also referred to as an AGC symbol. The AGC symbol may be used for transmitting data, or may be used for transmitting a reference signal. A resource in a resource pool may also be used for receive/transmit or transmit/receive transition. A symbol used for receive/transmit or transmit/receive transition is also referred to as a gap symbol (GAP symbol). In a gap symbol, a communication device usually performs neither sending nor receiving. Usually, the AGC symbol and the gap symbol are the first symbol and the last symbol of a subframe (or a slot) respectively.

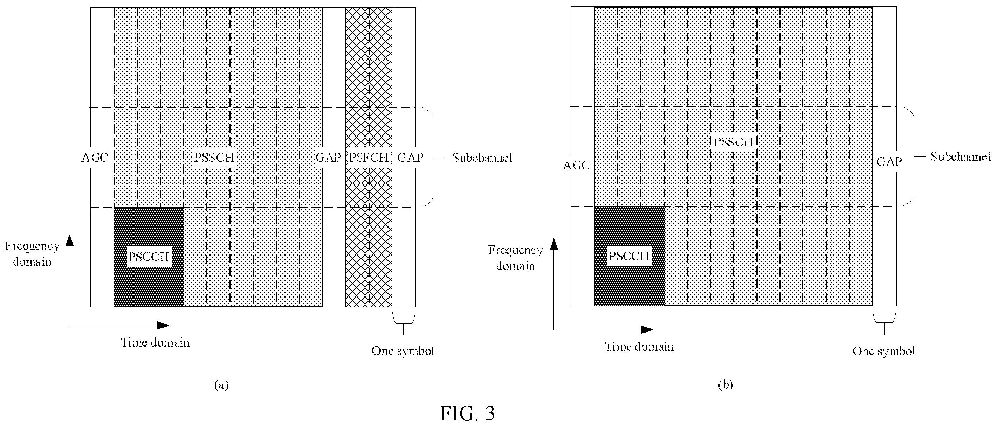

For ease of understanding, FIG. 3 is a diagram showing that sidelink information is carried. In FIG. 3, for example, a unit of a time domain resource in a resource pool is a slot, and a time domain resource carrying sidelink information is one slot. In (a) in FIG. 3, for example, one slot carries a PSCCH, a PSSCH, and a PSFCH is used. In (b) in FIG. 3, for example, one slot carries a PSCCH and a PSSCH.

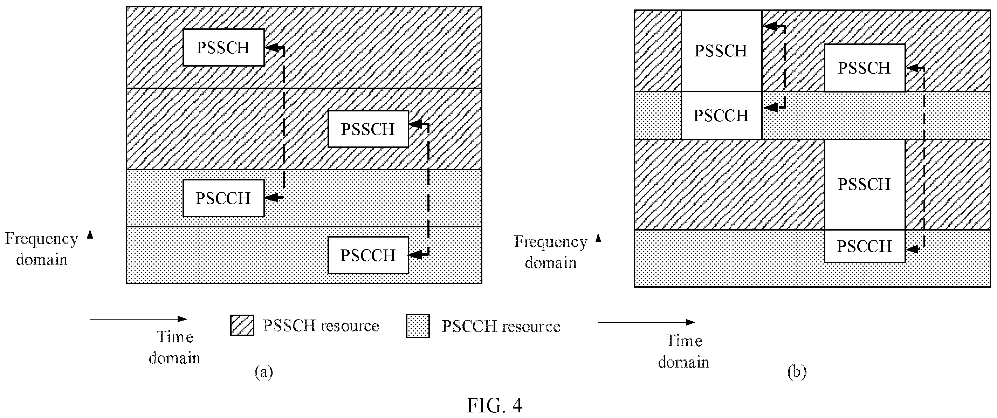

It should be noted that the PSCCH and the PSSCH may or may not be adjacent in frequency domain. For example, FIG. 4 is a diagram showing that a PSCCH and a PSSCH are carried in one subframe. In (a) in FIG. 4, for example, the PSCCH and the PSSCH are not adjacent in frequency domain. In (b) in FIG. 4, for example, the PSCCH and the PSSCH are adjacent in frequency domain.

(8) Reserved retransmission resource and reserved periodic resource A reserved retransmission resource is a resource reserved for retransmission. A reserved periodic resource is a periodic resource that is reserved. To improve reliability of transmission, a transmit end may repeatedly transmit data. A network device may configure a resource for repeated transmission, namely, a reserved retransmission resource. For example, in NR, a reserved retransmission resource and/or a reserved periodic resource may be indicated by three fields in SCI: frequency resource assignment (frequency resource assignment), time resource assignment (time resource assignment), and resource reservation period (resource reservation period). For example, the frequency resource assignment field indicates a quantity of subchannels and frequency domain locations for initial transmission and retransmission, the time resource assignment field indicates a time gap between a retransmission resource and an initial transmission resource, and the resource reservation period field indicates a resource reservation period.

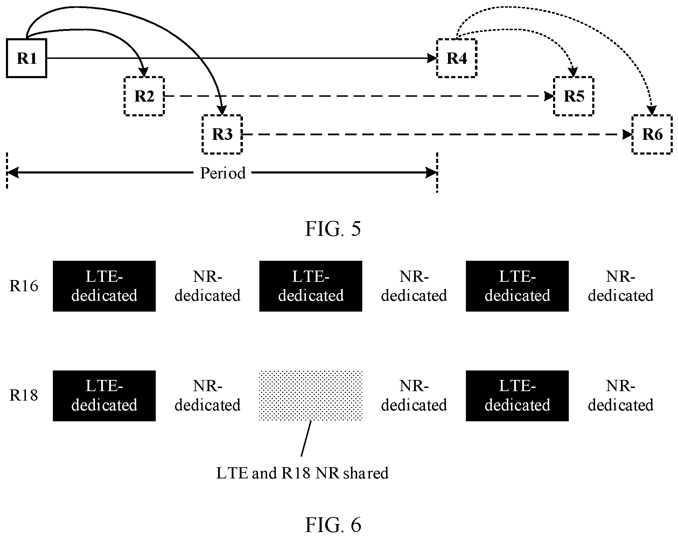

For example, FIG. 5 is a diagram of reserved retransmission resources and reserved periodic resources in NR. In FIG. 5, R1 is an initial transmission resource or a resource for actually sending SCI (indicated by solid lines), R2 and R3 are reserved retransmission resources (indicated by dashed lines), and R4, R5, and R6 are reserved periodic resources (indicated by dashed lines). SCI sent on the initial transmission resource may indicate a reserved retransmission resource. As shown in FIG. 5, R1 is a resource used for initial transmission. A frequency resource assignment field in SCI transmitted on the R1 resource may indicate a quantity of subchannels and frequency domain locations of R1, R2, and R3. A time resource assignment field in the SCI may indicate a time gap between a slot end location of R1 and a slot end location of R2, and a time gap between the slot end location of R1 and a slot end location of R3. A resource reservation period field in the SCI indicates a resource reservation period, for example, a time gap between R1 and R4, a time gap between R2 and R5, and a time gap between R3 and R6 in FIG. 5. This is equivalent to that R4 is periodically reserved for R1, R5 is periodically reserved for R2, and R6 is periodically reserved for R3. Although R4 has not been used for sidelink transmission, it can also be considered that R5 and R6 are reserved for R4.

In LTE, resource reservation for retransmission and/or periodic transmission may be indicated by four fields in SCI: resource reservation (Resource reservation), frequency resource location of initial transmission and retransmission (Frequency resource location of initial transmission and retransmission), time gap between initial transmission and retransmission (Time gap between initial transmission and retransmission), and retransmission index (Retransmission index). The resource reservation field indicates a resource reservation period. In LTE, retransmission can be performed at most once, and therefore the resource reservation field may indicate a time gap between R1 and R4, and/or a time gap between R2 and R5 in FIG. 5. The frequency resource location of initial transmission and retransmission field indicates a quantity of subchannels and frequency domain locations for initial transmission and retransmission. For example, SCI on the R1 resource indicates a quantity of subchannels and frequency domain locations of R1 and R2. The time gap between initial transmission and retransmission field indicates a time gap between initial transmission and retransmission in a same transport block (transport block, TB), and a unit is a logical slot. For example, SCI on the R1 resource indicates a time gap between a slot end location of R1 and a slot end location of R2. For another example, SCI on the R2 resource indicates a time gap between a slot end location of R1 and a slot end location of R2. The retransmission index field indicates whether current transmission is initial transmission or retransmission. For example, the field being 0 indicates that the current transmission is initial transmission, and the field being 1 indicates that the current transmission is retransmission.

(9) Resource allocation (resource allocation)

It can be understood that, when there is network coverage, a resource used for a sidelink may be allocated in a mode (mode-1) in which a network device allocates a resource; or when there is no network coverage, a resource used for a sidelink may be determined in a mode (mode-2) in which a terminal apparatus autonomously selects a resource.

In the mode-1, a resource may be allocated in a dynamic mode or a preconfiguration mode. In the dynamic mode of the mode-1, a network device allocates a resource to a terminal apparatus by using downlink control information (downlink control information, DCI). After receiving the DCI, the terminal apparatus sends information on the resource. In the preconfiguration mode of the mode-1, a network device configures, by using higher layer signaling, a related time-frequency resource used for sidelink sending. A terminal apparatus may directly send data on the resource configured by using the higher layer signaling. Alternatively, the network device sends DCI to activate the configured resource, and after receiving the DCI, the terminal apparatus may send information on the resource configured by using the higher layer signaling.

In the mode-2, a transmission resource for a terminal apparatus does not rely on a network device. The network device may pre-allocate a resource pool, and the terminal apparatus autonomously selects an available resource from the resource pool. For example, the terminal apparatus monitors (sense), in a resource monitoring window, SCI sent by another terminal apparatus in the resource pool. The monitoring may include a process of monitoring SCI, or may include a process of detecting SCI, decoding the SCI, and measuring RSRP of a resource based on an indication in the SCI. The terminal apparatus autonomously selects a resource within a resource selection window based on a resource monitoring result, to send information. It can be understood that a resource set that remains after the terminal apparatus excludes an unavailable resource from resources within the resource selection window is a candidate resource set. The terminal apparatus selects, from the candidate resource set, a resource used for sending information.

(10) Preemption evaluation mechanism: A service with a higher priority may preempt a resource reserved for a service with a lower priority to perform transmission, to ensure reliability of the service with a higher priority. For example, a terminal apparatus determines, in a slot m based on a resource sensing result, a candidate resource set S1 used for sidelink transmission. The resource sensing result may include a priority $P_{RX}$ indicated by received SCI, an RSRP value of a resource on which the SCI is located, and other information. The terminal apparatus determines a resource r1 from S1, and reserves the resource r1 by using SCI. It can be understood that a time domain location of r1 is the slot m.

Because another terminal apparatus uses a resource or reserves a resource in a resource pool in a gap between a slot n and the slot m, the terminal apparatus needs to determine, before the slot m based on a new resource sensing result, whether to use the resource r1. For example, the terminal apparatus determines, before the slot m based on the new resource sensing result, a candidate resource set S2 used for sidelink transmission. When the following condition is met, the terminal apparatus determines not to use the resource r1. This may be considered as that the terminal apparatus reports preemption of the resource r1.

Condition 1: The resource r1 does not belong to S2. To be specific, the terminal apparatus determines, based on the new resource sensing result, that S2 does not include the resource r1.

Condition 2: A priority $P_{RX}$ indicated by SCI meets one of the following conditions:

(1) A preemption priority field sl-PreemptionEnable is set to enabled, and $P_{TX} > P_{RX}$. It should be noted that $P_{TX}$ and $P_{RX}$ correspond to priority values.

(2) A preemption priority field sl-PreemptionEnable is set to any one of {1, 2, ..., 8}. In other words, $prio_{pre}$ is set to any one of {1, 2, ..., 8}. $P_{RX} < P_{pre}$, and $P_{TX} > P_{RX}$. It should be noted that $P_{RX}$, $P_{TX}$, and $P_{pre}$ correspond to priority values.

(11) Reevaluation

A terminal determines a candidate resource set S1 in a slot m based on a previous resource sensing result, where S1 is a candidate resource set that can be used for sidelink transmission. The terminal apparatus determines that r2 is a candidate resource used for sidelink transmission, but has not reserved the resource r2 by using sidelink control information. The candidate resource r2 belongs to the candidate resource set S1, and a time domain location of r2 is the slot m.

Another terminal apparatus performs sending or reserves a resource in a resource pool in a gap between a slot n and the slot m. Therefore, the terminal apparatus determines, before the slot m based on a new resource sensing result, whether to use the resource r2. A candidate resource set determined before the slot m based on the new resource sensing result is S2.

If the resource r2 does not belong to S2, the terminal apparatus reports a failure of reevaluation on the resource r2.

(12) A correspondence between $\mu$ and a subcarrier spacing (subcarrier spacing, SCS) is shown in Table 1.

Table 1

| $\mu$ | 0 | 1 | 2 | 3 | 4 | 5 |
|---|---|---|---|---|---|---|
| $2^{\mu}$ | 1 | 2 | 4 | 8 | 16 | 32 |
| Subcarrier spacing (kHz) | 15 | 30 | 60 | 120 | 240 | 480 |

It can be learned that one LTE-V subframe corresponds to two NR-V slots when an SCS in the NR-V is 30 kHz. For example, a subframe 0 corresponds to a slot 1 and a slot 2, a subframe 1 corresponds to a slot 3 and a slot 4, and so on. Similarly, two LTE-V subchannels correspond to one NR-V subchannel. For example, a subchannel 0 and a subchannel 1 in the LTE-V correspond to a subchannel 0 in the NR-V, a subchannel 2 and a subchannel 3 in the LTE-V correspond to a subchannel 1 in the NR-V, and so on.

Similarly, the same effect is achieved when another SCS is used in the NR-V. The SCS in the NR-V is indicated by

μ (refer to Table 1). LTE-V and NR-V time domain resources meet the following condition: One LTE-V subframe corresponds to $2^\mu$ NR-V slots. LTE-V and NR-V frequency domain resources meet the following condition: $2^\mu$ LTE-V subchannels correspond to one NR-V subchannel.

(13) Gap (GAP) symbol

A terminal apparatus may respectively receive and send a PSSCH in two consecutive slots, or the terminal apparatus may respectively receive and send a PSSCH and a PSFCH in one slot. Therefore, after the PSSCH and after a PSFCH symbol, a gap symbol needs to be additionally added for receive/transmit transition of the terminal apparatus.

(14) AGC symbol

The symbol is a start symbol of transmission, for example, a symbol 0 of PSCCH/PSSCH transmission, or a symbol 11 of PSFCH transmission. AGC adjustment and data reception or decoding cannot be simultaneously performed. Therefore, a signal in the AGC symbol is a duplication of signal content in a next symbol. In SL transmission, power of all symbols remains equal. Therefore, content of a remaining symbol may be received based on an automatic gain control result of the AGC symbol.

(15) Time domain unit and frequency domain unit

The time domain unit includes a symbol (symbol), a slot (slot), a mini-slot (mini-slot), a partial slot (partial slot), a subframe (subframe), a radio frame (frame), a sensing slot (sensing slot), and the like.
The frequency domain unit includes a resource element (resource element, RE), a resource block (resource block, RB), an RB set (RB set), a subchannel (subchannel), a resource pool (resource pool), a bandwidth part (bandwidth part, BWP), a carrier (carrier), a channel (channel), an interlace (interlace), and the like.

(16) Received signal strength indicator (received signal strength indicator, RSSI)

The RSSI is defined as a linear average of total receive power of OFDM symbols that are configured for a PSCCH and a PSSCH and that start from a $2^{nd}$ OFDM symbol (excluding an AGC symbol) within a slot of a configured subchannel.

(17) Reference signal received power (reference signal received power, RSRP)

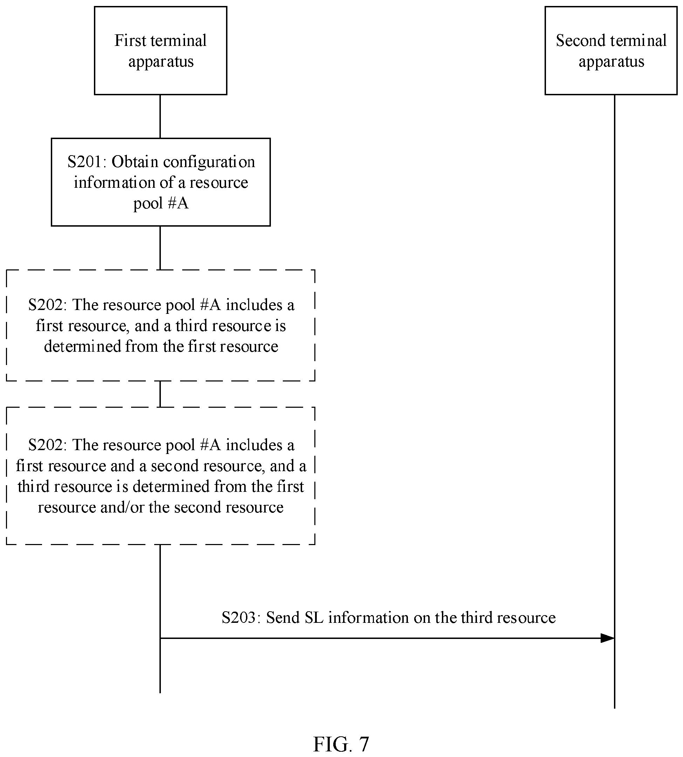

PSSCH-RSRP is defined as a linear average of power of useful signals (namely, PSSCH-DMRSs) in all REs carrying PSSCH-DMRSs (power of a CP part is not calculated). PSCCH-RSRP is defined as a linear average of power of useful signals (namely, PSCCH-DMRSs) in all REs carrying PSCCH-DMRSs (power of a CP part is not calculated). RSRP of a symbol in which a PSFCH is located is not measured.
The following describes a first technical problem addressed in this application.
As shown in FIG. 6, the R16 includes LTE-dedicated resources and NR-dedicated resources. The "LTE-dedicated resources" may be understood as resources dedicated for transmission of sidelink information in an LTE communication system. The "NR-dedicated resources" may be understood as resources dedicated for transmission of sidelink information in an NR communication system.
In the R18, in view of limited spectrum resources, a part of the LTE-dedicated resources may be used for transmitting sidelink information in the NR communication system. In other words, the R18 includes NR-dedicated resources and R18 NR and LTE shared resources. However, currently, a relationship between an NR-dedicated resource, an R18 NR and LTE shared resource, and a resource pool is not specified.
In view of this problem, this application provides a method 200. Specifically, as shown in FIG. 7, the method includes the following steps.
S201: Obtain configuration information of a resource pool #A.
The obtaining configuration information of a resource pool #A may be performed by a first terminal apparatus.
The resource pool #A includes a first resource, and does not include a second resource. Alternatively, the resource pool #A includes the first resource and the second resource.
The first resource is a resource used for transmitting sidelink information in a first communication system (for example, LTE-V) and sidelink information in a second communication system (for example, NR-V). In other words, the first resource can be used for transmitting sidelink information in the first communication system and sidelink information in the second communication system. The first resource may also be referred to as a resource shared by the first communication system and the second communication system, and is referred to as a "shared resource" for short.
It should be understood that "the first resource is a resource used for transmitting sidelink information in a first communication system and sidelink information in a second communication system" indicates a capability or an attribute of the first resource. Although "and" is used herein, an indicated meaning is that the first resource may be used for transmitting sidelink information in the first communication system or may be used for transmitting sidelink information in the second communication system. During actual transmission, a specific resource in the first resource can be used for transmitting sidelink information only in the first communication system or transmitting sidelink information only in the second communication system at one moment.

For example, the first resource is some or all of dedicated resources in the first communication system.

The second resource is a resource used for transmitting sidelink information in the second communication system. In other words, the second resource can be used for transmitting sidelink information in the second communication system, but the second resource cannot be used for transmitting sidelink information in the first communication system. The second resource may also be referred to as a resource dedicated for the second communication system, and is referred to as a "dedicated resource" for short.

The second communication system may include a plurality of communication protocols, for example, include a first-release protocol and a second-release protocol. The first resource can be used for transmitting sidelink information of a terminal apparatus supporting the first-release protocol. In a possible case, the first resource cannot be used for transmitting sidelink information of a terminal apparatus supporting the second-release protocol. The second resource can be used for transmitting sidelink information of a terminal apparatus supporting the first-release protocol and sidelink information of a terminal apparatus supporting the second-release protocol.

For example, the first communication system may be an LTE sidelink (sidelink) communication system, the second communication system may be an NR sidelink (sidelink) communication system, the first-release protocol may be the Rel-18 protocol, and the second-release protocol may be the Rel-16 protocol and/or the Rel-17 protocol. It should be understood that, in this application, LTE-sidelink and LTE-V are interchangeable, NR-sidelink and NR-V are interchangeable, Rel-18 and R18 are interchangeable, Rel-16 and R16 are interchangeable, and Rel-17 and R17 are interchangeable.

The first resource may be used for transmitting first-type sidelink information. A sending terminal apparatus and a receiving terminal apparatus for the first-type sidelink information are terminal apparatuses supporting the first-release protocol (for example, the first-release protocol is the R18). Optionally, a propagation type for transmitting the first-type sidelink information is unicast.

Optionally, the first resource is not used for transmitting second-type sidelink information. In a case, a sending terminal apparatus and/or a receiving terminal apparatus for the second-type sidelink information are/is terminal apparatuses/a terminal apparatus supporting the second-release protocol (for example, the R16 or the R17). In another case, a propagation type for transmitting the second-type sidelink information is multicast or broadcast.

The second resource may be used for transmitting the first-type sidelink information and/or the second-type sidelink information. For descriptions of the first-type sidelink information and the second-type sidelink information, refer to the foregoing descriptions.

It should be understood that the sending terminal apparatus and the receiving terminal apparatus may exchange information about releases supported by the sending terminal apparatus and the receiving terminal apparatus.

For example, the receiving terminal apparatus may send fourth information to the sending terminal apparatus, where the fourth information indicates at least one of the Rel-16, the Rel-17, the Rel-18, the Rel-19, and the Rel-20. The sending terminal apparatus determines, based on the fourth information, a protocol release supported by the receiving terminal apparatus. For example, the fourth information indicates the Rel-18, and the sending terminal apparatus determines that the receiving terminal apparatus supports the Rel-18 and a release earlier than the Rel-18. For another example, the fourth information indicates the Rel-16, and the sending terminal apparatus determines that the receiving terminal apparatus supports the Rel-16.

Similarly, the sending terminal apparatus may send fourth information to the receiving terminal apparatus. The receiving terminal apparatus determines, based on the fourth information, a protocol release supported by the sending terminal apparatus.

For example, the fourth information may be carried in any one of radio resource control (radio resource control, RRC) signaling, PC5-RRC signaling, sidelink control information (sidelink control information, SCI) signaling, or media access control control element (media access control control element, MAC CE) signaling.

S202: The resource pool #A includes the first resource, and a third resource is determined from the first resource. Alternatively, the resource pool #A includes the first resource and the second resource, and a third resource is determined from the first resource and/or the second resource.

The action of determining the third resource may be performed by the first terminal apparatus.

The third resource is a resource used for transmitting SL information in the second communication system.

The following describes S202 in detail from two aspects: The first resource and the second resource belong to different resource pools, and the first resource and the second resource belong to one resource pool.

First aspect: The first resource and the second resource belong to different resource pools. A resource pool including the first resource is a first resource pool (namely, the resource pool #A). A resource pool including the second resource is a second resource pool.

In this application, configuration information of a resource pool includes at least any one of a bitmap (bitmap) of the resource pool, a start location of a resource block (resource block, RB) in the resource pool, and a quantity of RBs in the resource pool. Details about this are not described below again.

The first terminal apparatus obtains configuration information of the first resource pool and configuration information of the second resource pool in the following manners.

Manner 1:

The first resource pool and the second resource pool are configured by a network device for the first terminal apparatus. The network device may also configure the first resource pool and the second resource pool for a second terminal apparatus.

Manner 2:

The first resource pool and the second resource pool are preconfigured for the first terminal apparatus. Certainly, the first resource pool and the second resource pool may also be preconfigured on a second terminal apparatus.

The first resource pool and the second resource pool are described below.

The first resource pool includes a resource in a resource pool for the first communication system (for example, the LTE-V). Optionally, the first resource pool includes all or some of resources in the LTE-V resource pool. Optionally, the first resource pool does not include the second resource.

First resource pool information indicates the first resource pool or information about the first resource pool. Optionally, the first resource pool information indicates that the first resource pool is a resource pool including the first resource. For example, the first resource pool information indicates that the first resource pool is a resource pool used for the R18, or the first resource pool information indicates that the first resource pool is a resource pool used for coexistence of the first communication system and the second communication system.

The second resource pool includes a resource in a resource pool for the second communication system (for example, the NR-V). Optionally, the second resource pool includes all or some of resources in an R16 NR-V resource pool. Optionally, the second resource pool does not include the first resource.

Optionally, second resource pool information indicates the second resource pool or information about the second resource pool. Optionally, the second resource pool information indicates that the second resource pool is a resource pool including the second resource. Optionally, information about a resource pool is a resource pool index. Optionally, the first resource pool information is different from the second resource pool information.

Both the first resource pool and the second resource pool occupy consecutive frequency domain resources.

Optionally, the first resource pool and the second resource pool are adjacent in frequency domain, or the first resource pool and the second resource pool are spaced apart by A RBs in frequency domain. The A RBs may be used as a guard period to avoid mutual interference between transmission in the first resource pool and transmission in the second resource pool.

Optionally, the first resource pool overlaps or partially overlaps the second resource pool in frequency domain. For example, an RB with a smallest index in the first resource pool is the same as an RB with a smallest index in the second resource pool are the same, or an RB with a largest index in the first resource pool is the same as an RB with a largest index in the second resource pool, or center frequencies of the first resource pool and the second resource pool are the same.

Optionally, the first resource pool does not overlap the second resource pool. To be specific, a resource in the first resource pool does not belong to the second resource pool, or a resource in the second resource pool does not belong to the first resource pool, or an intersection set between the first resource pool and the second resource pool is a null set. Optionally, both the first resource pool and the second resource pool are sending resource pools.

The first resource pool may be used for transmitting the first-type sidelink information. Optionally, the first resource pool is not used for transmitting the second-type sidelink information. The second resource pool may be used for transmitting the first-type sidelink information and/or the second-type sidelink information. For descriptions of the first-type sidelink information and the second-type sidelink information, refer to the foregoing descriptions.

The first terminal apparatus may determine, from the first resource pool and the second resource pool based on a propagation type of sidelink information and/or a release type of a receiving terminal apparatus, a resource pool for transmitting the sidelink information.

For example, the receiving terminal apparatus is an R18 terminal apparatus, the propagation type is unicast, and the first terminal apparatus transmits the sidelink information in the first resource pool and/or the second resource pool.

For another example, the first terminal apparatus transmits the sidelink information in the second resource pool in at least any one of the following cases: The receiving terminal apparatus is an R16 terminal apparatus, or the propagation type for transmitting the sidelink information is multicast, or the propagation type for transmitting the sidelink information is broadcast.

The following describes a process of determining the third resource by the first terminal apparatus in different cases.

Case 1:

The second terminal apparatus may send fourth information to the first terminal apparatus, where the fourth information indicates the first-release protocol. The first terminal apparatus determines, based on the fourth information, that the second terminal apparatus is a terminal apparatus supporting the first-release protocol. The first terminal apparatus determines the third resource from the first resource and/or the second resource.

To be specific, in the case 1, the first terminal apparatus may determine the third resource from the first resource, or may determine the third resource from the second resource, or may determine the third resource from the first resource and the second resource.

It should be understood that, in this embodiment of this application, "determining a resource from the first resource and the second resource" may be understood as "determining a resource from a resource set that includes the first resource and the second resource".

The "determining the third resource from the first resource" may also be understood as "determining the third resource from the first resource pool". The "determining the third resource from the second resource" may also be understood as "determining the third resource from the second resource pool".

Case 2:

The second terminal apparatus may send fourth information to the first terminal apparatus, where the fourth information indicates the second-release protocol. The first terminal apparatus determines, based on the fourth information, that the second terminal apparatus is a terminal apparatus supporting the second-release protocol.

The second terminal apparatus may send fifth information to the first terminal apparatus, where the fifth information indicates information about a receiving resource pool for the second terminal apparatus. The first terminal apparatus determines, based on the fifth information, that the receiving resource pool for the second terminal apparatus does not include the first resource.

The first terminal apparatus determines the third resource from the second resource.

In the case 2, a sending resource pool for the second terminal apparatus is the second resource pool, and the receiving resource pool for the second terminal apparatus is also the second resource pool.

Case 3:

The second terminal apparatus may send fourth information to the first terminal apparatus, where the fourth information indicates the second-release protocol. The first terminal apparatus determines, based on the fourth information, that the second terminal apparatus is a terminal apparatus supporting the second-release protocol.

The second terminal apparatus may send fifth information to the first terminal apparatus, where the fifth information indicates information about a receiving resource pool for the second terminal apparatus. The first terminal apparatus determines, based on the fifth information, that the receiving resource pool for the second terminal apparatus includes a part or all of the first resource.

The first terminal apparatus determines the third resource from the first resource and/or the second resource.

It should be understood that the network device may configure, to the second terminal apparatus, the receiving resource pool for the second terminal apparatus, or the receiving resource pool for the second terminal apparatus is specified in a protocol.

In the case 3, a sending resource pool for the second terminal apparatus is the second resource pool. In an implementation, the receiving resource pool for the second terminal apparatus is the first resource pool. In another implementation, the receiving resource pool for the second terminal apparatus includes a resource in the first resource pool (for example, includes a part or all of the first resource). Therefore, even if the first terminal apparatus sends SL information to the second terminal apparatus in the first resource pool, the second terminal apparatus can still receive the SL information.

For example, the receiving resource pool for the second terminal apparatus includes a slot or a subframe corresponding to a bit value "1" in a bitmap of a resource pool to which the first resource belongs.

For example, the second-release protocol is the R16, and an R16 NR-V receiving resource pool includes a resource in the first resource pool. For example, the R16 NR-V receiving resource pool includes a resource in a slot corresponding to a bit value 1 in a bitmap associated with the LTE-V resource pool, and the R16 NR-V receiving resource pool includes a resource in a slot corresponding to a bit value 1 in a bitmap associated with an R18 NR-V resource pool.

In the foregoing case 1 to case 3, when the first terminal apparatus transmits SL information to the second terminal apparatus in a unicast mode, the first terminal apparatus may send SCI #1 to the second terminal apparatus, where the SCI #1 indicates that a propagation type is unicast (for example, a value of a propagation type field being "10" indicates that the propagation type is unicast).

Case 4:

When the first terminal apparatus transmits SL information to the second terminal apparatus in a multicast or broadcast mode, the first terminal apparatus may send SCI #2 to the second terminal apparatus, where the SCI #2 indicates that a propagation type is multicast or broadcast. For example, a value of a propagation type field being "00" indicates that the propagation type is broadcast, a value of the propagation type field being "01" indicates that the propagation type is multicast in which feedback information includes an acknowledgement (acknowledgement, ACK) or a negative acknowledgement (negative acknowledgement, NACK), and a value of the propagation type field being "11" indicates that the propagation type is multicast in which feedback information includes a NACK. Details about this are not described below again.

When the first terminal apparatus sends SL information to the second terminal apparatus in a multicast or broadcast mode, the first terminal apparatus determines the third resource from the second resource.

It should be understood that, when the propagation type is multicast or broadcast, the second terminal apparatus may not send fourth information or fifth information to the first terminal apparatus.

A reason why the first terminal apparatus determines the third resource from the second resource when the propagation type is multicast or broadcast is as follows: For example, the second terminal apparatus includes a terminal apparatus #1 and a terminal apparatus #2. If the terminal apparatus #1 and the terminal apparatus #2 include a terminal apparatus supporting the second-release protocol, according to the method in this application, the terminal apparatus #1 and the terminal apparatus #2 can still receive SL information sent by the first terminal apparatus. In comparison, if the method in this application is not used, assuming that the first terminal apparatus determines the third resource from the first resource and the terminal apparatus #1 is a terminal apparatus supporting the second-release protocol, the terminal apparatus #1 cannot receive SL information sent by the first terminal apparatus.

Second aspect: The first resource and the second resource belong to one resource pool. A resource pool including the first resource and the second resource is a third resource pool (namely, the resource pool #A).

The first resource and the second resource in the third resource pool do not overlap each other. To be specific, a time-frequency location of the first resource does not overlap a time-frequency location of the second resource.

It should be understood that, in addition to the first resource and the second resource, the third resource pool may further include other resources. The other resources are resources that neither belong to the first resource nor belong to the second resource.

The first terminal apparatus obtains configuration information of the third resource pool in the following manners.

Manner 1:

A network device sends first information to the first terminal apparatus, where the first information indicates the configuration information of the third resource pool (for example, an R18 resource pool). The first terminal apparatus obtains the configuration information of the third resource pool based on the first information. Certainly, the network device may also send first information to a second terminal apparatus.

The configuration information of the third resource pool includes at least any one of a bitmap of the third resource pool, RB start information of the third resource pool, and RB length information of the third resource pool. The RB start information of the third resource pool and the RB length information of the third resource pool indicate frequency domain information of the third resource pool.

In an implementation, the bitmap of the third resource pool indicates a slot or a subframe (for example, a logical slot) that can be used for transmitting SL information. For example, a bit 1 in the bitmap indicates a slot or a subframe that can be used for transmitting SL information, or a bit 0 in the bitmap indicates a slot or a subframe that can be used for transmitting SL information.

It should be understood that a resource in a slot indicated by the bitmap of the third resource pool includes the first resource and the second resource.

Manner 2:

A network device sends second information and third information to the first terminal apparatus and/or a second terminal apparatus.

The second information indicates configuration information of a resource pool (for example, an LTE-V resource pool) to which the first resource belongs. The second information includes time domain information and/or frequency domain information of the LTE-V resource pool. To be specific, the second information includes at least any one of a bitmap of the LTE-V resource pool, RB start information of the LTE-V resource pool, and RB length information of the LTE-V resource pool.

For example, the first resource includes a resource in a slot indicated by the bitmap of the LTE-V resource pool, or the first resource includes a resource in an intersection set between a slot indicated by the bitmap of the LTE-V resource pool and a slot indicated by a bitmap of an NR-V resource pool.

The third information indicates configuration information of a resource pool (for example, an R16 NR-V resource pool) to which the second resource belongs. The third information includes time domain information and/or frequency domain information of the R16 NR-V resource pool. To be specific, the third information includes at least any one of a bitmap of the R16 NR-V resource pool, RB start information of the R16 NR-V resource pool, and RB length information of the R16 NR-V resource pool.

For example, the second resource includes a resource in a slot indicated by the bitmap of the R16 NR-V resource pool, or the second resource includes a resource in a slot that remains after the slot indicated by the bitmap of the LTE-V resource pool is excluded from slots indicated by a bitmap of an R18 resource pool.

The first terminal apparatus obtains the configuration information of the third resource pool (for example, the R18 resource pool) based on the second information and the third information.

For example, the second information includes time unit information of a resource pool to which the first resource belongs, the third information includes time unit information of a resource pool to which the second resource belongs, and a time unit of the third resource pool includes a time unit of the resource pool to which the first resource belongs and a time unit of the resource pool to which the second resource belongs.

For example, a time unit of the LTE-V resource pool is a time unit indicated by a bit 1 in the bitmap of the LTE-V resource pool, and a time unit of the R16 NR-V resource pool is a time unit indicated by a bit 1 in the bitmap of the R16 NR-V resource pool. In this case, a time unit of the R18 resource pool includes the time unit indicated by the bit 1 in the bitmap of the LTE-V resource pool and the time unit indicated by the bit 1 in the bitmap of the R16 NR-V resource pool.

Manner 3:

The configuration information of the third resource pool is specified in a protocol.

The first terminal apparatus determines a candidate resource set based on a propagation type of SL information and/or a release type of a receiving terminal apparatus.

For example, when the receiving terminal apparatus is an R18 terminal apparatus and the propagation type for transmitting the SL information is unicast (to be specific, the SL information is the first-type sidelink information), the first terminal apparatus determines the candidate resource set according to at least any one of the following methods: The candidate resource set for transmitting the SL information is determined from the first resource and/or the second resource, or the candidate resource set is a resource set including the first resource and/or the second resource within a resource selection window.

For another example, for the second-type sidelink information, the first terminal apparatus determines the candidate resource set according to at least any one of the following methods: The candidate resource set for transmitting the SL information is determined from the second resource, or the candidate resource set is a resource set including the second resource within a resource selection window, or the first resource is excluded from the candidate resource set, or the first resource is not put back into the candidate resource set.

The following describes a process of determining the third resource by the first terminal apparatus in different cases.

Case a:

The second terminal apparatus may send fourth information to the first terminal apparatus, where the fourth information indicates the first-release protocol. The first terminal apparatus determines, based on the fourth information, that the second terminal apparatus is a terminal apparatus supporting the first-release protocol. The first terminal apparatus determines a candidate resource set from the first resource and/or the second resource. A resource in the candidate resource set can be used for transmitting sidelink information in the second communication system. The candidate resource set includes the third resource.

To be specific, in the case a, the first terminal apparatus may determine the candidate resource set from the first resource, or may determine the candidate resource set from the second resource, or may determine the candidate resource set from the first resource and the second resource.

Optionally, in a manner, the first terminal apparatus may determine, from the first resource, a first candidate resource set used for initial transmission; and/or the first terminal apparatus may determine, from the first resource and the second resource, a second candidate resource set used for retransmission.

Case b:

The second terminal apparatus may send fourth information to the first terminal apparatus, where the fourth information indicates the second-release protocol. The first terminal apparatus determines, based on the fourth information, that the second terminal apparatus is a terminal apparatus supporting the second-release protocol.

The second terminal apparatus may send fifth information to the first terminal apparatus, where the fifth information indicates information about a receiving resource pool for the second terminal apparatus. The first terminal apparatus determines, based on the fifth information, that the receiving resource pool for the second terminal apparatus does not include the first resource.

The first terminal apparatus determines a candidate resource set from the second resource.

Case c:

The second terminal apparatus may send fourth information to the first terminal apparatus, where the fourth information indicates the second-release protocol. The first terminal apparatus determines, based on the fourth information, that the second terminal apparatus is a terminal apparatus supporting the second-release protocol.

The second terminal apparatus may send fifth information to the first terminal apparatus, where the fifth information indicates information about a receiving resource pool for the second terminal apparatus. The first terminal apparatus determines, based on the fifth information, that the receiving resource pool for the second terminal apparatus includes a part or all of the first resource.

The first terminal apparatus determines a candidate resource set from the first resource and/or the second resource set. The candidate resource set includes the third resource.

For a manner of obtaining, by the second terminal apparatus, configuration information of the receiving resource pool, refer to the foregoing descriptions.

In the foregoing case a to case c, when the first terminal apparatus transmits SL information to the second terminal apparatus in a unicast mode, the first terminal apparatus may send SCI #1 to the second terminal apparatus, where the SCI #1 indicates that a propagation type is unicast (for example, a value of a propagation type field being "10" indicates that the propagation type is unicast).

Case d:

In a multicast or broadcast case, the first terminal apparatus determines a candidate resource set from the second resource. The candidate resource set includes the third resource.

To be specific, if the first terminal apparatus communicates with the second terminal apparatus in a multicast or broadcast mode, the first terminal apparatus determines the candidate resource set from the second resource.

Optionally, the first resource pool and the third resource pool are a same resource pool, or the first resource pool and the third resource pool include a same resource, or a time domain resource included in the first resource pool and a time domain resource included in the third resource pool are a same resource.

A parameter sl-TxDirectCurrentLocation indicates a location of a transmitter DC subcarrier (transmitter DC subcarrier) in a sidelink BWP. A shift of the location of the DC subcarrier relative to an indicated subcarrier center is 7.5+5N kHz if frequencyShift7p5khzSL is provided, or is 5N kHz if the field frequencyShift7p5khzSL is absent (absent), where a parameter valueN indicates a value of N, and $N \in \{-1, 0, 1\}$.

In this embodiment, the field frequencyShift7p5khzSL may be absent, and the field valueN may indicate 0. An advantage of this lies in that resource grids of the LTE-V and the NR-V are aligned, to reduce impact on transmission on the first resource and the second resource.

S203: Send SL information on the third resource, and correspondingly, receive the SL information.

The action of sending the SL information on the third resource may be performed by the first terminal apparatus. The action of receiving the SL information may be performed by the second terminal apparatus.

According to this embodiment of this application, the first resource and the second resource may belong to one resource pool or different resource pools. In this way, a relationship between the first resource, the second resource, and the resource pool is specified.

If the first resource and the second resource belong to different resource pools, to be specific, an R18 NR and LTE shared resource and an NR-dedicated resource belong to different resource pools, an R16 terminal apparatus can be prevented from affecting sidelink information transmission of an LTE terminal apparatus.

In addition, for the R16 terminal apparatus, a sending resource pool for the R16 terminal apparatus does not include the first resource, the R16 terminal apparatus does not send SL information on the first resource, and the R16 terminal apparatus may send SL information on the second resource.

The R16 terminal apparatus determines a candidate resource set according to at least any one of the following methods: The candidate resource set for transmitting the SL information is determined from the second resource, or the candidate resource set is a resource set including the second resource within a resource selection window, or the first resource is excluded from the candidate resource set, or the first resource is not put back into the candidate resource set.

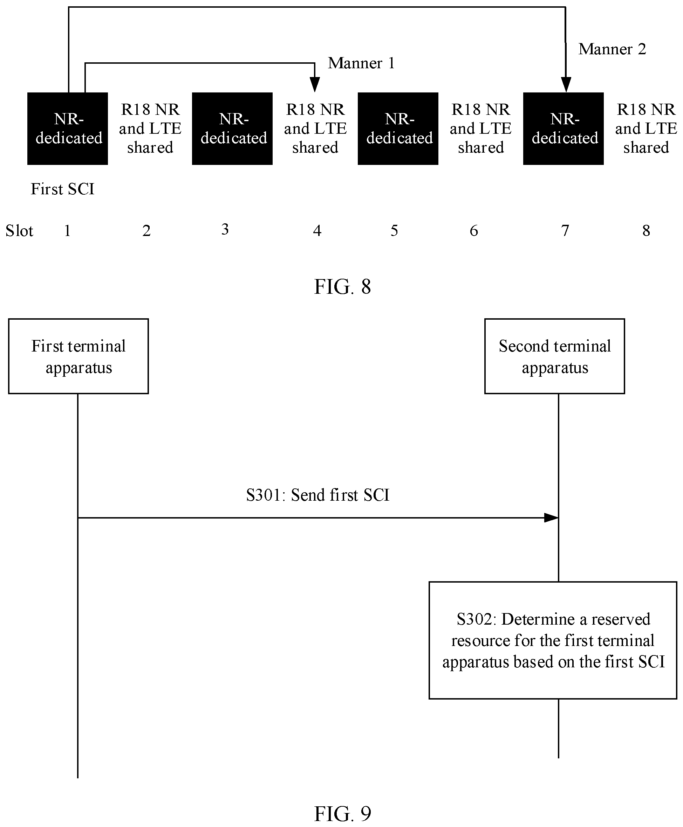

The following describes a second technical problem addressed in this application. For example, a first communication system is an LTE sidelink communication system, a second communication system is an NR sidelink communication system, a first-release protocol is the R18, and a second-release protocol is the R16. It is assumed that both a first terminal apparatus and a second terminal apparatus are terminal apparatuses supporting the R18. As shown in FIG. 8, the first terminal apparatus sends first SCI to the second terminal apparatus in a slot 1. The first SCI includes a time domain resource indication value (time resource indication value, TRIV) field. The TRIV field indicates that a time domain location of a reserved resource for the first terminal apparatus is a 3$^{rd}$ slot after the first SCI is received.

In a manner, the second terminal apparatus may determine, based on a second resource (an NR-dedicated resource), a logical slot offset between a resource on which the first SCI is located and the reserved resource. In this case, the time domain location of the reserved resource for the first terminal apparatus is a time domain 7.

In another manner, the second terminal apparatus may determine, based on a first resource (an R18 NR and LTE shared resource) and a second resource, a logical slot offset between a resource on which the first SCI is located and the reserved resource. In this case, the time domain location of the reserved resource for the first terminal apparatus is a time domain 4.

However, currently, a specific manner of the foregoing two manners that is used by the second terminal apparatus is not specified. Therefore, the second terminal apparatus may incorrectly parse the first SCI.

In view of this problem, this application provides a method 300. As shown in FIG. 9, the method 300 specifically includes the following steps.

S301: Send first SCI, and correspondingly, receive the first SCI.

The action of sending the first SCI may be performed by the first terminal apparatus.

The action of receiving the first SCI may be performed by the second terminal apparatus.

Optionally, the receiving may be further understood as sensing (sensing), detection (detect), or monitoring (monitor).

The first SCI is described below.

Case 1:

The first SCI includes a first field and a second field. The first field indicates a logical slot offset between a resource on which the first SCI is located and a reserved resource.

If a value of the second field is a first value, the second field indicates that the logical slot offset is determined based on a second resource. If a value of the second field is a second value, the second field indicates that the logical slot offset is determined based on a first resource and the second resource.

For example, the second field may occupy one bit. The first value of the second field may be "0", and the second value of the second field may be "1"; or the first value of the second field may be "1", and the second value of the second field may be "0".

Case 2:

The first SCI includes a first field and a third field. The first field indicates a logical slot offset between a resource on which the first SCI is located and a reserved resource. The third field occupies at least two bits.

If a value of the third field is a first value, the third field indicates that the first terminal apparatus is able to receive collision information, and indicates that the logical slot offset is determined based on a second resource.

If a value of the third field is a second value, the third field indicates that the first terminal apparatus is able to receive collision information, and indicates that the logical slot offset is determined based on a first resource and the second resource.

For example, the third field occupies two bits, the first value may be "01", and the second value may be "10". Because the third field occupies two bits, a value of the third field may alternatively be a third value "00" or a fourth value "11". The fourth value is a reserved value.

It should be understood that, in S204, the first terminal apparatus is a terminal apparatus supporting the first-release protocol. However, for a terminal apparatus supporting a protocol of another release (for example, the second-release protocol), the terminal apparatus may send the first SCI, where the first SCI includes a first field and a third field, and a value of the third field may be a third value. In this case, the third field indicates that the terminal apparatus is unable to receive collision information, and indicates that a logical slot offset is determined based on a second resource.

Case 3:

Because a quantity of remaining bits that can be used in existing SCI is limited, some bits in the existing SCI that have been used may be reused to indicate an actual reserved resource of the first SCI.

The first SCI includes a first field and a fourth field. The first field indicates a first logical slot offset between a resource on which the first SCI is located and a first reserved resource, and the first logical slot offset is determined based on a second resource. The fourth field indicates a second logical slot offset between the first reserved resource and a second reserved resource, and the second logical slot offset is determined based on a first resource and the second resource.

The fourth field includes some or all of bits in a resource combinations (Resource combinations) field in existing second-order SCI (namely, SCI format 2-C). The actual reserved resource indicated by the first SCI is the second reserved resource, and is not the first reserved resource.

In other words, the first reserved resource is not a true reserved resource indicated by the first SCI, the first reserved resource is a false reserved resource, and the true reserved resource is the second reserved resource.

It should be understood that a slot location of the first reserved resource may be before or after a slot location of the second reserved resource. This is not limited in this application.

The resource combinations field includes M combinations of TRIVs, FRIVs, and period values, that is, ($TRIV_m$, $FRIV_m$, $P_{rsvp,m}$). $TRIV_m$ is an $m^{th}$ TRIV field and indicates a logical slot offset between a resource on which SCI is located and a reserved resource. $FRIV_m$ is an $m^{th}$ FRIV field and indicated a frequency domain location of the reserved resource, for example, a quantity of subchannels and a start subchannel index. $P_{rsvp,m}$ is an $m^{th}$ $P_{rsvp}$ field and indicates a period. $1 \leq m \leq M$.

Optionally, the fourth field is the $TRIV_m$ field in the resource combinations field, for example, $TRIV_1$ or $TRIV_2$.

Optionally, a value of $FRIV_m$ is a first code value or a second code value, and the fourth field $TRIV_m$ indicates the second logical slot offset between the first reserved resource and the second reserved resource. Optionally, a value of $FRIV_m$ is a first code value, and indicates that the slot location of the first reserved resource is before the slot location of the second reserved resource. Optionally, a value of $FRIV_m$ is a second code value, and indicates that the slot location of the first reserved resource is after the slot location of the second reserved resource. For example, the first code value is 0, 1, a maximum value of $FRIV_m$, or a maximum value of $FRIV_m$ minus 1. For example, the second code value is 0, 1, a maximum value of $FRIV_m$, or a maximum value of $FRIV_m$ minus 1. The second code value is different from the first code value.

Optionally, a value of $FRIV_m$ is a third code value, and the fourth field $TRIV_m$ indicates time domain location information of an auxiliary resource in UE coordination. Optionally, the second code value is a code value of an FRIV in UE coordination.

For example, $$FRIV = n_{subCH,1}^{start} + \sum_{i=1}^{L_{subCH}-1} \left( N_{subchannel}^{SL} + 1 - i \right).$$

Alternatively, for example,

$$FRIV = n_{subCH,1}^{start} + n_{subCH,2}^{start} \cdot \left( N_{subchannel}^{SL} + 1 - L_{subCH} \right) + \sum_{i=1}^{L_{subCH}-1} \left( N_{subchannel}^{SL} + 1 - i \right)^2.$$

Optionally, in the case 1, the case 2, and the case 3, a logic including a dedicated slot may be further understood as a logical slot of an R16 resource pool and/or a logical slot of a second resource pool, and a logic including a dedicated slot and a shared slot may be further understood as a logical slot of an R18 resource pool and/or a logical slot of a third resource pool. That the logical slot is a logical slot including a dedicated slot and a shared slot may be further understood as that the logical slot includes the dedicated slot and the shared slot. That the logical slot is a logical slot including a dedicated slot may be further understood as that the logical slot includes the dedicated slot.

S302: Determine a reserved resource for the first terminal apparatus based on the first SCI.

The action of determining the reserved resource for the first terminal apparatus based on the first SCI may be performed by the second terminal apparatus.

Specifically, the second terminal apparatus determines, based on the first SCI, one or more of a logical slot corresponding to the reserved resource, a logical slot offset corresponding to the reserved resource, a logical period corresponding to the reserved resource, and PSFCH overheads.

A process of determining the foregoing information by the second terminal apparatus is described below by using the case 1 in S301 as an example. For ease of description, a slot of the first resource is denoted as a "shared slot", and a slot of the second resource is denoted as a "dedicated slot".

(1) The second terminal apparatus determines, based on the first SCI, a logical slot corresponding to the reserved resource.

If a value of the second field is the first value, the second terminal apparatus determines, from a logical slot including a dedicated slot, a logical slot corresponding to the reserved resource.

The logical slot including the dedicated slot may be further understood as that the logical slot includes only the dedicated slot.

If a value of the second field is the second value, the second terminal apparatus determines, from a logical slot including a dedicated slot and a shared slot, a logical slot corresponding to the reserved resource.

The logical slot including the dedicated slot and the shared slot may be further understood as that the logical slot includes the dedicated slot and the shared slot.

For specific values of the first value and the second value, refer to the foregoing descriptions.

(2) The second terminal apparatus determines, based on the first SCI, a logical slot offset corresponding to the reserved resource.

If a value of the second field is the first value, the second terminal apparatus determines, based on a logical slot including a dedicated slot, a logical slot offset corresponding to the reserved resource.

If a value of the second field is the second value, the second terminal apparatus determines, based on a logical slot including a dedicated slot and a shared slot, a logical slot offset corresponding to the reserved resource.

(3) The second terminal apparatus determines, based on the first SCI, a logical period corresponding to the reserved resource.

The first SCI includes a resource reservation period field, and the resource reservation period field indicates a period (for example, a unit of the period is ms). The second terminal apparatus may convert the period into a logical period based on a logical slot.

If a value of the second field is the first value, the second terminal apparatus determines, based on a logical slot including a dedicated slot, a logical period corresponding to the reserved resource.

If a value of the second field is the second value, the second terminal apparatus determines, based on a logical slot including a dedicated slot and a shared slot, a logical period corresponding to the reserved resource.

(4) The second terminal apparatus determines PSFCH overheads based on the first SCI.

The first SCI includes a PSFCH overhead field, and the PSFCH overhead field indicates whether PSFCH overheads of three symbols are to be subtracted during calculation of a transport block size (transport block size, TBS). A PSFCH slot is determined based on a logical slot. For example, a slot that meets $k \bmod N_{PSSCH}^{PSFCH} = 0$ is a slot in which a PSFCH is located, where k is a logical slot index, and $N_{PSSCH}^{PSFCH}$ is a PSFCH period.

If a value of the second field is the first value, the second terminal apparatus determines a logical slot index of the PSFCH overheads based on an index of a logical slot including a dedicated slot.

If a value of the second field is the second value, the second terminal apparatus determines a logical slot index of the PSFCH overheads based on an index of a logical slot including a dedicated slot and a shared slot.

A process of determining the foregoing information by the second terminal apparatus is described below by using the case 2 in S301 as an example.

For a manner of determining, by the second terminal apparatus, a logical slot corresponding to the reserved resource and a logical slot offset corresponding to the reserved resource, refer to the foregoing descriptions.

(1) The second terminal apparatus determines, based on the first SCI, a logical period corresponding to the reserved resource.

The first SCI includes a first field and a third field. The first field indicates a period between a resource on which the first SCI is located and a reserved resource. The third field occupies at least two bits.

If a value of the third field is a first value, the third field indicates that the first terminal apparatus is able to receive collision information, and indicates that a logical period corresponding to the period is determined based on a second resource.

If a value of the third field is a second value, the third field indicates that the first terminal apparatus is able to receive collision information, and indicates that a logical period corresponding to the period is determined based on a first resource and the second resource.

(2) The second terminal apparatus determines PSFCH overheads based on the first SCI.

The first SCI includes a first field and a third field. The first field indicates the PSFCH overheads. The third field occupies at least two bits.

If a value of the third field is a first value, the third field indicates that the first terminal apparatus is able to receive collision information, and indicates that a logical slot index of the PSFCH overheads is determined based on an index of a logical slot including a dedicated slot.

If a value of the third field is a second value, the third field indicates that the first terminal apparatus is able to receive collision information, and indicates that a logical slot index of the PSFCH overheads is determined based on an index of a logical slot including a dedicated slot and a shared slot.

A process of determining, by the second terminal apparatus, a logical period corresponding to the reserved resource is described below by using the case 3 in S301 as an example.

The first SCI includes a first field and a fourth field. The first field indicates a first period between a resource on which the first SCI is located and a first reserved resource, and a logical period corresponding to the first period is determined based on a second resource. The fourth field indicates a second period between the first reserved resource and a second reserved resource, and a logical period corresponding to the second period is determined based on a first resource and the second resource.

According to this embodiment of this application, the first SCI sent by the first terminal apparatus carries information about a manner of parsing the TRIV field in the first SCI, so that the second terminal apparatus can correctly parse the first SCI.

It should be understood that the method 300 and the method 200 in this application are not independent of each other, and may be used in combination. For example, S301 and S302 may be further performed after S203.

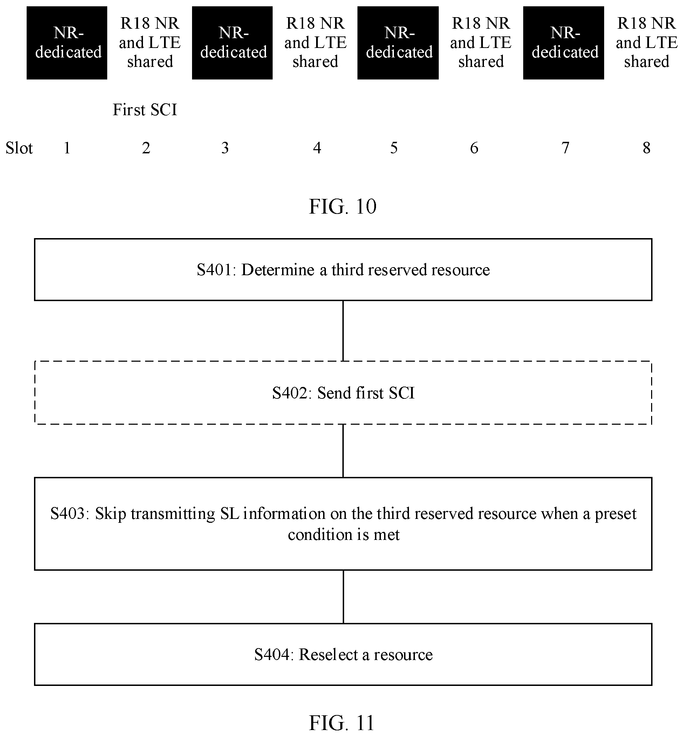

The following describes a third technical problem addressed in this application. For example, a first communication system is an LTE sidelink communication system, a second communication system is an NR sidelink communication system, a first-release protocol is the R18, and a second-release protocol is the R16. It is assumed that a first terminal apparatus is a terminal apparatus supporting the R18 and a second terminal apparatus is a terminal apparatus supporting the R16. As shown in FIG. 10, the first terminal apparatus sends first SCI to the second terminal apparatus in a slot 2 by using a first resource (a resource shared by R18 NR SL and LTE SL). Because a receiving resource pool for the second terminal apparatus does not include the first resource, the second terminal apparatus cannot receive the first SCI. Consequently, the second terminal apparatus cannot exclude a reserved resource for the first terminal apparatus that is indicated by the first SCI, and a reserved resource for the second terminal apparatus may overlap the reserved resource for the first terminal apparatus.

In view of this problem, in a first solution, the first terminal apparatus determines, from a second resource, a resource for initially transmitting the first SCI to the second terminal apparatus, and the first terminal apparatus determines, from the first resource and the second resource, a resource for retransmitting the first SCI to the second terminal apparatus.

Specifically, a physical layer of the first terminal apparatus may generate a first candidate resource set (denoted as SA#1) and a second candidate resource set (denoted as SA#2). The SA#1 is a resource set including a slot of the second resource within a resource selection window of the first terminal apparatus. The SA#2 is a resource set including a slot of the first resource and a slot of the second resource within the resource selection window of the first terminal apparatus, or the SA#2 is a resource set including a slot of the first resource within the resource selection window of the first terminal apparatus.

Optionally, the first terminal apparatus may receive SCI sent by another terminal apparatus, and exclude a reserved resource for the another terminal apparatus from the SA#1 and the SA#2.

Optionally, a resource allocation ratio of the SA#1 is m, and a resource allocation ratio of the SA#1 is n. For example, values of m and n may be any values among (5%, 10%, 15%, 20%, 35%, 50%). If a quantity of candidate resources in the SA#1 is less than $m \times$ W (W represents a total quantity of resources), an RSRP threshold for resource exclusion may be increased (for example, increased by 3 dB), and a resource exclusion process is performed again. If a quantity of candidate resources in the SA#2 is less than $n \times$ W, an RSRP threshold for resource exclusion may be increased, and a resource exclusion process is performed again.

The physical layer of the first terminal apparatus reports the SA#1 and the SA#1 to a media access control (media access control, MAC) layer. The MAC layer of the first terminal apparatus determines, from the SA#1, a resource for initially transmitting the first SCI to the second terminal apparatus. The MAC layer of the first terminal apparatus determines, from the SA#1 and/or the SA#2, a resource for retransmitting the first SCI to the second terminal apparatus.

According to this embodiment of this application, the resource for initially transmitting the first SCI to the second terminal apparatus is determined from the second resource, and the resource for retransmitting the first SCI to the second terminal apparatus is determined from the first resource and the second resource, so that an R16 terminal apparatus can receive the first SCI. This reduces a probability of overlapping between reserved resources for terminals.

In view of this problem, in a second solution, this application provides a method 400. As shown in FIG. 11, the method 400 includes the following steps.

S401: Determine a third reserved resource.

The action of determining the third reserved resource may be performed by the first terminal apparatus.

The third reserved resource is a candidate resource used for sidelink transmission of the first terminal apparatus.

Optionally, the method 400 further includes S402: Send the first SCI.

The action of sending the first SCI may be performed by the first terminal apparatus. The first SCI indicates the third reserved resource for the first terminal apparatus.

It should be understood that, if the method 400 does not include S402, a resource determined in S401 cannot be referred to as a "reserved resource". This is because the first terminal apparatus does not reserve, by sending the first SCI, the resource determined in S401. In this case, the resource determined in S401 may be referred to as a "third resource". For ease of description, the resource determined in S401 is collectively referred to as a "third reserved resource" below.

S403: Skip transmitting SL information on the third reserved resource when a preset condition is met.

The action of skipping transmitting SL information on the third reserved resource when the preset condition is met may be performed by the first terminal apparatus.

The preset condition is described below.

First implementation:

The method 400 includes S402. The preset condition is as follows: The first SCI is sent by the first terminal apparatus on a first resource, and the third reserved resource overlaps a fourth reserved resource. The fourth reserved resource is a reserved resource for a third terminal apparatus. For example, the third terminal apparatus is a terminal apparatus supporting the second-release protocol. Optionally, the fourth reserved resource is indicated by SCI of the third terminal apparatus.

Specifically, the first terminal apparatus may perform a preemption check process to determine whether the third reserved resource overlaps a reserved resource (for example, the fourth reserved resource) for another terminal apparatus. If the first terminal apparatus determines that the third reserved resource is preempted, the first terminal apparatus reselects the third reserved resource. Details about this are not described below again.

It should be understood that the overlapping in this application may be "partial overlapping" or "full overlapping".

Second implementation:

The method 400 may include S402, or may not include S402. The preset condition is as follows: The third reserved resource is determined by the first terminal apparatus from a resource set including a first resource and a second resource, and the third reserved resource overlaps a fourth reserved resource. Optionally, the fourth reserved resource is indicated by SCI of a third terminal apparatus.

If the method 400 does not include S402, the first terminal apparatus may perform a reevaluation process to determine whether the third reserved resource overlaps a reserved resource (for example, the fourth reserved resource) for another terminal apparatus. The first terminal apparatus reevaluates the third reserved resource, and the first terminal apparatus reselects the third reserved resource.

Third implementation:

The method 400 may include S402, or may not include S402. The preset condition is as follows: The third reserved resource is determined by the first terminal apparatus from a first resource, and the third reserved resource overlaps a fourth reserved resource. Optionally, the fourth reserved resource is indicated by SCI of a third terminal apparatus.

If the method 400 does not include S402, the first terminal apparatus may perform a reevaluation process to determine whether the third reserved resource overlaps a reserved resource (for example, the fourth reserved resource) for another terminal apparatus. The first terminal apparatus reevaluates the third reserved resource, and the first terminal apparatus reselects the third reserved resource.

In the second implementation and the third implementation, because the first terminal apparatus is a terminal apparatus supporting the first-release protocol (for example, the R18), when the third reserved resource overlaps the fourth reserved resource, the first terminal apparatus does not transmit SL information on the third reserved resource. In this case, the first terminal apparatus may not consider a priority of transmission. For example, even if a priority value indicated by the first SCI is less than a priority value indicated by the SCI sent by the third terminal apparatus (in other words, even if a priority of SL information transmission of the first terminal apparatus is higher than a priority of SL information transmission of the third terminal apparatus), the first terminal apparatus still does not transmit SL information on the third reserved resource.

It should be understood that the third terminal apparatus may preempt the third reserved resource if the first terminal apparatus does not transmit SL information on the third reserved resource.

S404: Reselect a resource.

The action of reselecting the resource may be performed by the first terminal apparatus. Further, the first terminal apparatus may transmit SL information on the reselected resource.

According to this embodiment of this application, if the first terminal apparatus detects overlapping (collision) between reserved resources, when a preset condition is met (for example, it is determined that the third reserved resource is preempted), the first terminal apparatus does not transmit SL information on a corresponding resource, so that another terminal apparatus can normally transmit SL information.

The following describes a fourth technical problem addressed in this application. For example, a first communication system is LTE-V, a second communication system is NR-V, a first-release protocol is the R18, and a second-release protocol is the R16. A first resource is an R18 NR and LTE shared resource. Therefore, when sidelink information is transmitted by using the first resource, a resource selected by an R18 NR terminal apparatus from the first resource may be a reserved resource for an LTE terminal apparatus.

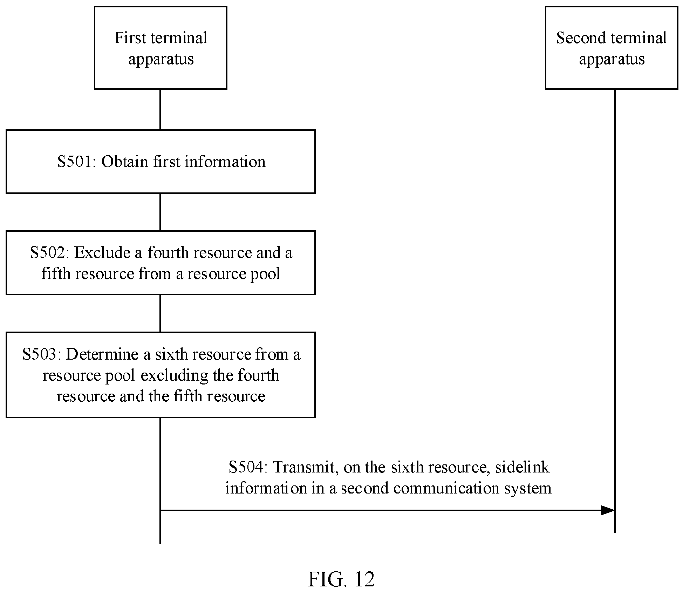

In view of this problem, this application provides a method 500. For example, the first communication system is an LTE sidelink communication system, and the second communication system is an NR sidelink communication system. As shown in FIG. 12, the method 500 includes the following steps.

S501: A first terminal apparatus obtains first information, where the first information indicates a fourth resource.

The fourth resource is a reserved resource used for a terminal apparatus in the first communication system (for example, the LTE-V) to transmit sidelink information. The first terminal apparatus is an R18 NR-V terminal apparatus.

A process of obtaining the first information by the first terminal apparatus is described below.

For example, the first terminal apparatus includes a first communication system module and a second communication system module. The first communication system module may sense a reserved resource for another terminal apparatus in the first communication system and/or a resource to be used by the first communication system module of the first terminal apparatus. Further, the first communication system module may send the first information to the second communication system module.

Optionally, the fourth resource is a reserved resource for another terminal apparatus in the first communication system and/or a resource to be used by the first communication system module of the first terminal apparatus.

Optionally, the first information indicates at least any one of the fourth resource, a resource used by a terminal apparatus in the first communication system, a candidate resource set determined by the terminal apparatus in the first communication system, a resource selection window of the first terminal apparatus in the first communication system, a resource sensing window of the first terminal apparatus in the first communication system, sidelink control information carried in the fourth resource, an RSRP measurement value of the fourth resource, an RSSI measurement value of the fourth resource, a quantity L of subchannels of a candidate resource, a quantity $L_{SC}$ of subchannels of a resource pool, a maximum quantity LL of candidate resources in a subframe, a slot not reserved for the terminal apparatus in the first communication system, and a slot reserved for the terminal apparatus in the first communication system. Optionally, the sidelink control information carried in the fourth resource includes at least any one of a priority, a reservation period, frequency domain locations for initial transmission and retransmission, a time gap between initial transmission and retransmission, and a reselection index. Optionally, the candidate resource set determined by the first communication system may be a candidate resource set SA generated in step 7 during LTE-V resource selection, or may be a candidate resource set SB generated in step 9 during LTE-V resource selection. The SB is a subset of the SA.

In a possible implementation, the first information indicates a resource a used by the terminal apparatus in the first communication system within the resource sensing window. The first terminal apparatus determines, based on at least any one of the reservation period, the frequency domain locations for initial transmission and retransmission, the time gap between initial transmission and retransmission, and the reselection index, the fourth resource corresponding to the resource a within the selection window.

In a possible implementation, the first information indicates the fourth resource to be used by the terminal apparatus in the first communication system within the resource selection window. The fourth resource is a reserved resource used for a terminal apparatus in the first communication system to transmit sidelink information and/or a resource to be used by the first terminal apparatus in the first communication system.

In a possible implementation, the first information indicates a candidate resource set determined by the first communication system module of the first terminal apparatus. Optionally, the candidate resource set does not include the fourth resource. For example, the candidate resource set is a candidate resource that does not overlap the fourth resource within the resource selection window. The first terminal apparatus determines the fourth resource based on the candidate resource set and the resource selection window, or the first terminal apparatus determines the fourth resource based on the candidate resource set and a quantity of candidate resources in a subframe in the candidate resource set.

S502: The first terminal apparatus excludes the fourth resource and a fifth resource.

The excluding the fourth resource and the fifth resource may be further understood as that the first terminal apparatus selects a resource from a resource that does not include the fourth resource or the fifth resource, or the first terminal apparatus may select a resource that does not belong to the fourth resource or the fifth resource.

To be specific, the first terminal apparatus selects a resource from at least a resource that does not include the fourth resource or the fifth resource, or a resource selected by the first terminal apparatus includes at least a resource that does not belong to the fourth resource or the fifth resource.

In this embodiment of this application, although the first terminal apparatus selects a resource from a resource that does not include the fourth resource or the fifth resource, the first terminal apparatus may further select other resources. For example, both a resource that does not include the fourth resource or the fifth resource and some resources including the fifth resource are selected.

For example, a subframe #0 in the LTE-V includes a resource reserved for the LTE-V, and the subframe 0 in the LTE-V corresponds to two NR-V slots (denoted as a slot #0 and a slot #1). To implement continuous transmission, in a manner, the first terminal apparatus may alternatively select a resource in the slot #0 and the slot #1.

In a manner, the first terminal apparatus may exclude the fourth resource and the fifth resource from a resource pool. The resource pool may be the first resource pool and the second resource pool in the method 200, or may be the third resource pool in the method 200.

First aspect:

The fourth resource includes the fifth resource in time domain. In other words, the fifth resource is a part or all of the fourth resource in time domain.

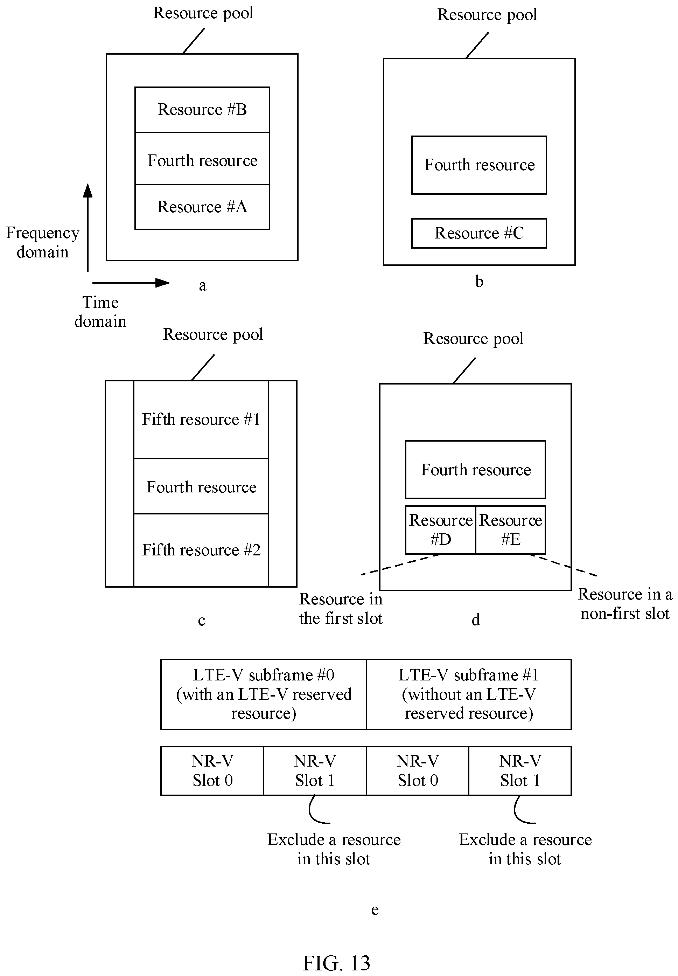

The fifth resource is described below with reference to FIG. 13.

Case 1:

The fifth resource includes a resource that is the same as the fourth resource in time domain.

In a manner, the fifth resource includes a resource that is the same as the fourth resource in time domain, that is adjacent to the fourth resource in frequency domain, and whose subchannel quantity is a first value (denoted as $L_N$).

For example, as shown in a in FIG. 13, the fifth resource may include a resource #A and a resource #B. The resource #A and the resource #B are the same as the fourth resource in time domain, and are adjacent to the fourth resource in frequency domain. Optionally, the resource #A and the resource #B are resources in a resource pool. It should be understood that, if the first terminal apparatus transmits SL information on the resource #A and the resource #B and the terminal apparatus in the first communication system transmits SL information on the fourth resource, mutual interference occurs. The first terminal apparatus excludes the resource #A and the resource #B to avoid the interference and improve communication quality.

It is assumed that a subframe of the fourth resource is a subframe #a, a start subchannel index is sch, and a quantity of subchannels is L. In this case, a subframe of the resource #A is a subframe #a, a start subchannel index is sch-$L_N$, and a quantity of subchannels is $L_N$; and a subframe of the resource #B is a subframe #a, a start subchannel index is sch+L, and a quantity of subchannels is $L_N$.

A resource pool for the second communication system includes a total of $L_{SC}$ subchannels. In this case, a start subchannel index of the resource #A is max(sch-$L_N$, 0). An end subchannel index of the resource #B is min(sch+L+$L_N$-1, $L_{SC}$); or when sch+L+$L_N$ is greater than $L_{SC}$, a quantity of subchannels of the resource #B meets $L_N=L_{SC}$-(sch+L).

Optionally, $L_N$ is an integer, and a value of $L_N$ is any one of {0, 1, 2, 3, 4, 5}. Optionally, $L_N$ is a value in an $L_N$ list. For example, the $L_N$ list includes at least any one value among {0, 1, 2, 3, 4, 5}.

Optionally, $L_N$ is configured by a network device for the first terminal apparatus and/or a second terminal apparatus, or $L_N$ is preconfigured for the first terminal apparatus and/or the second terminal apparatus.

In another manner, the fifth resource includes a resource that is the same as the fourth resource in time domain but is not adjacent to the fourth resource in frequency domain.

For example, as shown in b in FIG. 13, the fifth resource may include a resource #C. The resource #C is the same as the fourth resource in time domain.

In another manner, the fifth resource may be all resources that are the same as the fourth resource in time domain. To be specific, the fifth resource may be resources in all subchannels that are the same as the fourth resource in time domain.

Optionally, a value of $L_N$ may be all, indicating that resources in all subchannels that are the same as the fourth resource in time domain are excluded.

For example, an SCS in the NR-V is 15 kHz, and a subframe to which the fourth resource belongs corresponds to one slot (a slot #0). The fifth resource is resources in all subchannels in the slot #0.

For example, an SCS in the NR-V is 30 kHz, and a subframe to which the fourth resource belongs corresponds to two slots (a slot #0 and a slot #1). The fifth resource includes resources in all subchannels in the slot #0 and the slot #1.

For another example, an SCS in the NR-V is 60 kHz, and a subframe to which the fourth resource belongs corresponds to four slots (a slot #0, a slot #1, a slot #2, and a slot #3). The fifth resource includes resources in all subchannels in the slot #0, the slot #1, the slot #2, and the slot #3.

In another manner, as shown in c in FIG. 13, the fifth resource may be resources, not including the fourth resource, in all subchannels that are the same as the fourth resource in time domain. The fifth resource includes a fifth resource #1 and a fifth resource #2.

Optionally, a value of $L_N$ may be all, indicating that resources, not overlapping the fourth resource, in all subchannels that are the same as the fourth resource in time domain are excluded.

For example, an SCS in the NR-V is 15 kHz, and a subframe to which the fourth resource belongs corresponds to one slot (a slot #0). The fifth resource is resources, not overlapping the fourth resource, in all subchannels in the slot #0.

For example, an SCS in the NR-V is 30 kHz, and a subframe to which the fourth resource belongs corresponds to two slots (a slot #0 and a slot #1). The fifth resource includes resources, not overlapping the fourth resource, in all subchannels in the slot #0 and the slot #1.

For another example, an SCS in the NR-V is 60 kHz, and a subframe to which the fourth resource belongs corresponds to four slots (a slot #0, a slot #1, a slot #2, and a slot #3). The fifth resource includes resources, not overlapping the fourth resource, in all subchannels in the slot #0, the slot #1, the slot #2, and the slot #3.

It should be understood that, if the first terminal apparatus excludes all resources that are the same as the fourth resource in time domain, the first terminal apparatus can be prevented from receiving, in one subframe, both SL information in the first communication system and SL information in the second communication system, to reduce hardware overheads of the first terminal device.

Case 2:

A subframe to which the fourth resource belongs corresponds to at least one slot, and the fifth resource includes a resource in a non-first slot of the at least one slot. Optionally, the fifth resource includes a resource that does not overlap the fourth resource in a non-first slot of the at least one slot.

For example, an SCS in the NR-V is 15 kHz, and a subframe to which the fourth resource belongs corresponds to one slot (a slot #0). In the case 2, the fifth resource is a null set.

For example, an SCS in the NR-V is 30 kHz, and a subframe to which the fourth resource belongs corresponds to two slots (a slot #0 and a slot #1). The fifth resource includes a resource in the slot #1 of the two slots.

For another example, an SCS in the NR-V is 60 kHz, and a subframe to which the fourth resource belongs corresponds to four slots (a slot #0, a slot #1, a slot #2, and a slot #3). The fifth resource includes resources in the slot #1, the slot #2, and the slot #3 among the four slots.

For example, as shown in d in FIG. 13, the fifth resource includes a resource #E. In other words, the first terminal apparatus excludes the resource #E, but does not exclude a resource #D, and the first terminal apparatus retains a resource in the first slot of the at least one slot corresponding to the subframe to which the fourth resource belongs.

In addition, in the method 500, that "a subframe to which the fourth resource belongs corresponds to at least one slot" may be understood as that "an LTE subframe to which the fourth resource belongs corresponds to at least one NR slot". Details about this are not described below again.

It should be understood that the case 1 and the case 2 are not independent of each other, and may be combined with each other. For example, the fifth resource may include the resource #B and the resource #C, or the fifth resource may include the resource #B and the resource #E.

Second aspect:

The fifth resource includes a resource in a non-first slot of at least one NR-V slot corresponding to an LTE-V subframe. Optionally, the fifth resource includes a resource that does not overlap the fourth resource in a non-first slot of the at least one slot.

For example, an SCS in the NR-V is 15 kHz, and one LTE-V subframe corresponds to one slot (a slot #0). The fifth resource is a null set.

For example, an SCS in the NR-V is 30 kHz, and one LTE-V subframe corresponds to two slots (a slot #0 and a slot #1). The fifth resource includes a resource in the slot #1 of the two slots.

For another example, an SCS in the NR-V is 60 kHz, and one LTE-V subframe corresponds to four slots (a slot #0, a slot #1, a slot #2, and a slot #3). The fifth resource includes resources in the slot #1, the slot #2, and the slot #3 among the four slots.

In other words, regardless of whether an LTE-V subframe includes a fourth resource reserved for the LTE-V, the first terminal apparatus excludes a resource in a non-first slot corresponding to the LTE-V subframe.

For example, one LTE-V subframe corresponds to two NR slots. As shown in e in FIG. 13, an LTE-V subframe #0 includes a resource reserved for the LTE-V, and the first terminal device excludes a resource in a non-first slot (a slot 1) of at least one slot corresponding to the LTE-V subframe #0. An LTE-V subframe #1 does not include a resource reserved for the LTE-V, and the first terminal device also excludes a resource in a non-first slot (a slot 1) of at least one slot corresponding to the LTE-V subframe #1.

In addition, in the method 500, that "a subframe corresponds to at least one slot" may be understood as that "an LTE-V subframe corresponds to at least one NR-V slot". Details about this are not described below again.

S503: The first terminal apparatus determines a sixth resource from a resource excluding the fourth resource and the fifth resource.

The determining a sixth resource from a resource excluding the fourth resource and the fifth resource may be further understood as selecting, from a resource excluding the fourth resource, a resource in the first slot of the at least one slot, in the second communication system, that corresponds to a subframe in the first communication system. The fifth resource is a resource in a non-first slot of the at least one slot, in the second communication system, that corresponds to the subframe in the first communication system.

The sixth resource is a resource used for transmitting sidelink information in the second communication system.

Several possible manners of determining the sixth resource by the first terminal apparatus are described below.

Manner 1:

The first terminal apparatus excludes the fourth resource and the fifth resource, where the fifth resource is resources, not including the fourth resource, in all subchannels that are the same as the fourth resource in time domain (refer to c in FIG. 13). The first terminal apparatus determines the sixth resource from a resource that remains after the fourth resource and the fifth resource are excluded.

> (a) The first terminal apparatus determines the sixth resource from an initial candidate resource set. The initial candidate resource set is generated by a physical layer of the first terminal apparatus.

The initial candidate resource set includes a resource that remains in an NR-V resource selection window after the fourth resource and the fifth resource are excluded.

Optionally, the first information indicates the fourth resource. The physical layer of the first terminal apparatus determines the initial candidate resource set based on a subframe to which the fourth resource belongs. Optionally, the fourth resource indicated by the first information in S501 is a resource used for a terminal apparatus in the first communication system to transmit sidelink information and/or a resource to be used by the first terminal apparatus in the first communication system.

The initial candidate resource set includes a candidate resource in a slot that does not overlap the fourth resource in time domain within a resource selection window of the first terminal apparatus.

In other words, the first terminal apparatus excludes all resources in a slot that overlaps the fourth resource in time domain within the resource selection window. In other words, the first terminal apparatus excludes candidate resources in all subchannels in a slot corresponding to the subframe to which the fourth resource belongs within the resource selection window.

Optionally, the first information indicates a candidate resource set SA or a candidate resource set SB for an LTE-V terminal apparatus of the first terminal apparatus. The candidate resource set SA is a candidate resource set generated in step 7 in an LTE-V resource selection process. The candidate resource set SB is a candidate resource set generated in step 9 in the LTE-V resource selection process. The SB is a subset of the SA. Details about this are not described below again.

In a case, in the SA or the SB, for an NR-V slot corresponding to an LTE-V subframe in which a quantity of candidate resources is less than a preset value, candidate resources in all subchannels in the NR-V slot within the NR-V resource selection window are excluded from the initial candidate resource set for the first terminal apparatus. In other words, in the SA or the SB, for an NR-V slot corresponding to an LTE-V subframe in which a quantity of candidate resources is less than a preset value, the initial candidate resource set for the first terminal apparatus includes none of candidate resources in all subchannels in the NR-V slot within the NR-V resource selection window.

A value of the preset value may be "LL". One subframe includes a maximum of LL candidate resources within an LTE-V resource selection window. Alternatively, one subframe includes $L_{SC}$ subchannels within the LTE-V resource selection window. If a quantity of subchannels for resource selection is L, a maximum quantity of candidate resources included in one subframe within the LTE-V resource selection window meets the following condition: $LL=L_{SCL}-L+1$. Details about this are not described below again.

In another case, in the SA or the SB, for an NR-V slot corresponding to an LTE-V subframe in which a quantity of candidate resources is greater than or equal to a preset value, none of candidate resources in all subchannels in the NR-V slot within the NR-V resource selection window are excluded from the initial candidate resource set for the first terminal apparatus. In other words, in the SA or the SB, for an NR-V slot corresponding to an LTE-V subframe in which a quantity of candidate resources is greater than or equal to a preset value, the initial candidate resource set for the first terminal apparatus includes candidate resources in all subchannels in the NR-V slot within the NR-V resource selection window.

It should be understood that, in the SA or the SB, if a quantity of candidate resources in an LTE-V subframe is less than a preset value, the subframe includes the fourth resource; or if a quantity of candidate resources in an LTE-V subframe is greater than or equal to a preset value, the subframe does not include the fourth resource.

Therefore, in the SA or the SB, for a subframe including the fourth resource, candidate resources in all subchannels in an NR slot corresponding to the LTE-V subframe within the NR-V resource selection window are excluded from the initial candidate resource set for the first terminal apparatus. In other words, in the SA or the SB, for a subframe including the fourth resource, the initial candidate resource set for the first terminal apparatus includes none of candidate resources in all subchannels in an NR slot corresponding to the LTE-V subframe within the NR-V resource selection window.

In the SA or the SB, for a subframe not including the fourth resource, none of candidate resources in all subchannels in an NR slot corresponding to the LTE-V subframe within the NR-V resource selection window are excluded from the initial candidate resource set for the first terminal apparatus. In other words, in the SA or the SB, for a subframe not including the fourth resource, the initial candidate resource set for the first terminal apparatus includes candidate resources in all subchannels in an NR slot corresponding to the LTE-V subframe within the NR-V resource selection window.

In another possible implementation, the first information further indicates a subframe #D in which a resource is reserved for the first communication system or a subframe #E in which no resource is reserved for the first communication system.

Optionally, the physical layer of the first terminal apparatus generates the initial candidate resource set based on the candidate resource set SA or SB (the candidate resource set SA or SB is denoted as a candidate resource set #m) and a slot corresponding to the subframe #D in which a resource is reserved for the first communication system. Optionally, the initial candidate resource set includes a candidate resource that is in the candidate resource set #m and that is in a slot not overlapping the subframe #D. Optionally, the initial candidate resource set does not include a candidate resource that is in the candidate resource set #m and that is in each slot corresponding to the subframe #D.

Optionally, the physical layer of the first terminal apparatus generates the initial candidate resource set based on the candidate resource set SA or SB (the candidate resource set SA or SB is denoted as a candidate resource set #m) and a slot corresponding to the subframe #E in which no resource is reserved for the first communication system. Optionally, the initial candidate resource set includes a candidate resource that is in the candidate resource set #m and that is in a slot corresponding to the subframe #E. Optionally, the initial candidate resource set does not include a candidate resource that is in the candidate resource set #m and that is in a slot not overlapping the subframe #E.

(b) The first terminal apparatus determines the sixth resource from a candidate resource set for the second communication system (for example, the NR-V). The candidate resource set is generated by a physical layer of the first terminal apparatus.

Optionally, the first information indicates the fourth resource. Candidate resources in all subchannels in a slot corresponding to an LTE-V subframe to which the fourth resource belongs are excluded from the candidate resource set. In other words, the candidate resource set includes none of candidate resources in all subchannels in a slot corresponding to an LTE-V subframe to which the fourth resource belongs.

Optionally, the first information indicates a candidate resource set SA or a candidate resource set SB for an LTE-V terminal apparatus of the first terminal apparatus. For related descriptions of the SA and the SB, refer to the foregoing descriptions. The candidate resource set SA or SB is denoted as a candidate resource set #m.

In a case, in the SA or the SB, for an NR-V slot corresponding to an LTE-V subframe in which a quantity of candidate resources is less than a preset value, candidate resources in all subchannels in the NR-V slot within an NR-V resource selection window are excluded from the candidate resource set for the first terminal apparatus. In other words, in the SA or the SB, for an NR-V slot corresponding to an LTE-V subframe in which a quantity of candidate resources is less than a preset value, the candidate resource set for the first terminal apparatus includes none of candidate resources in all subchannels in the NR-V slot within the NR-V resource selection window. A value of the preset value may be "LL". Refer to the foregoing related content.

In another case, in the SA or the SB, for an NR-V slot corresponding to an LTE-V subframe in which a quantity of candidate resources is greater than or equal to a preset value, none of candidate resources in all subchannels in the NR-V slot within the NR-V resource selection window are excluded from the candidate resource set for the first terminal apparatus. In other words, in the SA or the SB, for an NR-V slot corresponding to an LTE-V subframe in which a quantity of candidate resources is greater than or equal to a preset value, the candidate resource set for the first terminal apparatus includes candidate resources in all subchannels in the NR-V slot within the NR-V resource selection window. A value of the preset value may be "LL". Refer to the foregoing related content.

To be specific, in the SA or the SB, if a quantity of candidate resources in an LTE-V subframe is less than a preset value, the subframe includes the fourth resource; or if a quantity of candidate resources in an LTE-V subframe is greater than or equal to a preset value, the subframe does not include the fourth resource.

In the SA or the SB, for a subframe including the fourth resource, candidate resources in all subchannels in an NR slot corresponding to the LTE-V subframe within the NR-V resource selection window are excluded from the candidate resource set for the first terminal apparatus. In other words, in the SA or the SB, for a subframe including the fourth resource, the candidate resource set for the first terminal apparatus includes none of candidate resources in all subchannels in an NR slot corresponding to the LTE-V subframe within the NR-V resource selection window.

In the SA or the SB, for a subframe not including the fourth resource, none of candidate resources in all subchannels in an NR slot corresponding to the LTE-V subframe within the NR-V resource selection window are excluded from the candidate resource set for the first terminal apparatus. In other words, in the SA or the SB, for a subframe not including the fourth resource, the candidate resource set for the first terminal apparatus includes candidate resources in all subchannels in an NR slot corresponding to the LTE-V subframe within the NR-V resource selection window.

In another possible implementation, the first information further indicates a subframe #D in which a resource is reserved for the first communication system or a subframe #E in which no resource is reserved for the first communication system.

Optionally, a candidate resource that is in the candidate resource set #m and that is in each slot corresponding to the subframe #D is excluded from the candidate resource set for the first terminal apparatus. Optionally, a candidate resource that is in the candidate resource set #m and that is in a slot not overlapping the subframe #D is not excluded from the candidate resource set for the first terminal apparatus.

Optionally, a candidate resource that is in the candidate resource set #m and that is in a slot not overlapping the subframe #E is excluded from the candidate resource set for the first terminal apparatus. Optionally, a candidate resource that is in the candidate resource set #m and that is in a slot corresponding to the subframe #E is not excluded from the candidate resource set for the first terminal apparatus.

(c) A MAC layer of the first terminal apparatus determines the sixth resource from a candidate resource set for the second communication system (for example, the NR-V).

Optionally, the first information indicates the fourth resource. The MAC layer of the first terminal apparatus determines the sixth resource based on the fourth resource and a candidate resource set #n. Optionally, the candidate resource set #n is reported by a physical layer of the first terminal apparatus in the second communication system.

To be specific, a granted resource selected by the MAC layer of the first terminal apparatus does not include a candidate resource in a slot corresponding to a subframe to which the fourth resource belongs. In other words, the MAC layer of the first terminal apparatus selects a granted resource from a slot corresponding to a subframe that does not include the fourth resource.

Optionally, the first information indicates a candidate resource set SA or a candidate resource set SB for an LTE-V terminal apparatus of the first terminal apparatus. The MAC layer of the first terminal apparatus determines the sixth resource based on a candidate resource set #m and the candidate resource set #n. For related descriptions of the SA and the SB, refer to the foregoing descriptions. The candidate resource set SA or SB is denoted as the candidate resource set #m.

In a case, in the candidate resource set #m, for an NR-V slot corresponding to an LTE-V subframe in which a quantity of candidate resources is less than a preset value, the MAC layer of the first terminal apparatus does not select a granted resource from the candidate resource set #n. A value of the preset value may be "LL". Refer to the foregoing related content.

In another case, in the candidate resource set #m, for an NR-V slot corresponding to an LTE-V subframe in which a quantity of candidate resources is greater than or equal to a preset value, the MAC layer of the first terminal apparatus selects a granted resource from the candidate resource set #n. A value of the preset value may be "LL". Refer to the foregoing related content.

To be specific, in the candidate resource set #m, if a quantity of candidate resources in an LTE-V subframe is less than a preset value, the subframe includes the fourth resource; or if a quantity of candidate resources in an LTE-V subframe is greater than or equal to a preset value, the subframe does not include the fourth resource.

In the SA or the SB, for a subframe including the fourth resource, the MAC layer of the first terminal apparatus does not select a granted resource from the candidate resource set #n; and for a subframe not including the fourth resource, the MAC layer of the first terminal apparatus selects a granted resource from the candidate resource set #n.

In another possible implementation, the first information further indicates a subframe #D in which a resource is reserved for the first communication system or a subframe #E in which no resource is reserved for the first communication system.

Optionally, the MAC layer of the first terminal apparatus selects a granted resource from a slot that is in the candidate resource set #n and that overlaps the subframe #E. Optionally, the MAC layer of the first terminal apparatus does not select, from the candidate resource set #n, a granted resource in a slot that does not overlap the subframe #E.

Optionally, the MAC layer of the first terminal apparatus selects, from the candidate resource set #n, a granted resource in a slot that does not overlap the subframe #D. Optionally, the MAC layer of the first terminal apparatus does not select, from the candidate resource set #n, a granted resource in a slot overlapping the subframe #D.

Manner 2:

The first terminal apparatus excludes the fourth resource and the fifth resource, where the fifth resource includes a resource in a non-first slot of at least one slot corresponding to a subframe to which the fourth resource belongs. The first terminal apparatus determines the sixth resource from a resource that remains after the fourth resource and the fifth resource are excluded.

Case 1: If an LTE subframe includes the fourth resource, the first terminal apparatus may exclude a resource in a non-first slot of at least one slot corresponding to the LTE subframe, and determine the sixth resource from the first slot of the at least one slot corresponding to the LTE subframe.

      (a) The first terminal apparatus determines the sixth resource from an initial candidate resource set.

The initial candidate resource set includes only a candidate resource in the first slot of at least one slot corresponding to a subframe to which the fourth resource belongs.

Optionally, the first information indicates the fourth resource. A physical layer of the first terminal apparatus determines the initial candidate resource set based on the subframe to which the fourth resource belongs. Optionally, the fourth resource indicated by the first information in S501 is a resource used for a terminal apparatus in the first communication system to transmit sidelink information and/or a resource to be used by the first terminal apparatus in the first communication system.

The initial candidate resource set includes a candidate resource in the first slot of the at least one slot corresponding to the subframe to which the fourth resource belongs within a resource selection window of the first terminal apparatus.

In other words, in the case 4, the first terminal apparatus excludes a candidate resource in a non-first slot of the at least one slot corresponding to the subframe to which the fourth resource belongs within the resource selection window. In other words, the first terminal apparatus excludes candidate resources in all subchannels in a non-first slot of the at least one slot corresponding to the subframe to which the fourth resource belongs within the resource selection window.

Optionally, the first information indicates a candidate resource set SA or a candidate resource set SB (the candidate resource set SA or SB is denoted as a candidate resource set #m) for an LTE-V terminal apparatus of the first terminal apparatus. For descriptions of the SA and the SB, refer to the foregoing descriptions. Details are not described again.

In a case, in the candidate resource set for the LTE-V terminal apparatus, for an NR-V slot corresponding to an LTE-V subframe in which a quantity of candidate resources is less than a preset value, the first terminal apparatus generates the initial candidate set. In other words, in the candidate resource set for the LTE-V terminal apparatus, for an LTE-V subframe in which a quantity of candidate resources is less than a preset value, the first terminal apparatus generates the initial candidate resource set in an NR-V slot corresponding to the subframe. The initial candidate resource set includes only a candidate resource in the first slot of at least one slot corresponding to the LTE-V subframe.

It should be understood that, in the candidate resource set for the LTE-V terminal apparatus, if a quantity of candidate resources in an LTE-V subframe is less than a preset value, the subframe includes the fourth resource; or if a quantity of candidate resources in an LTE-V subframe is greater than or equal to a preset value, the subframe does not include the fourth resource.

For example, the initial candidate resource set for the first terminal apparatus includes only a candidate resource in a slot k that meets k mod($2^{\mu}$)=0. A slot k corresponding to an LTE-V subframe is a slot that meets k mod($2^{\mu}$)=0, k mod($2^{\mu}$)=1, ..., or k mod($2^{\mu}$)=$2^{\mu}$-1.

For another example, the initial candidate resource set for the first terminal apparatus includes only a candidate resource in a slot k that meets k mod($2^{\mu}$)=X mod($2^{\mu}$). A start location of an LTE-V subframe 0 is the same as a start location of an NR-V slot X.

(b) The first terminal apparatus determines the sixth resource from a candidate resource set for the second communication system (for example, the NR-V).

Optionally, the first information indicates the fourth resource. A candidate resource in a non-first slot of at least one slot corresponding to a subframe to which the fourth resource belongs is excluded from the NR-V candidate resource set. Optionally, the NR-V candidate resource set includes a candidate resource in the first slot of at least one slot corresponding to an LTE-V subframe.

Optionally, the first information indicates a candidate resource set for an LTE-V terminal apparatus of the first terminal apparatus.

In a case, in the candidate resource set for the LTE-V terminal apparatus, for an LTE-V subframe in which a quantity of candidate resources is less than a preset value, the first terminal apparatus excludes, from the NR-V candidate resource set, a candidate resource in a non-first slot of at least one slot corresponding to the LTE-V subframe. A value of the preset value may be "LL". Refer to the foregoing related content.

It should be understood that, in the candidate resource set for the LTE-V terminal apparatus, if a quantity of candidate resources in an LTE-V subframe is less than a preset value, the subframe includes the fourth resource; or if a quantity of candidate resources in an LTE-V subframe is greater than or equal to a preset value, the subframe does not include the fourth resource. A value of the preset value may be "LL". Refer to the foregoing related content.

For example, the first terminal apparatus selects a candidate resource from a slot k that meets k mod($2^\mu$)=0; or the first terminal apparatus excludes a candidate resource in a slot k that does not meet k mod($2^\mu$)=0; or the first terminal apparatus excludes a candidate resource in a slot k that meets k mod($2^\mu$)=1, k mod($2^\mu$)=2, ..., or k mod($2^\mu$)=$2^\mu$-1. A slot k corresponding to an LTE-V subframe is a slot that meets k mod($2^\mu$)=0, k mod($2^\mu$)=1, k mod($2^\mu$)=2, ..., or k mod($2^\mu$)=$2^\mu$-1.

For another example, the first terminal apparatus selects a candidate resource from a slot k that meets k mod($2^\mu$) =X mod($2^\mu$), or the first terminal apparatus excludes a candidate resource in a slot k that does not meet k mod($2^\mu$)=X mod($2^\mu$). A start location of an LTE-V subframe 0 is the same as a start location of an NR-V slot X.

(c) A MAC layer of the first terminal apparatus determines the sixth resource from a candidate resource set for the second communication system (for example, the NR-V). The sixth resource is a candidate resource in the first slot of at least one slot corresponding to a subframe to which the fourth resource belongs.

To be specific, a granted resource selected by the MAC layer of the first terminal apparatus is a candidate resource in the first slot of the at least one slot corresponding to the subframe to which the fourth resource belongs.

Optionally, the first information indicates a candidate resource set for an LTE-V terminal apparatus of the first terminal apparatus.

In a case, in the candidate resource set for the LTE-V terminal apparatus, for an LTE-V subframe in which a quantity of candidate resources is less than a preset value, the first terminal apparatus does not select, from the NR-V candidate resource set, a candidate resource in a non-first slot of at least one slot corresponding to the LTE-V subframe. In other words, in the candidate resource set for the LTE-V terminal apparatus, for an LTE-V subframe in which a quantity of candidate resources is less than a preset value, the first terminal apparatus selects, from the NR-V candidate resource set, only a granted resource in the first slot corresponding to the LTE-V subframe.

It should be understood that, in the candidate resource set for the LTE-V terminal apparatus, if a quantity of candidate resources in an LTE-V subframe is less than a preset value, the subframe includes the fourth resource; or if a quantity of candidate resources in an LTE-V subframe is greater than or equal to a preset value, the subframe does not include the fourth resource.

For example, the first terminal apparatus selects a candidate resource from a slot k that meets k mod($2^\mu$)=0; or the first terminal apparatus excludes a candidate resource in a slot k that does not meet k mod($2^\mu$)=0; or the first terminal apparatus excludes a candidate resource in a slot k that meets k mod($2^\mu$)=1, k mod($2^\mu$)=2, ..., or k mod($2^\mu$)=$2^\mu$-1. A slot k corresponding to an LTE-V subframe is a slot that meets k mod($2^\mu$)=0, k mod($2^\mu$)=1, k mod($2^\mu$)=2, ..., or k mod($2^\mu$)=$2^\mu$-1.

For another example, the first terminal apparatus selects a candidate resource from a slot k that meets k mod($2^\mu$) =X mod($2^\mu$), or the first terminal apparatus excludes a candidate resource in a slot k that does not meet k mod($2^\mu$)=X mod($2^\mu$). A start location of an LTE-V subframe 0 is the same as a start location of an NR-V slot X.

Case 2: If an LTE subframe does not include the fourth resource, the first terminal apparatus may determine the sixth resource from any slot corresponding to the LTE subframe.

(a) The first terminal apparatus determines the sixth resource from an initial candidate resource set.

Optionally, the first information indicates the fourth resource. A physical layer of the first terminal apparatus determines the initial candidate resource set based on a subframe to which the fourth resource belongs. Optionally, the fourth resource indicated by the first information in S501 is a resource used for a terminal apparatus in the first communication system to transmit sidelink information and/or a resource to be used by the first terminal apparatus in the first communication system.

The initial candidate resource set includes a first initial candidate resource set and a second initial candidate resource set. The first initial candidate resource set includes a resource in the first slot of the at least one slot corresponding to the subframe to which the fourth resource belongs within a resource selection window of the first terminal apparatus. The second initial candidate resource set includes a resource in a slot that does not overlap the fourth resource in time domain within the resource selection window of the first terminal apparatus.

To be specific, for a slot that overlaps the fourth resource in time domain within an NR-V resource selection window, the first terminal apparatus generates the first initial candidate resource set. The first initial candidate resource set includes a candidate resource in the first slot of slots corresponding to an LTE-V subframe to which the fourth resource belongs. For a slot that does not overlap the fourth resource in time domain within the NR-V resource selection window, the first terminal apparatus generates the second initial candidate resource set. The second initial candidate resource set includes candidate resources in all slots corresponding to an LTE-V subframe, or the second initial candidate resource set includes candidate resources in all slots corresponding to an LTE-V subframe within the NR-V resource selection window.

Optionally, the first information indicates a candidate resource set SA or a candidate resource set SB (the candidate resource set SA or SB is denoted as a candidate resource set #m) for an LTE-V terminal apparatus of the first terminal apparatus. For related descriptions of the SA and the SB, refer to the foregoing descriptions.

In a case, in the candidate resource set #m for the LTE-V terminal apparatus, for an NR-V slot corresponding to an LTE-V subframe in which a quantity of candidate resources is less than a preset value, the first terminal apparatus generates the first initial candidate set. In other words, in the candidate resource set for the LTE-V terminal apparatus, for an LTE-V subframe in which a quantity of candidate resources is less than a preset value, the first terminal apparatus generates the first initial candidate resource set in an NR-V slot corresponding to the subframe. The first initial candidate resource set includes only a candidate resource in the first slot of at least one slot corresponding to the LTE-V subframe. A value of the preset value may be "LL". Refer to the foregoing related content.

In another case, in the candidate resource set for the LTE-V terminal apparatus, for an NR-V slot corresponding to an LTE-V subframe in which a quantity of candidate resources is greater than or equal to a preset value, the first terminal apparatus generates the second initial candidate set. The second initial candidate resource set includes candidate resources in all slots corresponding to the LTE-V subframe. A value of the preset value may be "LL". Refer to the foregoing related content.

It should be understood that, in the candidate resource set for the LTE-V terminal apparatus, if a quantity of candidate resources in an LTE-V subframe is less than a preset value, the subframe includes the fourth resource; or if a quantity of candidate resources in an LTE-V subframe is greater than or equal to a preset value, the subframe does not include the fourth resource.

For a slot that overlaps the fourth resource in time domain within the NR-V resource selection window, or an NR-V slot corresponding to a subframe, in which a quantity of candidate resources is less than a preset value, in a candidate resource set indicated by the LTE-V terminal apparatus within the NR-V resource selection window, the first initial candidate resource set for the first terminal apparatus includes only a candidate resource in a slot k that meets k mod($2^\mu$) =0. A slot k corresponding to an LTE-V subframe is a slot that meets k mod($2^\mu$)=0, k mod($2^\mu$)=1, ..., or k mod($2^\mu$)=$2^\mu$-1. Alternatively, the first initial candidate resource set for the first terminal apparatus includes only a candidate resource in a slot k that meets k mod($2^\mu$)=X mod($2^\mu$). A start location of an LTE-V subframe 0 is the same as a start location of an NR-V slot X.

For a slot that does not overlap the fourth resource in time domain within the NR-V resource selection window, or an NR-V slot corresponding to a subframe, in which a quantity of candidate resources is greater than or equal to a preset value, in a candidate resource set indicated by the LTE-V terminal apparatus within the NR-V resource selection window, the second initial candidate resource set includes candidate resources in all slots corresponding to the LTE-V subframe.

In another possible implementation, the first information further indicates a subframe #D in which a resource is reserved for the first communication system or a subframe #E in which no resource is reserved for the first communication system.

Optionally, the physical layer of the first terminal apparatus generates the initial candidate resource set based on the candidate resource set #m and a slot corresponding to the subframe #D in which a resource is reserved for the first communication system. Optionally, the first initial candidate resource set includes a candidate resource that is in the candidate resource set #m and that is in the first slot of at least one slot corresponding to the subframe #D. Optionally, the second initial candidate resource set includes a candidate resource that is in the candidate resource set #m and that is in a slot not overlapping the subframe #D.

Optionally, the physical layer of the first terminal apparatus generates the initial candidate resource set based on the candidate resource set #m and a slot corresponding to the subframe #E in which no resource is reserved for the first communication system. Optionally, if a subframe #A in the candidate resource set #m does not belong to the subframe #E, the first initial candidate resource set includes a candidate resource in the first slot of at least one slot corresponding to the subframe #A. Optionally, the second initial candidate resource set includes a candidate resource that is in the candidate resource set #m and that is in a slot overlapping the subframe #E.

(b) The first terminal apparatus determines the sixth resource from a candidate resource set.

Optionally, the first information indicates the fourth resource. For a slot that overlaps the fourth resource in time domain within an NR-V resource selection window, a candidate resource in a non-first slot of at least one slot corresponding to an LTE-V subframe to which the fourth resource belongs is excluded from the candidate resource set for the first terminal apparatus. Optionally, for a slot that does not overlap the fourth resource in time domain within the NR-V resource selection window, a candidate resource in a slot corresponding to the LTE-V subframe is not excluded from the candidate resource set for the first terminal apparatus.

Optionally, the first information indicates a candidate resource set for an LTE-V terminal apparatus of the first terminal apparatus.

In a case, in the candidate resource set for the LTE-V terminal apparatus, for an LTE-V subframe in which a quantity of candidate resources is less than a preset value, the first terminal apparatus excludes, from the NR-V candidate resource set, a candidate resource in a non-first slot of at least one slot corresponding to the LTE-V subframe. A value of the preset value may be "LL". Refer to the foregoing related content.

In another case, in the candidate resource set for the LTE-V terminal apparatus, for an LTE-V subframe in which a quantity of candidate resources is greater than or equal to a preset value, the first terminal apparatus does not exclude, from the NR-V candidate resource set, a candidate resource in a slot corresponding to the LTE-V subframe. A value of the preset value may be "LL". Refer to the foregoing related content.

The excluding, from the NR-V candidate resource set, a candidate resource in a non-first slot of at least one slot corresponding to the LTE-V subframe may be further understood as that selecting, from the NR-V candidate resource set, a candidate resource in the first slot corresponding to the LTE-V subframe. The not excluding, from the NR-V candidate resource set, a candidate resource in a slot corresponding to the LTE-V subframe may be further understood as selecting, from the NR-V candidate resource set, a candidate resource in any slot corresponding to the LTE-V subframe.

It should be understood that, in the candidate resource set for the LTE-V terminal apparatus, if a quantity of candidate resources in an LTE-V subframe is less than a preset value, the subframe includes the fourth resource; or if a quantity of candidate resources in an LTE-V subframe is greater than or equal to a preset value, the subframe does not include the fourth resource.

For a slot that overlaps the fourth resource in time domain within the NR-V resource selection window, or an NR-V slot corresponding to a subframe, in which a quantity of candidate resources is less than a preset value, in a candidate resource set indicated by the LTE-V terminal apparatus within the NR-V resource selection window:

In an implementation, the candidate resource set for the first terminal apparatus includes a candidate resource in a slot k that meets $k \bmod(2^{\mu})=0$; or a candidate resource in a slot k that meets $k \bmod(2^{\mu})=1$, $k \bmod(2^{\mu})=2$, ..., or $k \bmod(2^{\mu})=2^{\mu}-1$ is excluded from the candidate resource set for the first terminal apparatus; or a candidate resource in a slot k that does not meet $k \bmod(2^{\mu})=0$ is excluded from the candidate resource set for the first terminal apparatus. A slot k corresponding to an LTE-V subframe is a slot that meets $k \bmod(2^{\mu})=0$, $k \bmod(2^{\mu})=1$, ..., or $k \bmod(2^{\mu})=2^{\mu}-1$.

In another implementation, the candidate resource set for the first terminal apparatus includes a candidate resource in a slot k that meets $k \bmod(2^{\mu})=X \bmod(2^{\mu})$, or a candidate resource in a slot k that does not meet $k \bmod(2^{\mu})=X \bmod(2^{\mu})$ is excluded from the candidate resource set for the first terminal apparatus. A start location of an LTE-V subframe 0 is the same as a start location of an NR-V slot X.

For a slot that does not overlap the fourth resource in time domain within the NR-V resource selection window, or a slot corresponding to a subframe, in which a quantity of candidate resources is greater than or equal to a preset value, in a candidate resource set indicated by the LTE-V terminal apparatus, the candidate resource set for the first terminal apparatus includes all candidate resources in the slot, and the first terminal apparatus does not exclude a candidate resource in the slot from the NR-V candidate resource set.

In another possible implementation, the first information further indicates a subframe #D in which a resource is reserved for the first communication system or a subframe #E in which no resource is reserved for the first communication system.

Optionally, a candidate resource that is in the candidate resource set #m and that is in a non-first slot of at least one slot corresponding to the subframe #D is excluded from the candidate resource set for the first terminal apparatus. Optionally, a candidate resource that is in the candidate resource set #m and that is in a slot not overlapping the subframe #D is not excluded from the candidate resource set for the first terminal apparatus.

Optionally, for a subframe, where the subframe does not overlap the subframe #E, a candidate resource in a non-first slot of at least one slot corresponding to the subframe is excluded from the candidate resource set for the first terminal apparatus. Optionally, a candidate resource that is in the candidate resource set #m and that is in a slot corresponding to the subframe #E is not excluded from the candidate resource set for the first terminal apparatus.

(c) A MAC layer of the first terminal apparatus determines the sixth resource from a candidate resource set.

Optionally, the first information indicates the fourth resource. The MAC layer of the first terminal apparatus determines the sixth resource based on the fourth resource and a candidate resource set #n. Optionally, the candidate resource set #n is reported by a physical layer of the first terminal apparatus in the second communication system.

For a slot that overlaps the fourth resource in time domain within an NR-V resource selection window, the first terminal apparatus selects, from the NR-V candidate resource set #n, only a granted resource in the first slot corresponding to an LTE-V subframe to which the fourth resource belongs. Optionally, for a slot that does not overlap the fourth resource in time domain within the NR-V resource selection window, the first terminal apparatus selects, from the NR-V candidate resource set #n, a granted resource in any slot corresponding to the LTE-V subframe.

Optionally, the first information indicates a candidate resource set SA or a candidate resource set SB for an LTE-V terminal apparatus of the first terminal apparatus. The MAC layer of the first terminal apparatus determines the sixth resource based on a candidate resource set #m and the candidate resource set #n. For related descriptions of the SA and the SB, refer to the foregoing descriptions. The candidate resource set SA or SB is denoted as the candidate resource set #m.

In a case, in the candidate resource set #m, for an LTE-V subframe in which a quantity of candidate resources is less than a preset value, the first terminal apparatus selects, from the NR-V candidate resource set, a granted resource in the first slot corresponding to the LTE-V subframe. In other words, in the candidate resource set #m, for an LTE-V subframe in which a quantity of candidate resources is less than a preset value, the first terminal apparatus excludes, from the NR-V candidate resource set #n, a candidate resource in a non-first slot of at least one slot corresponding to the LTE-V subframe. A value of the preset value may be "LL". Refer to the foregoing related content.

In another case, in the candidate resource set #m for the LTE-V terminal apparatus, for an LTE-V subframe in which a quantity of candidate resources is greater than or equal to a preset value, the first terminal apparatus selects, from the NR-V candidate resource set #n, a candidate resource in any slot corresponding to the LTE-V subframe. In other words, in the candidate resource set for the LTE-V terminal apparatus, for an LTE-V subframe in which a quantity of candidate resources is greater than or equal to a preset value, the first terminal apparatus selects, from the NR-V candidate resource set #n, a granted resource in any slot corresponding to the LTE-V subframe. A value of the preset value may be "LL". Refer to the foregoing related content.

It should be understood that, in the candidate resource set for the LTE-V terminal apparatus, if a quantity of candidate resources in an LTE-V subframe is less than a preset value, the subframe includes the fourth resource; or if a quantity of candidate resources in an LTE-V subframe is greater than or equal to a preset value, the subframe does not include the fourth resource.

For a slot that overlaps the fourth resource in time domain within the NR-V resource selection window, or an NR-V slot corresponding to a subframe, in which a quantity of candidate resources is less than a preset value, in a candidate resource set indicated by the LTE-V terminal apparatus within the NR-V resource selection window:

In an implementation, the first terminal apparatus selects a candidate resource from a slot k that meets $k \bmod(2^\mu)=0$; or the first terminal apparatus excludes a candidate resource in a slot k that meets $k \bmod(2^\mu)=1$, $k \bmod(2^\mu)=2$, ..., or $k \bmod(2^\mu)=2^\mu-1$; or the first terminal apparatus excludes a candidate resource in a slot k that does not meet $k \bmod(2^\mu)=0$. A slot k corresponding to an LTE-V subframe is a slot that meets $k \bmod(2^\mu)=0$, $k \bmod(2^\mu)=1$, ..., or $k \bmod(2^\mu)=2^\mu-1$.

In another implementation, the first terminal apparatus selects a candidate resource from a slot k that meets $k \bmod(2^\mu)=X \bmod(2^\mu)$, or the first terminal apparatus excludes a candidate resource in a slot k that does not meet $k \bmod(2^\mu)=X \bmod(2^\mu)$. A start location of an LTE-V subframe 0 is the same as a start location of an NR-V slot X.

For a slot that does not overlap the fourth resource in time domain within the NR-V resource selection window, or an NR-V slot corresponding to a subframe, in which a quantity of candidate resources is greater than or equal to a preset value, in a candidate resource set indicated by the LTE-V terminal apparatus within the NR-V resource selection window, the first terminal apparatus selects a grant resource from any slot. In other words, the first terminal apparatus does not exclude a candidate resource in the slot.

In another possible implementation, the first information further indicates a subframe #D in which a resource is reserved for the first communication system or a subframe #E in which no resource is reserved for the first communication system.

Optionally, the MAC layer of the first terminal apparatus selects, from the candidate resource set #n, a granted resource in the first slot of at least one slot that overlaps the subframe #D. Optionally, the MAC layer of the first terminal apparatus selects, from the candidate resource set #n, a granted resource in any slot that does not overlap the subframe #D.

Optionally, for a subframe, where the subframe does not overlap the subframe #E, the MAC layer of the first terminal apparatus selects a granted resource from the first slot of at least one slot corresponding to the subframe. Optionally, the MAC layer of the first terminal apparatus selects a granted resource from any slot that is in the candidate resource set #n and that overlaps the subframe #E.

Manner 3:

The first terminal apparatus excludes the fourth resource and the fifth resource, where the fifth resource includes a resource in a non-first slot of at least one NR-V slot corresponding to an LTE-V subframe.

The first terminal apparatus determines the sixth resource from a resource that remains after the fourth resource and the fifth resource are excluded.

To be specific, regardless of whether an LTE-V subframe includes the fourth resource, the first terminal apparatus may exclude a resource in a non-first slot of at least one slot corresponding to the LTE-V subframe, and determine the sixth resource from the first slot of the at least one slot corresponding to the LTE-V subframe.

(a) The first terminal apparatus determines the sixth resource from an initial candidate resource set.

The initial candidate resource set includes a candidate resource in the first slot of at least one slot corresponding to an LTE-V subframe.

In other words, the initial candidate resource set includes a candidate resource in the first slot of at least one slot corresponding to an LTE-V subframe within a resource selection window of the first terminal apparatus.

In other words, the first terminal apparatus excludes a candidate resource in a non-first slot of the at least one slot corresponding to the LTE-V subframe within the resource selection window. In other words, the first terminal apparatus excludes candidate resources in all subchannels in a non-first slot of the at least one slot corresponding to the LTE-V subframe within the resource selection window.

Optionally, the first information indicates a candidate resource set SA or a candidate resource set SB (the candidate resource set SA or SB is denoted as a candidate resource set #m) for an LTE-V terminal apparatus of the first terminal apparatus. For descriptions of the SA and the SB, refer to the foregoing descriptions. Details are not described again.

In a case, in the candidate resource set for the LTE-V terminal apparatus, for an LTE-V subframe in which a quantity of candidate resources is less than a preset value or an LTE-V subframe in which a quantity of candidate resources is greater than or equal to a preset value, the first terminal apparatus generates the initial candidate set.

In other words, in the candidate resource set for the LTE-V terminal apparatus, for an LTE-V subframe in which a quantity of candidate resources is less than a preset value or an LTE-V subframe in which a quantity of candidate resources is greater than or equal to a preset value, the first terminal apparatus generates the initial candidate resource set in an NR-V slot corresponding to the subframe. The initial candidate resource set includes only a candidate resource in the first slot of at least one slot corresponding to the LTE-V subframe.

In a possible implementation, the initial candidate resource set for the first terminal apparatus includes a candidate resource in a slot k that meets k mod($2^\mu$)=0. A slot k corresponding to an LTE-V subframe is a slot that meets k mod($2^\mu$)=0, k mod($2^\mu$)=1, ..., or k mod($2^\mu$)=$2^\mu$-1.

In a possible implementation, the initial candidate resource set for the first terminal apparatus includes a candidate resource in a slot k that meets k mod($2^\mu$)=X mod($2^\mu$). A start location of an LTE-V subframe is the same as a start location of an NR-V slot X. Optionally, the LTE-V subframe is an LTE-V subframe 0. X is an integer. For example, X=0.

In a possible implementation, if a start location of a slot 0 in the second communication system is the same as a start location of a subframe in the first communication system, the sixth resource includes a candidate resource in a slot k that meets k mod($2^\mu$)=0, or the sixth resource includes a candidate resource in a slot k that does not meet k mod($2^\mu$)=1.

For example, an SCS in the NR-V is 15 kHz, one LTE-V subframe corresponds to one slot (denoted as a slot #0), and a start location of the slot #0 (namely, a slot 0) in the NR-V is the same as a start location of the LTE-V subframe. In this case, the fifth resource is a null set.

For another example, an SCS in the NR-V is 30 kHz, and one LTE-V subframe corresponds to two slots (denoted as a slot #0 and a slot #1). If a start location of the slot #0 in the NR-V is the same as a start location of the LTE-V subframe, the initial candidate resource set for the first terminal apparatus includes a candidate resource in a slot k that meets k mod($2^\mu$)=0. In other words, the initial candidate resource set for the first terminal apparatus does not include a candidate resource in a slot k that meets k mod($2^\mu$)=1.

For another example, an SCS in the NR-V is 30 kHz. If a start location of a slot whose index in the second communication system is an even number is the same as a start location of a subframe in the first communication system, the sixth resource includes a candidate resource in a slot k that meets k mod($2^\mu$)=0, or the sixth resource includes a candidate resource in a slot k that does not meet k mod($2^\mu$)=1.

For another example, an SCS in the NR-V is 30 kHz. If a start location of a slot whose index in the second communication system is an odd number is different from a start location of a subframe in the first communication system, the sixth resource includes a candidate resource in a slot k that meets k mod($2^\mu$)=0, or the sixth resource includes a candidate resource in a slot k that does not meet k mod($2^\mu$)=1.

In a possible implementation, if a start location of a slot 0 in the second communication system is different from a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

For example, an SCS in the NR-V is 15 kHz, one LTE-V subframe corresponds to one slot (denoted as a slot #0), and a start location of the slot #0 (namely, a slot 0) in the NR-V is the same as a start location of the LTE-V subframe. In this case, the fifth resource is a null set.

For another example, an SCS in the NR-V is 30 kHz, and one LTE-V subframe corresponds to two slots (denoted as a slot #0 and a slot #1). If a start location of the slot #0 in the NR-V is different from a start location of the LTE-V subframe, the initial candidate resource set for the first terminal apparatus includes a candidate resource in a slot k that meets k mod($2^\mu$)=1. In other words, the initial candidate resource set for the first terminal apparatus does not include a candidate resource in a slot k that meets k mod($2^\mu$)=0.

For another example, if a start location of a slot whose index in the second communication system is an odd number is the same as a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

For another example, if a start location of a slot whose index in the second communication system is an even number is different from a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

(b) The first terminal apparatus determines the sixth resource from a candidate resource set for the second communication system (for example, the NR-V).

The first terminal apparatus excludes, from the candidate resource set, a candidate resource in a non-first slot of at least one slot corresponding to an LTE-V subframe. Optionally, the candidate resource set is generated at a physical layer of the first terminal apparatus.

Optionally, the first information indicates a candidate resource set for an LTE-V terminal apparatus of the first terminal apparatus.

In a case, in the candidate resource set for the LTE-V terminal apparatus, for an LTE-V subframe in which a quantity of candidate resources is less than a preset value or an LTE-V subframe in which a quantity of candidate resources is greater than or equal to a preset value, the first terminal apparatus excludes, from the NR-V candidate resource set, a candidate resource in a non-first slot of at least one slot corresponding to the LTE-V subframe.

In other words, in the candidate resource set for the LTE-V terminal apparatus, regardless of whether an LTE-V subframe includes a reserved resource for the LTE-V terminal apparatus, the first terminal apparatus excludes, from the NR-V candidate resource set, a candidate resource in a non-first slot of at least one slot corresponding to the LTE-V subframe.

In a possible implementation, the first terminal apparatus selects a candidate resource from a slot k that meets $k \bmod(2^\mu)=0$; or the first terminal apparatus excludes a candidate resource in a slot k that does not meet $k \bmod(2^\mu)=0$; or the first terminal apparatus excludes a candidate resource in a slot k that meets $k \bmod(2^\mu)=1$, $k \bmod(2^\mu)=2$, ..., or $k \bmod(2^\mu)=2^\mu-1$. A slot k corresponding to an LTE-V subframe is a slot that meets $k \bmod(2^\mu)=0$, $k \bmod(2^\mu)=1$, $k \bmod(2^\mu)=2$, ..., or $k \bmod(2^\mu)=2^\mu-1$.

In a possible implementation, the first terminal apparatus selects a candidate resource from a slot k that meets $k \bmod(2^\mu)=X \bmod(2^\mu)$, or the first terminal apparatus excludes a candidate resource in a slot k that does not meet $k \bmod(2^\mu)=X \bmod(2^\mu)$. A start location of an LTE-V subframe is the same as a start location of an NR-V slot X. Optionally, the LTE-V subframe is an LTE-V subframe 0. X is an integer. For example, X=0.

In a possible implementation, if a start location of a slot 0 in the second communication system is the same as a start location of a subframe in the first communication system, the sixth resource includes a candidate resource in a slot k that meets $k \bmod(2^\mu)=0$, or the sixth resource includes a candidate resource in a slot k that does not meet $k \bmod(2^\mu)=1$.

For example, an SCS in the NR-V is 15 kHz, one LTE-V subframe corresponds to one slot (denoted as a slot #0), and a start location of the slot #0 in the NR-V is the same as a start location of the LTE-V subframe. In this case, the fifth resource is a null set.

For another example, an SCS in the NR-V is 30 kHz, and one LTE-V subframe corresponds to two slots (denoted as a slot #0 and a slot #1). If a start location of the slot #0 in the NR-V is the same as a start location of the LTE-V subframe, the first terminal apparatus selects a candidate resource from a slot k that meets $k \bmod(2^\mu)=0$. In other words, the first terminal apparatus excludes a candidate resource in a slot k that meets $k \bmod(2^\mu)=1$. In other words, the first terminal apparatus excludes a candidate resource in a slot k that does not meet $k \bmod(2^\mu)=0$.

For another example, an SCS in the NR-V is 30 kHz. If a start location of a slot whose index in the second communication system is an even number is the same as a start location of a subframe in the first communication system, the sixth resource includes a candidate resource in a slot k that meets $k \bmod(2^\mu)=0$, or the sixth resource includes a candidate resource in a slot k that does not meet $k \bmod(2^\mu)=1$.

For another example, an SCS in the NR-V is 30 kHz. If a start location of a slot whose index in the second communication system is an odd number is different from a start location of a subframe in the first communication system, the sixth resource includes a candidate resource in a slot k that meets $k \bmod(2^\mu)=0$, or the sixth resource includes a candidate resource in a slot k that does not meet $k \bmod(2^\mu)=1$.

In a possible implementation, if a start location of a slot 0 in the second communication system is different from a start location of a subframe in the first communication system, the sixth resource includes a candidate resource in a slot k that meets $k \bmod(2^\mu)=1$, or the sixth resource includes a candidate resource in a slot k that does not meet $k \bmod(2^\mu)=0$.

For example, an SCS in the NR-V is 15 kHz, one LTE-V subframe corresponds to one slot (denoted as a slot #0), and a start location of the slot #0 (namely, a slot 0) in the NR-V is the same as a start location of the LTE-V subframe. In this case, the fifth resource is a null set.

For another example, an SCS in the NR-V is 30 kHz, and one LTE-V subframe corresponds to two slots (denoted as a slot #0 and a slot #1). If a start location of the slot #0 in the NR-V is different from a start location of the LTE-V subframe, the first terminal apparatus selects a candidate resource from a slot k that meets $k \bmod(2^\mu)=1$. In other words, the first terminal apparatus excludes a candidate resource in a slot k that meets $k \bmod(2^\mu)=0$. In other words, the first terminal apparatus excludes a candidate resource in a slot k that does not meet $k \bmod(2^\mu)=1$.

For another example, if a start location of a slot whose index in the second communication system is an odd number is the same as a start location of a subframe in the first communication system, the sixth resource includes a candidate resource in a slot k that meets $k \bmod(2^\mu)=1$, or the sixth resource includes a candidate resource in a slot k that does not meet $k \bmod(2^\mu)=0$.

For another example, if a start location of a slot whose index in the second communication system is an even number is different from a start location of a subframe in the first communication system, the sixth resource includes a candidate resource in a slot k that meets $k \bmod(2^\mu)=1$, or the sixth resource includes a candidate resource in a slot k that does not meet $k \bmod(2^\mu)=0$.

(c) A MAC layer of the first terminal apparatus determines the sixth resource from a candidate resource set for the second communication system (for example, the NR-V).

A granted resource selected by the MAC layer of the first terminal apparatus is a resource in the first slot of an LTE-V subframe.

Optionally, the first information indicates a candidate resource set for an LTE-V terminal apparatus of the first terminal apparatus.

In a case, in the candidate resource set for the LTE-V terminal apparatus, for an LTE-V subframe in which a quantity of candidate resources is less than a preset value or an LTE-V subframe in which a quantity of candidate resources is greater than or equal to a preset value, the first terminal apparatus does not select, from the NR-V candidate resource set, a candidate resource in a non-first slot of at least one slot corresponding to the LTE-V subframe.

In other words, in the candidate resource set for the LTE-V terminal apparatus, for an LTE-V subframe in which a quantity of candidate resources is less than a preset value or an LTE-V subframe in which a quantity of candidate resources is greater than or equal to a preset value, the first terminal apparatus selects, from the NR-V candidate resource set, only a granted resource in the first slot corresponding to the LTE-V subframe.

In a possible implementation, the sixth resource includes a candidate resource in a slot k that meets $k \bmod(2^\mu)=0$; or the first terminal apparatus excludes a candidate resource in a slot k that does not meet $k \bmod(2^\mu)=0$; or the first terminal apparatus excludes a candidate resource in a slot k that meets $k \bmod(2^\mu)=1$, $k \bmod(2^\mu)=2$, ..., or $k \bmod(2^\mu)=2^\mu-1$. A slot k corresponding to an LTE-V subframe is a slot that meets $k \bmod(2^\mu)=0$, $k \bmod(2^\mu)=1$, $k \bmod(2^\mu)=2$, ..., or $k \bmod(2^\mu)=2^\mu-1$.

In a possible implementation, the sixth resource includes a candidate resource in a slot k that meets $k \bmod(2^\mu)=X \bmod(2^\mu)$, or the first terminal apparatus excludes a candidate resource in a slot k that does not meet $k \bmod(2^\mu)=X \bmod(2^\mu)$. A start location of an LTE-V subframe is the same as a start location of an NR-V slot X. Optionally, the LTE-V subframe is an LTE-V subframe 0. X is an integer. For example, X=0.

In a possible implementation, if a start location of a slot 0 in the second communication system is the same as a start location of a subframe in the first communication system, the sixth resource includes a candidate resource in a slot k that meets $k \bmod(2^\mu)=0$, or the first terminal apparatus selects a candidate resource in a slot k that does not meet $k \bmod(2^\mu)=1$.

For example, an SCS in the NR-V is 15 kHz, one LTE-V subframe corresponds to one slot (denoted as a slot #0), and a start location of the slot #0 in the NR-V is the same as a start location of the LTE-V subframe. In this case, the fifth resource is a null set. To be specific, the first terminal apparatus selects any resource from the candidate resource set.

For another example, an SCS in the NR-V is 30 kHz, and one LTE-V subframe corresponds to two slots (denoted as a slot #0 and a slot #1). If a start location of the slot #0 in the NR-V is the same as a start location of the LTE-V subframe, the sixth resource includes a candidate resource in a slot k that meets $k \bmod(2^\mu)=0$. In other words, the first terminal apparatus excludes a candidate resource in a slot k that meets $k \bmod(2^\mu)=1$. In other words, the first terminal apparatus excludes a candidate resource in a slot k that does not meet $k \bmod(2^\mu)=0$.

For another example, an SCS in the NR-V is 30 kHz. If a start location of a slot whose index in the second communication system is an even number is the same as a start location of a subframe in the first communication system, the sixth resource includes a candidate resource in a slot k that meets $k \bmod(2^\mu)=0$, or the sixth resource includes a candidate resource in a slot k that does not meet $k \bmod(2^\mu)=1$.

For another example, an SCS in the NR-V is 30 kHz. If a start location of a slot whose index in the second communication system is an odd number is different from a start location of a subframe in the first communication system, the sixth resource includes a candidate resource in a slot k that meets $k \bmod(2^\mu)=0$, or the sixth resource includes a candidate resource in a slot k that does not meet $k \bmod(2^\mu)=1$.

In a possible implementation, if a start location of a slot 0 in the second communication system is different from a start location of a subframe in the first communication system, the sixth resource includes a candidate resource in a slot k that meets $k \bmod(2^\mu)=1$, or the sixth resource includes a candidate resource in a slot k that does not meet $k \bmod(2^\mu)=0$.

For example, an SCS in the NR-V is 15 kHz, one LTE-V subframe corresponds to one slot (denoted as a slot #0), and a start location of the slot # 0 (namely, a slot 0) in the NR-V is the same as a start location of the LTE-V subframe. In this case, the fifth resource is a null set. To be specific, the first terminal apparatus selects any resource from the candidate resource set.

For another example, an SCS in the NR-V is 30 kHz, and one LTE-V subframe corresponds to two slots (denoted as a slot #0 and a slot #1). If a start location of the slot #0 in the NR-V is different from a start location of the LTE-V subframe, the sixth resource includes a candidate resource in a slot k that meets $k \bmod(2^\mu)=1$. In other words, the first terminal apparatus excludes a candidate resource in a slot k that meets $k \bmod(2^\mu)=0$. In other words, the first terminal apparatus excludes a candidate resource in a slot k that does not meet $k \bmod(2^\mu)=1$.

For another example, if a start location of a slot whose index in the second communication system is an odd number is the same as a start location of a subframe in the first communication system, the sixth resource includes a candidate resource in a slot k that meets $k \bmod(2^\mu)=1$, or the sixth resource includes a candidate resource in a slot k that does not meet k mod($2^\mu$)=0.

For another example, if a start location of a slot whose index in the second communication system is an even number is different from a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

In the foregoing descriptions, that "the sixth resource includes a resource that meets a specific condition" may be further understood as that "the first terminal selects a resource that meets a specific condition". The two expressions have a same meaning.

Manner 4:

The first terminal apparatus excludes the fourth resource to obtain a candidate resource set.

The first terminal apparatus determines the sixth resource, where the sixth resource includes a resource that is in the candidate resource set and that is in the first slot of at least one slot, in the second communication system, that corresponds to a subframe in the first communication system.

To be specific, regardless of whether an LTE-V subframe includes the fourth resource, the sixth resource selected by the first terminal apparatus includes at least a sixth resource determined from the first slot of at least one slot corresponding to the LTE-V subframe.

It can be understood that the sixth resource may also include a resource that is in the candidate resource set and that is in a non-first slot of the at least one slot, in the second communication system, that corresponds to the subframe in the first communication system. This is not limited in this embodiment of this application.

For example, the first terminal apparatus selects a resource from the first slot of the at least one slot corresponding to the LTE-V subframe. The first terminal apparatus may further transmit sidelink information on a resource that is after the resource and that has a same frequency domain location as the resource. Optionally, a resource that is consecutively after the resource in time domain and that has a same frequency domain location as the resource is selected from the LTE-V subframe. The first terminal apparatus may transmit sidelink information in a maximum of $2^\mu$ consecutive slots, including a resource in the first slot. In other words, the first terminal apparatus may select candidate resources from a maximum of $2^\mu$ consecutive slots, including a resource in the first slot.

(a) The first terminal apparatus determines the sixth resource from an initial candidate resource set.

The initial candidate resource set includes a candidate resource in the first slot of at least one slot corresponding to an LTE-V subframe.

In other words, the initial candidate resource set includes a candidate resource in the first slot of at least one slot corresponding to an LTE-V subframe within a resource selection window of the first terminal apparatus.

In other words, the first terminal apparatus excludes a candidate resource in a non-first slot of the at least one slot corresponding to the LTE-V subframe within the resource selection window. In other words, the first terminal apparatus excludes candidate resources in all subchannels in a non-first slot of the at least one slot corresponding to the LTE-V subframe within the resource selection window.

Optionally, the first information indicates a candidate resource set SA or a candidate resource set SB (the candidate resource set SA or SB is denoted as a candidate resource set #m) for an LTE-V terminal apparatus of the first terminal apparatus. For descriptions of the SA and the SB, refer to the foregoing descriptions. Details are not described again.

In a case, in the candidate resource set for the LTE-V terminal apparatus, for an LTE-V subframe in which a quantity of candidate resources is less than a preset value or an LTE-V subframe in which a quantity of candidate resources is greater than or equal to a preset value, the first terminal apparatus generates the initial candidate set.

In other words, in the candidate resource set for the LTE-V terminal apparatus, for an LTE-V subframe in which a quantity of candidate resources is less than a preset value or an LTE-V subframe in which a quantity of candidate resources is greater than or equal to a preset value, the first terminal apparatus generates the initial candidate resource set in an NR-V slot corresponding to the subframe. The initial candidate resource set includes only a candidate resource in the first slot of at least one slot corresponding to the LTE-V subframe.

In a possible implementation, the initial candidate resource set for the first terminal apparatus includes a candidate resource in a slot k that meets k mod($2^\mu$)=0. A slot k corresponding to an LTE-V subframe includes a slot that meets k mod($2^\mu$)=0, k mod($2^\mu$)=1, ..., or k mod($2^\mu$)=$2^\mu$-1.

In a possible implementation, the initial candidate resource set for the first terminal apparatus includes a candidate resource in a slot k that meets k mod($2^\mu$)=X mod($2^\mu$). A start location of an LTE-V subframe is the same as a start location of an NR-V slot X. Optionally, the LTE-V subframe is an LTE-V subframe 0. X is an integer. For example, X=0.

In a possible implementation, if a start location of a slot 0 in the second communication system is the same as a start location of a subframe in the first communication system, the sixth resource includes a candidate resource in a slot k that meets k mod($2^{\mu}$)=0, or the sixth resource includes a candidate resource in a slot k that does not meet k mod($2^{\mu}$)=1.

For example, an SCS in the NR-V is 15 kHz, one LTE-V subframe corresponds to one slot (denoted as a slot #0), and a start location of the slot # 0 (namely, a slot 0) in the NR-V is the same as a start location of the LTE-V subframe. In this case, the first terminal apparatus may select any resource from the candidate resource set.

For another example, an SCS in the NR-V is 30 kHz, and one LTE-V subframe corresponds to two slots (denoted as a slot #0 and a slot #1). If a start location of the slot #0 in the NR-V is the same as a start location of the LTE-V subframe, the initial candidate resource set for the first terminal apparatus includes a candidate resource in a slot k that meets k mod($2^{\mu}$)=0. In other words, the initial candidate resource set for the first terminal apparatus does not include a candidate resource in a slot k that meets k mod($2^{\mu}$)=1.

For another example, an SCS in the NR-V is 30 kHz. If a start location of a slot whose index in the second communication system is an even number is the same as a start location of a subframe in the first communication system, the sixth resource includes a candidate resource in a slot k that meets k mod($2^{\mu}$)=0, or the sixth resource includes a candidate resource in a slot k that does not meet k mod($2^{\mu}$)=1.

For another example, an SCS in the NR-V is 30 kHz. If a start location of a slot whose index in the second communication system is an odd number is different from a start location of a subframe in the first communication system, the sixth resource includes a candidate resource in a slot k that meets k mod($2^{\mu}$)=0, or the sixth resource includes a candidate resource in a slot k that does not meet k mod($2^{\mu}$)=1.

In a possible implementation, if a start location of a slot 0 in the second communication system is different from a start location of a subframe in the first communication system, the sixth resource includes a candidate resource in a slot k that meets k mod($2^{\mu}$)=1, or the sixth resource includes a candidate resource in a slot k that does not meet k mod($2^{\mu}$)=0.

For example, an SCS in the NR-V is 15 kHz, one LTE-V subframe corresponds to one slot (denoted as a slot #0), and a start location of the slot # 0 (namely, a slot 0) in the NR-V is the same as a start location of the LTE-V subframe. In this case, the first terminal apparatus may select any resource from the candidate resource set.

For another example, an SCS in the NR-V is 30 kHz, and one LTE-V subframe corresponds to two slots (denoted as a slot #0 and a slot #1). If a start location of the slot #0 in the NR-V is different from a start location of the LTE-V subframe, the initial candidate resource set for the first terminal apparatus includes a candidate resource in a slot k that meets k mod($2^{\mu}$)=1. In other words, the initial candidate resource set for the first terminal apparatus does not include a candidate resource in a slot k that meets k mod($2^{\mu}$)=0.

For another example, if a start location of a slot whose index in the second communication system is an odd number is the same as a start location of a subframe in the first communication system, the sixth resource includes a candidate resource in a slot k that meets k mod($2^{\mu}$)=1, or the sixth resource includes a candidate resource in a slot k that does not meet k mod($2^{\mu}$)=0.

For another example, if a start location of a slot whose index in the second communication system is an even number is different from a start location of a subframe in the first communication system, the sixth resource includes a candidate resource in a slot k that meets k mod($2^{\mu}$)=1, or the sixth resource includes a candidate resource in a slot k that does not meet k mod($2^{\mu}$)=0.

(b) The first terminal apparatus determines the sixth resource from a candidate resource set for the second communication system (for example, the NR-V).

The first terminal apparatus excludes, from the candidate resource set, a candidate resource in a non-first slot of at least one slot corresponding to an LTE-V subframe. Optionally, the candidate resource set is generated at a physical layer of the first terminal apparatus.

Optionally, the first information indicates a candidate resource set for an LTE-V terminal apparatus of the first terminal apparatus.

In a case, in the candidate resource set for the LTE-V terminal apparatus, for an LTE-V subframe in which a quantity of candidate resources is less than a preset value or an LTE-V subframe in which a quantity of candidate resources is greater than or equal to a preset value, the first terminal apparatus excludes, from the NR-V candidate resource set, a candidate resource in a non-first slot of at least one slot corresponding to the LTE-V subframe.

In other words, in the candidate resource set for the LTE-V terminal apparatus, regardless of whether an LTE-V subframe includes a reserved resource for the LTE-V terminal apparatus, the first terminal apparatus excludes, from the NR-V candidate resource set, a candidate resource in a non-first slot of at least one slot corresponding to the LTE-V subframe.

In a possible implementation, the first terminal apparatus selects a candidate resource from a slot k that meets k mod($2^{\mu}$)=0; or the first terminal apparatus excludes a candidate resource in a slot k that does not meet k mod($2^{\mu}$)=0; or the first terminal apparatus excludes a candidate resource in a slot k that meets k mod($2^{\mu}$)=1, k mod($2^{\mu}$)=2, ..., or k mod($2^{\mu}$)=$2^{\mu}$-1. A slot k corresponding to an LTE-V subframe includes a slot that meets k mod($2^{\mu}$)=0, k mod($2^{\mu}$)=1, k mod($2^{\mu}$)=2, ..., or k mod($2^{\mu}$)=$2^{\mu}$-1.

In a possible implementation, the first terminal apparatus selects a candidate resource from a slot k that meets k

mod($2^\mu$)=X mod($2^\mu$), or the first terminal apparatus excludes a candidate resource in a slot k that does not meet k mod($2^\mu$)=X mod($2^\mu$). A start location of an LTE-V subframe is the same as a start location of an NR-V slot X. Optionally, the LTE-V subframe is an LTE-V subframe 0. X is an integer. For example, X=0.

In a possible implementation, if a start location of a slot 0 in the second communication system is the same as a start location of a subframe in the first communication system, the sixth resource includes a candidate resource in a slot k that meets k mod($2^\mu$)=0, or the sixth resource includes a candidate resource in a slot k that does not meet k mod($2^\mu$)=1.

For example, an SCS in the NR-V is 15 kHz, one LTE-V subframe corresponds to one slot (denoted as a slot #0), and a start location of the slot #0 in the NR-V is the same as a start location of the LTE-V subframe. In this case, the first terminal apparatus may select any resource from the candidate resource set.

For another example, an SCS in the NR-V is 30 kHz, and one LTE-V subframe corresponds to two slots (denoted as a slot #0 and a slot #1). If a start location of the slot #0 in the NR-V is the same as a start location of the LTE-V subframe, the first terminal apparatus selects a candidate resource from a slot k that meets k mod($2^\mu$)=0. In other words, the first terminal apparatus excludes a candidate resource in a slot k that meets k mod($2^\mu$)=1. In other words, the first terminal apparatus excludes a candidate resource in a slot k that does not meet k mod($2^\mu$)=0.

For another example, an SCS in the NR-V is 30 kHz. If a start location of a slot whose index in the second communication system is an even number is the same as a start location of a subframe in the first communication system, the sixth resource includes a candidate resource in a slot k that meets k mod($2^\mu$)=0, or the sixth resource includes a candidate resource in a slot k that does not meet k mod($2^\mu$)=1.

For another example, an SCS in the NR-V is 30 kHz. If a start location of a slot whose index in the second communication system is an odd number is different from a start location of a subframe in the first communication system, the sixth resource includes a candidate resource in a slot k that meets k mod($2^\mu$)=0, or the sixth resource includes a candidate resource in a slot k that does not meet k mod($2^\mu$)=1.

In a possible implementation, if a start location of a slot 0 in the second communication system is different from a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

For example, an SCS in the NR-V is 15 kHz, one LTE-V subframe corresponds to one slot (denoted as a slot #0), and a start location of the slot # 0 (namely, a slot 0) in the NR-V is the same as a start location of the LTE-V subframe. In this case, the first terminal apparatus may select any resource from the candidate resource set.

For another example, an SCS in the NR-V is 30 kHz, and one LTE-V subframe corresponds to two slots (denoted as a slot #0 and a slot #1). If a start location of the slot #0 in the NR-V is different from a start location of the LTE-V subframe, the first terminal apparatus selects a candidate resource from a slot k that meets k mod($2^\mu$)=1. In other words, the first terminal apparatus excludes a candidate resource in a slot k that meets k mod($2^\mu$)=0. In other words, the first terminal apparatus excludes a candidate resource in a slot k that does not meet k mod($2^\mu$)=1.

For another example, if a start location of a slot whose index in the second communication system is an odd number is the same as a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

For another example, if a start location of a slot whose index in the second communication system is an even number is different from a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

(c) A MAC layer of the first terminal apparatus determines the sixth resource from a candidate resource set for the second communication system (for example, the NR-V).

A granted resource selected by the MAC layer of the first terminal apparatus includes a resource in the first slot of an LTE-V subframe.

Optionally, the first information indicates a candidate resource set for an LTE-V terminal apparatus of the first terminal apparatus.

In a case, in the candidate resource set for the LTE-V terminal apparatus, for an LTE-V subframe in which a quantity of candidate resources is less than a preset value or an LTE-V subframe in which a quantity of candidate resources is greater than or equal to a preset value, the first terminal apparatus does not select, from the NR-V candidate resource set, a candidate resource in a non-first slot of at least one slot corresponding to the LTE-V subframe.

In other words, in the candidate resource set for the LTE-V terminal apparatus, for an LTE-V subframe in which a quantity of candidate resources is less than a preset value or an LTE-V subframe in which a quantity of candidate resources is greater than or equal to a preset value, the first terminal apparatus selects, from the NR-V candidate resource set, only a granted resource in the first slot corresponding to the LTE-V subframe.

In a possible implementation, the sixth resource includes a candidate resource in a slot k that meets k mod($2^\mu$)=0; or the first terminal apparatus excludes a candidate resource in a slot k that does not meet k mod($2^\mu$)=0; or the first terminal apparatus excludes a candidate resource in a slot k that meets k mod($2^\mu$)=1, k mod($2^\mu$)=2, ..., or k mod($2^\mu$)=$2^\mu$-1. A slot k corresponding to an LTE-V subframe includes a slot that meets k mod($2^\mu$)=0, k mod($2^\mu$)=1, k mod($2^\mu$)=2, ..., or k mod($2^\mu$) =$2^\mu$-1.

In a possible implementation, the sixth resource includes a candidate resource in a slot k that meets k mod($2^\mu$)=X mod($2^\mu$), or the first terminal apparatus excludes a candidate resource in a slot k that does not meet k mod($2^\mu$)=X mod($2^\mu$). A start location of an LTE-V subframe is the same as a start location of an NR-V slot X. Optionally, the LTE-V subframe is an LTE-V subframe 0. X is an integer. For example, X=0.

In a possible implementation, if a start location of a slot 0 in the second communication system is the same as a start location of a subframe in the first communication system, the sixth resource includes a candidate resource in a slot k that meets k mod($2^\mu$)=0, or the first terminal apparatus selects a candidate resource in a slot k that does not meet k mod($2^\mu$) =1.

For example, an SCS in the NR-V is 15 kHz, one LTE-V subframe corresponds to one slot (denoted as a slot #0), and a start location of the slot #0 in the NR-V is the same as a start location of the LTE-V subframe. In this case, the first terminal apparatus may select any resource from the candidate resource set.

For another example, an SCS in the NR-V is 30 kHz, and one LTE-V subframe corresponds to two slots (denoted as a slot #0 and a slot #1). If a start location of the slot #0 in the NR-V is the same as a start location of the LTE-V subframe, the sixth resource includes a candidate resource in a slot k that meets k mod($2^\mu$)=0. In other words, the first terminal apparatus excludes a candidate resource in a slot k that meets k mod($2^\mu$)=1. In other words, the first terminal apparatus excludes a candidate resource in a slot k that does not meet k mod($2^\mu$)=0.

For another example, an SCS in the NR-V is 30 kHz. If a start location of a slot whose index in the second communication system is an even number is the same as a start location of a subframe in the first communication system, the sixth resource includes a candidate resource in a slot k that meets k mod($2^\mu$)=0, or the sixth resource includes a candidate resource in a slot k that does not meet k mod($2^\mu$)=1.

For another example, an SCS in the NR-V is 30 kHz. If a start location of a slot whose index in the second communication system is an odd number is different from a start location of a subframe in the first communication system, the sixth resource includes a candidate resource in a slot k that meets k mod($2^\mu$)=0, or the sixth resource includes a candidate resource in a slot k that does not meet k mod($2^\mu$)=1.

In a possible implementation, if a start location of a slot 0 in the second communication system is different from a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

For example, an SCS in the NR-V is 15 kHz, one LTE-V subframe corresponds to one slot (denoted as a slot #0), and a start location of the slot # 0 (namely, a slot 0) in the NR-V is the same as a start location of the LTE-V subframe. In this case, the first terminal apparatus may select any resource from the candidate resource set.

For another example, an SCS in the NR-V is 30 kHz, and one LTE-V subframe corresponds to two slots (denoted as a slot #0 and a slot #1). If a start location of the slot #0 in the NR-V is different from a start location of the LTE-V subframe, the sixth resource includes a candidate resource in a slot k that meets k mod($2^\mu$)=1. In other words, the first terminal apparatus excludes a candidate resource in a slot k that meets k mod($2^\mu$)=0. In other words, the first terminal apparatus excludes a candidate resource in a slot k that does not meet k mod($2^\mu$)=1.

For another example, if a start location of a slot whose index in the second communication system is an odd number is the same as a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

For another example, if a start location of a slot whose index in the second communication system is an even number is different from a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

In the foregoing descriptions, that "the sixth resource includes a resource that meets a specific condition" may be further understood as that "the first terminal selects a resource that meets a specific condition". The two expressions have a same meaning.

S504: The first terminal apparatus transmits, on the sixth resource, sidelink information in the second communication system (NR).

In addition, optionally, the first terminal apparatus selects the sixth resource from a time unit n, or the first terminal apparatus performs resource preemption check in the time unit n, or the first terminal apparatus reevaluates a resource in the time unit n, and the first communication system module of the first terminal apparatus indicates the first information in a time unit n-T. Optionally, the first communication system of the first terminal apparatus determines the first information based on SCI sensed before a subframe n-T-Ta. Optionally, T is less than or equal to 4 ms, or T+Ta is less than or equal to 4 ms.

Optionally, the second communication system module of the first terminal apparatus receives the first information in the time unit n-T. Optionally, T is less than or equal to 4 ms. The first terminal apparatus selects the sixth resource from the time unit n, or the first terminal apparatus performs resource preemption check in the time unit n, or the first terminal apparatus reevaluates a resource in the time unit n.

Optionally, the first terminal apparatus determines the first information based on SCI in the first communication system after a time unit n-T-Tv, or determines the first information based on SCI in the first communication system after a time unit n-Tv. To be specific, SCI in the first communication system that is used for determining the first information is located after the time unit n-T-Tv, or is located after the time unit n-Tv. Optionally, T is less than or equal to 4 ms.

In an implementation, the first terminal apparatus determines a value of Tv based on T0. For example, Tv=T0-T. n-T0 is a start location of a resource sensing window, or T0 indicates a start location of a resource sensing window. A value of T0 is configured by a network apparatus for a terminal apparatus, or is preconfigured for a terminal apparatus, or is predefined. For example, a value of T0 may be 100 ms or 1100 ms. In another implementation, a value of Tv is configured by a network apparatus for a terminal apparatus, or is preconfigured for a terminal apparatus, or is predefined. For example, a value of Tv may be 100 ms or 1100 ms.

In this embodiment of this application, a time unit may be a slot, for example, a slot in the second communication system.

According to this embodiment of this application, when excluding resources, the first terminal apparatus excludes not only the fourth resource but also the fifth resource, to avoid a case that a resource selected by the first terminal apparatus conflicts with a reserved resource for a terminal apparatus in the first communication system.

In addition, in view of the fourth technical problem, this application further provides a method 600. For example, a first communication system is an LTE sidelink communication system, and a second communication system is an NR sidelink communication system. The method 600 includes the following steps.

S601: A first terminal apparatus obtains first information, where the first information indicates a fourth resource.

The fourth resource is a reserved resource used for a terminal apparatus in the first communication system (for example, LTE-V) to transmit sidelink information. The first terminal apparatus is an R18 NR-V terminal apparatus.

For this process, refer to S501. Details are not described herein again.

S602: The first terminal apparatus excludes the fourth resource to obtain a candidate resource set.

In a manner, the first terminal apparatus may exclude the fourth resource from a resource pool. The resource pool may be the first resource pool and the second resource pool in the method 200, or may be the third resource pool in the method 200.

S603: The first terminal apparatus determines a sixth resource, where the sixth resource includes a resource that is in the candidate resource set and that is in the first slot of at least one slot, in the second communication system (for example, NR-V), that corresponds to a subframe in the first communication system (for example, the LTE-V).

To be specific, regardless of whether an LTE-V subframe includes a resource reserved for an LTE-V terminal apparatus, the first terminal apparatus may exclude a resource in a non-first slot of at least one NR-V slot corresponding to the LTE-V subframe, and determine the sixth resource from the first slot of the at least one NR-V slot corresponding to the LTE-V subframe.

It can be understood that the sixth resource may also include a resource that is in the candidate resource set and that is in a non-first slot of the at least one slot, in the second communication system, that corresponds to the subframe in the first communication system. This is not limited in this embodiment of this application.

For example, the first terminal apparatus selects a resource from the first slot of the at least one slot corresponding to the LTE-V subframe. The first terminal apparatus may further transmit sidelink information on a resource that is after the resource and that has a same frequency domain location as the resource. Optionally, a resource that is consecutively after the resource in time domain and that has a same frequency domain location as the resource is selected from the LTE-V subframe. The first terminal apparatus may transmit sidelink information in a maximum of $2^\mu$ consecutive slots, including a resource in the first slot. In other words, the first terminal apparatus may select candidate resources from a maximum of $2^\mu$ consecutive slots, including a resource in the first slot.

(a) The first terminal apparatus determines the sixth resource from a candidate resource set for the second communication system (for example, the NR-V).

The first terminal apparatus excludes, from the candidate resource set, a candidate resource in a non-first slot of at least one slot corresponding to an LTE-V subframe. In other words, the first terminal device selects, from the candidate resource set, a candidate resource in the first slot of the at least one slot, in the second communication system, that corresponds to the subframe in the first communication system. Optionally, the candidate resource set is generated at a physical layer of the first terminal apparatus.

Optionally, the first information indicates a candidate resource set for an LTE-V terminal apparatus of the first terminal apparatus.

In a case, in the candidate resource set for the LTE-V terminal apparatus, for an LTE-V subframe in which a quantity of candidate resources is less than a preset value or an LTE-V subframe in which a quantity of candidate resources is greater than or equal to a preset value, the first terminal apparatus excludes, from the NR-V candidate resource set, a candidate resource in a non-first slot of at least one slot corresponding to the LTE-V subframe.

In other words, in the candidate resource set for the LTE-V terminal apparatus, regardless of whether an LTE-V subframe includes a reserved resource for the LTE-V terminal apparatus, the first terminal apparatus excludes, from the NR-V candidate resource set, a candidate resource in a non-first slot of at least one slot corresponding to the LTE-V subframe.

In a possible implementation, the sixth resource includes a candidate resource in a slot k that meets k mod($2^\mu$)=0; or the first terminal apparatus excludes a candidate resource in a slot k that does not meet k mod($2^\mu$)=0; or the first terminal apparatus excludes a candidate resource in a slot k that meets k mod($2^\mu$)=1, k mod($2^\mu$)=2, ..., or k mod($2^\mu$)=$2^\mu$-1. A slot k corresponding to an LTE-V subframe includes a slot that meets k mod($2^\mu$)=0, k mod($2^\mu$)=1, k mod($2^\mu$)=2, ..., or k mod($2^\mu$)=$2^\mu$-1.

In a possible implementation, the sixth resource includes a candidate resource in a slot k that meets k mod($2^\mu$)=X mod($2^\mu$), or the first terminal apparatus excludes a candidate resource in a slot k that does not meet k mod($2^\mu$)=X mod($2^\mu$). A start location of an LTE-V subframe is the same as a start location of an NR-V slot X. Optionally, the LTE-V subframe is an LTE-V subframe 0. X is an integer. For example, X=0.

In a possible implementation, if a start location of a slot 0 in the second communication system is the same as a start location of a subframe in the first communication system, the sixth resource includes a candidate resource in a slot k that meets k mod($2^\mu$)=0, or the first terminal apparatus selects a candidate resource in a slot k that does not meet k mod($2^\mu$)=1.

For example, an SCS in the NR-V is 15 kHz, one LTE-V subframe corresponds to one slot (denoted as a slot #0), and a start location of the slot #0 in the NR-V is the same as a start location of the LTE-V subframe. In this case, the first terminal apparatus may select any resource from the candidate resource set.

For another example, an SCS in the NR-V is 30 kHz, and one LTE-V subframe corresponds to two slots (denoted as a slot #0 and a slot #1). If a start location of the slot #0 in the NR-V is the same as a start location of the LTE-V subframe, the sixth resource includes a candidate resource in a slot k that meets k mod($2^\mu$)=0. In other words, the first terminal apparatus excludes a candidate resource in a slot k that meets k mod($2^\mu$)=1. In other words, the first terminal apparatus excludes a candidate resource in a slot k that does not meet k mod($2^\mu$)=0.

For another example, an SCS in the NR-V is 30 kHz. If a start location of a slot whose index in the second communication system is an even number is the same as a start location of a subframe in the first communication system, the sixth resource includes a candidate resource in a slot k that meets k mod($2^\mu$)=0, or the sixth resource includes a candidate resource in a slot k that does not meet k mod($2^\mu$)=1.

For another example, an SCS in the NR-V is 30 kHz. If a start location of a slot whose index in the second communication system is an odd number is different from a start location of a subframe in the first communication system, the sixth resource includes a candidate resource in a slot k that meets k mod($2^\mu$)=0, or the sixth resource includes a candidate resource in a slot k that does not meet k mod($2^\mu$)=1.

In a possible implementation, if a start location of a slot 0 in the second communication system is different from a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

For example, an SCS in the NR-V is 15 kHz, one LTE-V subframe corresponds to one slot (denoted as a slot #0), and a start location of the slot # 0 (namely, a slot 0) in the NR-V is the same as a start location of the LTE-V subframe. In this case, the first terminal apparatus selects any resource from the candidate resource set.

For another example, an SCS in the NR-V is 30 kHz, and one LTE-V subframe corresponds to two slots (denoted as a slot #0 and a slot #1). If a start location of the slot #0 in the NR-V is different from a start location of the LTE-V subframe, the sixth resource includes a candidate resource in a slot k that meets k mod($2^\mu$)=1. In other words, the first terminal apparatus excludes a candidate resource in a slot k that meets k mod($2^\mu$)=0. In other words, the first terminal apparatus excludes a candidate resource in a slot k that does not meet k mod($2^\mu$)=1.

For another example, if a start location of a slot whose index in the second communication system is an odd number is the same as a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

For another example, if a start location of a slot whose index in the second communication system is an even number is different from a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

In the foregoing descriptions, that "the sixth resource includes a resource that meets a specific condition" may be further understood as that "the first terminal selects a resource that meets a specific condition". The two expressions have a same meaning.

(b) A MAC layer of the first terminal apparatus determines the sixth resource from a candidate resource set for the second communication system (for example, the NR-V).

A granted resource selected by the MAC layer of the first terminal apparatus includes a resource in the first slot of an LTE-V subframe.

Optionally, the first information indicates a candidate resource set for an LTE-V terminal apparatus of the first terminal apparatus.

In a case, in the candidate resource set for the LTE-V terminal apparatus, for an LTE-V subframe in which a quantity of candidate resources is less than a preset value or an LTE-V subframe in which a quantity of candidate resources is greater than or equal to a preset value, the first terminal apparatus does not select, from the NR-V candidate resource set, a candidate resource in a non-first slot of at least one slot corresponding to the LTE-V subframe.

In other words, in the candidate resource set for the LTE-V terminal apparatus, for an LTE-V subframe in which a quantity of candidate resources is less than a preset value or an LTE-V subframe in which a quantity of candidate resources is greater than or equal to a preset value, the first terminal apparatus selects, from the NR-V candidate resource set, only a granted resource in the first slot corresponding to the LTE-V subframe.

In a possible implementation, the sixth resource includes a candidate resource in a slot k that meets k mod$(2^\mu)$=0; or the first terminal apparatus excludes a candidate resource in a slot k that does not meet k mod$(2^\mu)$=0; or the first terminal apparatus excludes a candidate resource in a slot k that meets k mod$(2^\mu)$=1, k mod$(2^\mu)$=2, ..., or k mod$(2^\mu)$=$2^\mu$-1. A slot k corresponding to an LTE-V subframe includes a slot that meets k mod$(2^\mu)$=0, k mod$(2^\mu)$=1, k mod$(2^\mu)$=2, ..., or k mod$(2^\mu)$=$2^\mu$-1.

In a possible implementation, the sixth resource includes a candidate resource in a slot k that meets k mod$(2^\mu)$=X mod$(2^\mu)$, or the first terminal apparatus excludes a candidate resource in a slot k that does not meet k mod$(2^\mu)$=X mod$(2^\mu)$. A start location of an LTE-V subframe is the same as a start location of an NR-V slot X. Optionally, the LTE-V subframe is an LTE-V subframe 0. X is an integer. For example, X=0.

In a possible implementation, if a start location of a slot 0 in the second communication system is the same as a start location of a subframe in the first communication system, the sixth resource includes a candidate resource in a slot k that meets k mod$(2^\mu)$=0, or the first terminal apparatus selects a candidate resource in a slot k that does not meet k mod$(2^\mu)$=1.

For example, an SCS in the NR-V is 15 kHz, one LTE-V subframe corresponds to one slot (denoted as a slot #0), and a start location of the slot #0 in the NR-V is the same as a start location of the LTE-V subframe. In this case, the first terminal apparatus may select any resource from the candidate resource set.

For another example, an SCS in the NR-V is 30 kHz, and one LTE-V subframe corresponds to two slots (denoted as a slot #0 and a slot #1). If a start location of the slot #0 in the NR-V is the same as a start location of the LTE-V subframe, the sixth resource includes a candidate resource in a slot k that meets k mod$(2^\mu)$=0. In other words, the first terminal apparatus excludes a candidate resource in a slot k that meets k mod$(2^\mu)$=1. In other words, the first terminal apparatus excludes a candidate resource in a slot k that does not meet k mod$(2^\mu)$=0.

For another example, an SCS in the NR-V is 30 kHz. If a start location of a slot whose index in the second communication system is an even number is the same as a start location of a subframe in the first communication system, the sixth resource includes a candidate resource in a slot k that meets k mod$(2^\mu)$=0, or the sixth resource includes a candidate resource in a slot k that does not meet k mod$(2^\mu)$=1.

For another example, an SCS in the NR-V is 30 kHz. If a start location of a slot whose index in the second communication system is an odd number is different from a start location of a subframe in the first communication system, the sixth resource includes a candidate resource in a slot k that meets k mod$(2^\mu)$=0, or the sixth resource includes a candidate resource in a slot k that does not meet k mod$(2^\mu)$=1.

In a possible implementation, if a start location of a slot 0 in the second communication system is different from a start location of a subframe in the first communication system, the sixth resource includes a candidate resource in a slot k that meets k mod$(2^\mu)$=1, or the sixth resource includes a candidate resource in a slot k that does not meet k mod$(2^\mu)$=0.

For example, an SCS in the NR-V is 15 kHz, one LTE-V subframe corresponds to one slot (denoted as a slot #0), and a start location of the slot # 0 (namely, a slot 0) in the NR-V is the same as a start location of the LTE-V subframe. In this case, the first terminal apparatus selects any resource from the candidate resource set.

For another example, an SCS in the NR-V is 30 kHz, and one LTE-V subframe corresponds to two slots (denoted as a slot #0 and a slot #1). If a start location of the slot #0 in the NR-V is different from a start location of the LTE-V subframe, the sixth resource includes a candidate resource in a slot k that meets k mod$(2^\mu)$=1. In other words, the first terminal apparatus excludes a candidate resource in a slot k that meets k mod$(2^\mu)$=0. In other words, the first terminal apparatus excludes a candidate resource in a slot k that does not meet k mod$(2^\mu)$=1.

For another example, if a start location of a slot whose index in the second communication system is an odd number is the same as a start location of a subframe in the first communication system, the sixth resource includes a candidate resource in a slot k that meets k mod$(2^\mu)$=1, or the sixth resource includes a candidate resource in a slot k that does not meet k mod$(2^\mu)$=0.

For another example, if a start location of a slot whose index in the second communication system is an even number is different from a start location of a subframe in the first communication system, the sixth resource includes a candidate resource in a slot k that meets k mod($2^\mu$)=1, or the sixth resource includes a candidate resource in a slot k that does not meet k mod($2^\mu$)=0.

In the foregoing descriptions, that "the sixth resource includes a resource that meets a specific condition" may be further understood as that "the first terminal selects a resource that meets a specific condition". The two expressions have a same meaning.

S604: The first terminal apparatus transmits, on the sixth resource, sidelink information in the second communication system (for example, the NR-V).

For descriptions of step S604, refer to step S504. Details are not described herein again.

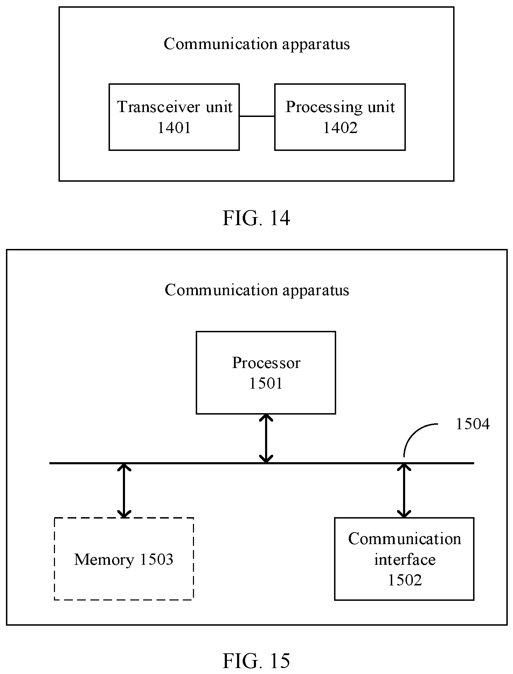

According to the foregoing methods, FIG. 14 shows a communication apparatus according to an embodiment of this application. The communication apparatus includes a transceiver unit 1401 and a processing unit 1402.

The transceiver unit 1401 may be configured to implement a corresponding information sending/receiving function. The transceiver unit 1401 may also be referred to as a communication interface or a communication unit. The processing unit 1402 may be configured to perform a processing operation.

For example, the apparatus further includes a storage unit. The storage unit may be configured to store instructions and/or data. The processing unit 1402 may read the instructions and/or the data in the storage unit, so that the apparatus implements actions of an apparatus in the foregoing method embodiments.

In a first implementation, the apparatus may be the first terminal apparatus in the foregoing embodiments, or may be a component (for example, a chip) of the first terminal apparatus. The transceiver unit and the processing unit may be configured to implement related operations of the first terminal apparatus in the foregoing method embodiments. For example, the transceiver unit is configured to implement S201 and S203, or implement S301, or implement S402, or implement S501 and S504; and the processing unit is configured to implement S202, or implement S401, S403, and S404, or implement S502 and S503.

In a second implementation, the apparatus may be the second terminal apparatus in the foregoing embodiments, or may be a component (for example, a chip) of the second terminal apparatus. The transceiver unit and the processing unit may be configured to implement related operations of second terminal apparatus in the foregoing method embodiments. For example, the transceiver unit is configured to implement S203, S301, or S504, and the processing unit is configured to implement S302.

It should be understood that specific processes of performing the foregoing corresponding steps by the units are described in detail in the foregoing method embodiments. For brevity, details are not described herein again.

It should be further understood that the apparatus herein is embodied in a form of a functional unit. The term "unit" herein may indicate an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The communication apparatus has a function of implementing corresponding steps performed by the apparatus in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform sending/receiving operations and related processing operations in the method embodiments.

In addition, the transceiver unit 1401 may alternatively be a transceiver circuit (for example, may include a receiver circuit and a transmitter circuit), and the processing unit may be a processing circuit.

It should be understood that the apparatus in FIG. 14 may be the apparatus in the foregoing method embodiments, or may be a chip or a chip system, for example, a system on chip (system on chip, SoC). The transceiver unit may be an input/output circuit or a communication interface. The processing unit is a processor, a microprocessor, or an integrated circuit that is integrated on the chip. This is not limited herein.

An embodiment of this application further provides a communication apparatus, including a processor 1501 and a communication interface 1502, as shown in FIG. 15. The processor 1501 is configured to execute a computer program or instructions stored in a memory 1503, or read data stored in the memory 1503, to perform the methods in the foregoing method embodiments. For example, there is one or more processors 1501. The communication interface 1502 is configured to send and/or receive a signal. For example, the processor 1501 is configured to control the communication interface 1502 to send and/or receive a signal.

For example, as shown in FIG. 15, the communication apparatus may further include the memory 1503, and the memory 1503 is configured to store a computer program or instructions and/or data. The memory 1503 may be integrated with the processor 1501, or may be disposed separately. Certainly, the communication apparatus may alternatively not include the memory 1503, and the memory 1503 is disposed outside the communication apparatus. For example, there is one or more memories 1503.

For example, the processor 1501, the communication interface 1502, and the memory 1503 are connected to each other through a bus 1504. The bus 1504 may be a peripheral component interconnect (peripheral component interconnect, PCI) bus, an extended industry standard architecture (extended industry standard architecture, EISA) bus, or the like. The bus 1504 may be categorized as an address bus, a data bus, a control bus, or the like. For ease of representation, only one bold line is used to represent the bus 1504 in FIG. 15, but this does not mean that there is only one bus or only one type of bus.

For example, the processor 1501 is configured to execute the computer program or the instructions stored in the memory 1503.

In a first implementation, the apparatus may be the first terminal apparatus in the foregoing embodiments, or may be a component (for example, a chip) of the first terminal apparatus. The communication interface and the processor may be configured to implement related operations of the first terminal apparatus in the foregoing method embodiments. For example, the communication interface is configured to implement S201 and S203, or implement S301, or implement S402, or implement S501 and S504; and the processor is configured to implement S202, or implement S401, S403, and S404, or implement S502 and S503.

In a second implementation, the apparatus may be the second terminal apparatus in the foregoing embodiments, or may be a component (for example, a chip) of the second terminal apparatus. The communication interface and the processor may be configured to implement related operations of the second terminal apparatus in the foregoing method embodiments. For example, the communication interface is configured to implement S203, S301, or S504, and the processor is configured to implement S302.

It should be understood that a processor (for example, the processor 1501) mentioned in embodiments of this application may be a central processing unit (central processing unit, CPU), a network processor (network processor, NP), or a combination of a CPU and an NP. The processor may further include a hardware chip. The hardware chip may be an ASIC, a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

It should be further understood that a memory (for example, the memory 1503) mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It can be clearly understood by a person skilled in the art that, for ease and brevity of description, for detailed working processes of the foregoing system, apparatus, and unit, reference may be made to corresponding processes in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may or may not be physical units, to be specific, may be located in one place, or may be distributed on a plurality of network units. Some or all of the units may be selected according to actual requirements to achieve objectives of solutions of embodiments.

In addition, functional units in embodiments of this application may be integrated into one processing unit, or each unit may exist alone physically, or two or more units may be integrated into one unit.

When the integrated unit is implemented in the form of the software function unit and sold or used as an independent product, the integrated unit may be stored in a computer-readable storage medium. This application provides a computer-readable storage medium, including a computer program. When the computer program is run on a computer, the computer is enabled to perform any one of the possible implementations in the foregoing method embodiments.

Technical solutions of this application or a part of the technical solutions may be implemented in a form of a software product. Therefore, this application further provides a computer program product. The computer program product includes a computer program (which may also be referred to as code or instructions). When the computer program is run, a computer is enabled to perform any one of the possible implementations in the foregoing method embodiments. The computer software product is stored in a storage medium and includes several instructions for instructing a computer device (which may be a personal computer, a server, a network device, or the like) to perform all or some of the steps of the methods in embodiments of this application.

The storage medium includes any medium that can store program code, for example, a USB flash drive, a removable hard disk, a ROM, a RAM, a magnetic disk, or a compact disc.

Mutual reference may be made to content in embodiments of this application. Unless otherwise specified or s logical conflict occurs, terms and/or descriptions in different embodiments are consistent and may be mutually referenced, and technical features in different embodiments may be combined into a new embodiment based on an internal logical relationship between the technical features.

It can be understood that, in embodiments of this application, a terminal device and/or a network device may perform some or all of steps in embodiments of this application. These steps or operations are merely examples. In embodiments of this application, other operations or variations of various operations may alternatively be performed. In addition, the steps may be performed in a sequence different from a sequence presented in embodiments of this application, and not all the operations in embodiments of this application may be performed.

**Claims**

1. A communication method, comprising:

   obtaining, by a first terminal apparatus, configuration information of a resource pool;
   when the resource pool comprises a first resource, determining, by the first terminal apparatus, a third resource from the first resource, or when the resource pool comprises the first resource and a second resource, determining, by the first terminal apparatus, a third resource from the first resource and/or the second resource, wherein the third resource is a resource used for transmitting sidelink information in a second communication system; and
   transmitting, by the first terminal apparatus, sidelink information to a second terminal apparatus on the third resource, wherein
   the first resource is a resource used for transmitting sidelink information in a first communication system and sidelink information in the second communication system, and the second resource is a resource used for transmitting sidelink information in the second communication system.

2. The method according to claim 1, wherein a communication protocol of the second communication system comprises a first-release protocol and a second-release protocol, and a resource pool comprising the first resource is a first resource pool; and
   the determining, by the first terminal apparatus, the third resource from the first resource comprises:

   when the second terminal apparatus is a terminal apparatus supporting the first-release protocol, determining, by the first terminal apparatus, the third resource from the first resource; or
   when the second terminal apparatus is a terminal apparatus supporting the second-release protocol and a receiving resource pool for the second terminal apparatus comprises a part or all of the first resource, determining, by the first terminal apparatus, the third resource from the first resource.

3. The method according to claim 1, wherein a communication protocol of the second communication system comprises a first-release protocol and a second-release protocol, and a resource pool comprising the second resource is a second resource pool; and
   the determining, by the first terminal apparatus, the third resource from the second resource comprises:

   when a propagation type for transmitting sidelink information to the second terminal apparatus is multicast or broadcast, determining, by the first terminal apparatus, the third resource from the second resource; or
   when the second terminal apparatus is a terminal apparatus supporting the second-release protocol, determining, by the first terminal apparatus, the third resource from the second resource.

4. The method according to claim 1, wherein a communication protocol of the second communication system comprises a first-release protocol and a second-release protocol, a resource pool comprising the first resource is a first resource pool, and a resource pool comprising the second resource is a second resource pool; and
the determining, by the first terminal apparatus, the third resource from the first resource and/or the second resource comprises:

when the second terminal apparatus is a terminal apparatus supporting the first-release protocol, determining, by the first terminal apparatus, the third resource from the first resource and/or the second resource; or
when the second terminal apparatus is a terminal apparatus supporting the second-release protocol and a receiving resource pool for the second terminal apparatus comprises a part or all of the first resource, determining, by the first terminal apparatus, the third resource from the first resource and/or the second resource.

5. The method according to claim 1, wherein a communication protocol of the second communication system comprises a first-release protocol and a second-release protocol, and a resource pool comprising the first resource and the second resource is a third resource pool; and
the determining, by the first terminal apparatus, the third resource from the first resource comprises:

when the second terminal apparatus is a terminal apparatus supporting the first-release protocol, determining, by the first terminal apparatus, a candidate resource set from the first resource, wherein the candidate resource set comprises the third resource; or
when the second terminal apparatus is a terminal apparatus supporting the second-release protocol and a receiving resource pool for the second terminal apparatus comprises a part or all of the first resource, determining, by the first terminal apparatus, the candidate resource set from the first resource.

6. The method according to claim 1, wherein a communication protocol of the second communication system comprises a first-release protocol and a second-release protocol, and a resource pool comprising the first resource and the second resource is a third resource pool; and
the determining, by the first terminal apparatus, the third resource from the second resource comprises:

when a propagation type for transmitting sidelink information to the second terminal apparatus is multicast or broadcast, determining, by the first terminal apparatus, a candidate resource set from the second resource, wherein the candidate resource set comprises the third resource; or
when the second terminal apparatus is a terminal apparatus supporting the second-release protocol, determining, by the first terminal apparatus, the candidate resource set from the second resource.

7. The method according to claim 1, wherein a communication protocol of the second communication system comprises a first-release protocol and a second-release protocol, and a resource pool comprising the first resource and the second resource is a third resource pool; and
the determining, by the first terminal apparatus, the third resource from the first resource and the second resource comprises:

when the second terminal apparatus is a terminal apparatus supporting the first-release protocol, determining, by the first terminal apparatus, a candidate resource set from the first resource and the second resource, wherein the candidate resource set comprises the third resource; or
when the second terminal apparatus is a terminal apparatus supporting the second-release protocol and a receiving resource pool for the second terminal apparatus comprises a part or all of the first resource, determining, by the first terminal apparatus, the candidate resource set from the first resource and the second resource.

8. The method according to claim 7, wherein the determining, by the first terminal apparatus, the candidate resource set from the first resource and the second resource comprises:

determining, by the first terminal apparatus from the second resource, a first candidate resource set used for initial transmission; and/or
determining, by the first terminal apparatus from the first resource and the second resource, a second candidate resource set used for retransmission.

9. The method according to any one of claims 5 to 8, wherein the obtaining, by the first terminal apparatus, configuration information of the third resource pool comprises:

receiving, by the first terminal apparatus, a first message, wherein the first message indicates the configuration information of the third resource pool; and

obtaining, by the first terminal apparatus, the configuration information of the third resource pool based on the first message.

10. The method according to any one of claims 5 to 8, wherein the obtaining, by the first terminal apparatus, configuration information of the third resource pool comprises:

receiving, by the first terminal apparatus, a second message and a third message, wherein the second message indicates configuration information of a resource pool to which the first resource belongs, and the third message indicates configuration information of a resource pool to which the second resource belongs; and obtaining, by the first terminal apparatus, the configuration information of the third resource pool based on the second message and the third message.

11. The method according to claim 10, wherein if the second message comprises information about a time unit to which the first resource belongs and the third message comprises information about a time unit to which the second resource belongs, a time unit of the third resource pool comprises the time unit to which the first resource belongs and the time unit to which the second resource belongs.

12. The method according to any one of claims 1 to 11, wherein the method further comprises:

receiving, by the first terminal apparatus, fourth information from the second terminal apparatus, wherein the fourth information indicates the first-release protocol and/or the second-release protocol; and determining, by the first terminal apparatus based on the fourth information, a protocol release supported by the second terminal apparatus.

13. The method according to any one of claims 1 to 12, wherein the method further comprises:

receiving, by the first terminal apparatus, fifth information from the second terminal apparatus, wherein the fifth information indicates information about the receiving resource pool for the second terminal apparatus; and determining, by the first terminal apparatus based on the fifth information, that the receiving resource pool for the second terminal apparatus comprises the first resource, or determining, by the first terminal apparatus based on the fifth information, that the receiving resource pool for the second terminal apparatus does not comprise the first resource.

14. The method according to any one of claims 1 to 13, wherein the method further comprises:

sending, by the first terminal apparatus, first sidelink control information SCI, wherein the first SCI comprises a first field and a second field, and the first field indicates a logical slot offset between a resource on which the first SCI is located and a reserved resource, wherein a value of the second field is a first value, and the second field indicates that the logical slot offset is determined based on the second resource; or a value of the second field is a second value, and the second field indicates that the logical slot offset is determined based on the first resource and the second resource.

15. The method according to any one of claims 1 to 13, wherein the method further comprises:

sending, by the first terminal apparatus, first SCI, wherein the first SCI comprises a first field and a third field, the first field indicates a logical slot offset between a resource on which the first SCI is located and a reserved resource, and the third field comprises at least two bits, wherein a value of the third field is a first value, and the third field indicates that the first terminal apparatus is able to receive collision information, and indicates that the logical slot offset is determined based on the second resource; or a value of the third field is a second value, and the third field indicates that the first terminal apparatus is able to receive collision information, and indicates that the logical slot offset is determined based on the first resource and the second resource.

16. The method according to any one of claims 1 to 13, wherein the method further comprises:

sending, by the first terminal apparatus, first SCI, wherein the first SCI comprises a first field and a fourth field, wherein

the first field indicates a first logical slot offset between a resource on which the first SCI is located and a first reserved resource, and the first logical slot offset is determined based on the second resource;

the fourth field indicates a second logical slot offset between the first reserved resource and a second reserved resource, and the second logical slot offset is determined based on the first resource and the second resource; and

an actual reserved resource indicated by the first SCI is the second reserved resource.

17. The method according to any one of claims 1 to 16, wherein the method further comprises:

sending, by the first terminal apparatus, the first SCI on the first resource, wherein the first SCI indicates a third reserved resource; and

when the third reserved resource overlaps a fourth reserved resource, skipping, by the first terminal apparatus, transmitting sidelink information on the third reserved resource, wherein the fourth reserved resource is a reserved resource for a third terminal apparatus.

18. The method according to any one of claims 1 to 16, wherein the method further comprises:

determining, by the first terminal apparatus, a third reserved resource from a candidate resource set, wherein the candidate resource set comprises the first resource and the second resource, or determining, by the first terminal apparatus, a third reserved resource from the first resource;

sending, by the first terminal apparatus, first SCI, wherein the first SCI indicates the third reserved resource; and

when the third reserved resource overlaps a fourth reserved resource, skipping, by the first terminal apparatus, transmitting sidelink information on the third reserved resource, wherein the fourth reserved resource is a reserved resource for a third terminal apparatus.

19. The method according to claim 18, wherein a priority value indicated by the first SCI is less than a priority value indicated by SCI sent by the third terminal apparatus.

20. The method according to any one of claims 17 to 19, wherein the method further comprises:
determining, by the first terminal apparatus, that the third reserved resource is preempted.

21. A communication method, comprising:

obtaining, by a first terminal apparatus, first information, wherein the first information indicates a fourth resource, and the fourth resource is a resource used for a terminal apparatus in a first communication system to transmit sidelink information;

excluding, by the first terminal apparatus, the fourth resource and a fifth resource, wherein the fourth resource comprises the fifth resource in time domain;

determining, by the first terminal apparatus, a sixth resource from a resource excluding the fourth resource and the fifth resource; and

transmitting, by the first terminal apparatus on the sixth resource, sidelink information in a second communication system.

22. The method according to claim 21, wherein the fifth resource comprises a resource that is the same as the fourth resource in time domain.

23. The method according to claim 21 or 22, wherein the fifth resource comprises resources in all subchannels in a subframe to which the fourth resource belongs.

24. The method according to claim 21 or 22, wherein the fifth resource comprises resources, not overlapping the fourth resource, in all subchannels in a subframe to which the fourth resource belongs.

25. The method according to claim 21 or 22, wherein the fifth resource comprises a resource that is the same as the fourth resource in time domain, that is adjacent to the fourth resource in frequency domain, and whose subchannel quantity is a first value.

26. The method according to any one of claims 21 to 25, wherein the subframe to which the fourth resource belongs corresponds to at least one slot, and the fifth resource comprises a resource in a non-first slot of the at least one slot.

27. The method according to claim 26, wherein the determining, by the first terminal apparatus, a sixth resource from a resource excluding the fourth resource and the fifth resource comprises:

   determining, by the first terminal apparatus, the sixth resource from an initial candidate resource set, wherein the initial candidate resource set comprises a resource in the first slot of the at least one slot; or
   determining, by the first terminal apparatus, the sixth resource from a candidate resource set, wherein a resource in a non-first slot of the at least one slot is excluded from the candidate resource set; or
   determining, by a media access control MAC layer of the first terminal apparatus, the sixth resource from a candidate resource set.

28. The method according to claim 27, wherein the initial candidate resource set comprises a first initial candidate resource set, or the initial candidate resource set comprises the first initial candidate resource set and a second initial candidate resource set, wherein

   the first initial candidate resource set comprises a resource in the first slot of the at least one slot within a resource selection window of the first terminal apparatus; and
   the second initial candidate resource set comprises a resource in a slot that does not overlap the fourth resource in time domain within the resource selection window.

29. The method according to claim 27, wherein a candidate resource in a non-first slot of the at least one slot within a resource selection window of the first terminal apparatus is excluded from the candidate resource set; and/or a resource in a slot that does not overlap the fourth resource in time domain within the resource selection window is not excluded from the candidate resource set.

30. The method according to claim 27, wherein the determining, by a MAC layer of the first terminal apparatus, the sixth resource from a candidate resource set comprises:

   determining, by the MAC layer of the first terminal apparatus, the sixth resource from the first slot of the at least one slot in the candidate resource set; and/or
   determining, by the MAC layer of the first terminal apparatus, the sixth resource from a slot, in the candidate resource set, that does not overlap the fourth resource in time domain.

31. The method according to claim 24, wherein the determining, by the first terminal apparatus, a sixth resource from a resource excluding the fourth resource and the fifth resource comprises:

   determining, by the first terminal apparatus, the sixth resource from an initial candidate resource set, wherein the initial candidate resource set comprises a candidate resource that does not overlap the fourth resource or the fifth resource in time domain within a resource selection window of the first terminal apparatus; or
   determining, by the first terminal apparatus, the sixth resource from a candidate resource set, wherein a candidate resource that overlaps the fourth resource in time domain and a candidate resource that overlaps the fifth resource in time domain are excluded from the candidate resource set; or
   determining, by a MAC layer of the first terminal apparatus, the sixth resource from a candidate resource, in a candidate resource set, that does not overlap the fourth resource or the fifth resource in time domain.

32. A communication method, comprising:

   receiving, by a second terminal apparatus, first SCI from a first terminal apparatus, wherein the first SCI indicates a reserved resource for the first terminal apparatus; and
   excluding, by the second terminal apparatus, the reserved resource for the first terminal apparatus based on the first SCI.

33. The method according to claim 32, wherein the first SCI comprises a first field and a second field, and the first field indicates a logical slot offset between a resource on which the first SCI is located and a reserved resource; and a value of the second field is a first value, and the second field indicates that the logical slot offset is determined based on the second resource; or a value of the second field is a second value, and the second field indicates that the logical slot offset is determined based on the first resource and the second resource.

34. The method according to claim 32, wherein the first SCI comprises a first field and a third field, the first field indicates a logical slot offset between a resource on which the first SCI is located and a reserved resource, and the third field comprises at least two bits; and
a value of the third field is a first value, and the third field indicates that the first terminal apparatus is able to receive collision information, and indicates that the logical slot offset is determined based on the second resource; or a value of the third field is a second value, and the third field indicates that the first terminal apparatus is able to receive collision information, and indicates that the logical slot offset is determined based on the first resource and the second resource.

35. The method according to claim 32, wherein the first SCI comprises a first field and a fourth field, the first field indicates a first logical slot offset between a resource on which the first SCI is located and a first reserved resource, the first logical slot offset is determined based on the second resource, the fourth field indicates a second logical slot offset between the first reserved resource and a second reserved resource, the second logical slot offset is determined based on the first resource and the second resource, and an actual reserved resource indicated by the first SCI is the second reserved resource.

36. A communication method, comprising:

obtaining, by a first terminal apparatus, first information, wherein the first information indicates a fourth resource, and the fourth resource is a resource used for a terminal apparatus in a first communication system to transmit sidelink information;
excluding, by the first terminal apparatus, the fourth resource and a fifth resource, wherein the fifth resource comprises a resource in a non-first slot of at least one slot, in a second communication system, that corresponds to a subframe in the first communication system;
determining, by the first terminal apparatus, a sixth resource, wherein the sixth resource comprises at least one resource excluding the fourth resource and the fifth resource; and
transmitting, by the first terminal apparatus on the sixth resource, sidelink information in the second communication system.

37. The method according to claim 36, wherein the determining, by the first terminal apparatus, a sixth resource from a resource excluding the fourth resource and the fifth resource comprises:
determining, by the first terminal apparatus, the sixth resource from a candidate resource set, wherein a candidate resource in a non-first slot of the at least one slot, in the second communication system, that corresponds to the subframe in the first communication system is excluded from the candidate resource set.

38. The method according to claim 36, wherein the determining, by the first terminal apparatus, a sixth resource from a resource excluding the fourth resource and the fifth resource comprises:
selecting, by the first terminal apparatus from a candidate resource set, a candidate resource in the first slot of the at least one slot, in the second communication system, that corresponds to the subframe in the first communication system.

39. The method according to any one of claims 36 to 38, wherein the sixth resource comprises a candidate resource in a slot k that meets $k \bmod(2^{\mu})=X \bmod(2^{\mu})$, and a start location of a subframe 0 in the first communication system is the same as a start location of a slot X in the second communication system.

40. The method according to any one of claims 36 to 38, wherein an SCS in the second communication system is 15 kHz or 30 kHz; and

if a start location of a slot 0 in the second communication system is the same as a start location of a subframe in the first communication system, the sixth resource comprises a candidate resource in a slot k that meets $k \bmod(2^{\mu})=0$, or the sixth resource comprises a candidate resource in a slot k that does not meet $k \bmod(2^{\mu})=1$; or
if a start location of a slot 0 in the second communication system is different from a start location of a subframe in the first communication system, the sixth resource comprises a candidate resource in a slot k that meets $k \bmod(2^{\mu})=1$, or the sixth resource comprises a candidate resource in a slot k that does not meet $k \bmod(2^{\mu})=0$.

41. A communication method, comprising:

obtaining, by a first terminal apparatus, first information, wherein the first information indicates a fourth resource, and the fourth resource is a resource used for a terminal apparatus in a first communication system to transmit sidelink information;

excluding, by the first terminal apparatus, the fourth resource to obtain a candidate resource set;

determining, by the first terminal apparatus, a sixth resource, wherein the sixth resource comprises a resource that is in the candidate resource set and that is in the first slot of at least one slot, in a second communication system, that corresponds to a subframe in the first communication system; and

transmitting, by the first terminal apparatus on the sixth resource, sidelink information in the second communication system.

42. The method according to claim 41, wherein the determining, by the first terminal apparatus, a sixth resource comprises:

determining, by the first terminal apparatus, the sixth resource from the candidate resource set, wherein a candidate resource in a non-first slot of the at least one slot, in the second communication system, that corresponds to the subframe in the first communication system is excluded from the candidate resource set.

43. The method according to claim 41, wherein the determining, by the first terminal apparatus, a sixth resource comprises:

selecting, by the first terminal apparatus from the candidate resource set, a candidate resource in the first slot of the at least one slot, in the second communication system, that corresponds to the subframe in the first communication system.

44. The method according to any one of claims 41 to 43, wherein the sixth resource comprises a candidate resource in a slot k that meets $k \bmod(2^\mu)=X \bmod(2^\mu)$, and a start location of a subframe in the first communication system is the same as a start location of a slot X in the second communication system.

45. The method according to any one of claims 41 to 43, wherein an SCS in the second communication system is 15 kHz or 30 kHz; and

if a start location of a slot 0 in the second communication system is the same as a start location of a subframe in the first communication system, the sixth resource comprises a candidate resource in a slot k that meets $k \bmod(2^\mu)=0$, or the sixth resource comprises a candidate resource in a slot k that does not meet $k \bmod(2^\mu)=1$; or

if a start location of a slot 0 in the second communication system is different from a start location of a subframe in the first communication system, the sixth resource comprises a candidate resource in a slot k that meets $k \bmod(2^\mu)=1$, or the sixth resource comprises a candidate resource in a slot k that does not meet $k \bmod(2^\mu)=0$.

46. A communication apparatus, comprising a unit for performing the method according to any one of claims 1 to 20, or comprising a unit for performing the method according to any one of claims 21 to 31, or comprising a unit for performing the method according to any one of claims 32 to 35, or comprising a unit for performing the method according to any one of claims 36 to 40, or comprising a unit for performing the method according to any one of claims 41 to 45.

47. A communication apparatus, comprising a communication interface and a processor, wherein the communication interface is configured to output and/or input a signal, and the processor is configured to execute a computer program or instructions stored in a memory, so that the communication apparatus performs the method according to any one of claims 1 to 20, or the communication apparatus performs the method according to any one of claims 21 to 31, or the communication apparatus performs the method according to any one of claims 32 to 35, or the communication apparatus performs the method according to any one of claims 36 to 40, or the communication apparatus performs the method according to any one of claims 41 to 45.

48. The communication apparatus according to claim 47, wherein the communication apparatus further comprises the memory.

49. A computer-readable storage medium, comprising a computer program or instructions, wherein when the computer program or instructions are run on a computer, the computer is enabled to perform the method according to any one of claims 1 to 20, or the computer is enabled to perform the method according to any one of claims 21 to 31, or the computer is enabled to perform the method according to any one of claims 32 to 35, or the computer is enabled to perform the method according to any one of claims 36 to 40, or the computer is enabled to perform the method according to any one of claims 41 to 45.

50. A computer program product, comprising instructions, wherein when the instructions are run on a computer, the computer is enabled to perform the method according to any one of claims 1 to 20, or the computer is enabled to perform the method according to any one of claims 21 to 31, or the computer is enabled to perform the method according to any one of claims 32 to 35, or the computer is enabled to perform the method according to any one of claims 36 to 40, or the computer is enabled to perform the method according to any one of claims 41 to 45.

FIG. 1

FIG. 2

FIG. 3

FIG. 4

FIG. 5

LTE and R18 NR shared

FIG. 6

First terminal apparatus

Second terminal apparatus

S201: Obtain configuration information of a resource pool #A

S202: The resource pool #A includes a first resource, and a third resource is determined from the first resource

S202: The resource pool #A includes a first resource and a second resource, and a third resource is determined from the first resource and/or the second resource

S203: Send SL information on the third resource

FIG. 7

| NR-dedicated | R18 NR and LTE shared | NR-dedicated | R18 NR and LTE shared | NR-dedicated | R18 NR and LTE shared | NR-dedicated | R18 NR and LTE shared |

Manner 1

Manner 2

First SCI

Slot    1    2    3    4    5    6    7    8

## FIG. 8

First terminal apparatus

Second terminal apparatus

S301: Send first SCI

S302: Determine a reserved resource for the first terminal apparatus based on the first SCI

## FIG. 9

| NR-dedicated | R18 NR and LTE shared | NR-dedicated | R18 NR and LTE shared | NR-dedicated | R18 NR and LTE shared | NR-dedicated | R18 NR and LTE shared |
|---|---|---|---|---|---|---|---|

First SCI

Slot    1      2      3      4      5      6      7      8

FIG. 10

S401: Determine a third reserved resource

S402: Send first SCI

S403: Skip transmitting SL information on the third reserved resource when a preset condition is met

S404: Reselect a resource

FIG. 11

First terminal apparatus

Second terminal apparatus

S501: Obtain first information

S502: Exclude a fourth resource and a fifth resource from a resource pool

S503: Determine a sixth resource from a resource pool excluding the fourth resource and the fifth resource

S504: Transmit, on the sixth resource, sidelink information in a second communication system

FIG. 12

Resource pool

Resource #B

Fourth resource

Resource #A

Frequency
domain

Time
domain

a

Resource pool

Fourth resource

Resource #C

b

Resource pool

Fifth resource #1

Fourth resource

Fifth resource #2

c

Resource pool

Fourth resource

Resource #D | Resource #E

Resource in
the first slot

d

Resource in a
non-first slot

| LTE-V subframe #0 (with an LTE-V reserved resource) | LTE-V subframe #1 (without an LTE-V reserved resource) |

| NR-V Slot 0 | NR-V Slot 1 | NR-V Slot 0 | NR-V Slot 1 |

Exclude a resource
in this slot

Exclude a resource
in this slot

e

FIG. 13

Communication apparatus

| Transceiver unit 1401 | Processing unit 1402 |

FIG. 14

Communication apparatus

Processor 1501

1504

Memory 1503

Communication interface 1502

FIG. 15

## INTERNATIONAL SEARCH REPORT

| International application No. |
| --- |
| **PCT/CN2023/110227** |

**A.    CLASSIFICATION OF SUBJECT MATTER**

H04W72/04(2023.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, VEN: 侧行, 边链路, 侧链, 直连, 直链, 侧行控制信息, 冲突, 重叠, 共享, 共存, 专用, 同时, 排除, 起始, 首, 时隙, 子帧, 预留, 资源池, LTE-V, NR-V, sidelink, SL, SCI, conflict, overlap, share, co-channel, coexistence, dedicated, Simultaneously, exclude, start, first, slot, frame, reserve, resource pool

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2022108367 A1 (LG ELECTRONICS INC.) 27 May 2022 (2022-05-27)<br>description, paragraphs [0156]-[0271] | 1-20, 46-50 |
| X | US 2021321421 A1 (NTT DOCOMO INC.) 14 October 2021 (2021-10-14)<br>description, paragraphs [0096]-[0103] | 21-31, 46-50 |
| X | CN 114731623 A (GUANGDONG OPPO MOBILE TELECOMMUNICATIONS CORP., LTD.) 08 July 2022 (2022-07-08)<br>description, paragraphs [0044]-[0187] | 32-35, 46-50 |
| X | CN 111586722 A (GOHIGH DATA NETWORKS TECHNOLOGY CO., LTD.) 25 August 2020 (2020-08-25)<br>description, paragraphs [0136]-[0278] | 32-35, 46-50 |
| A | NOKIA et al. "On Co-channel Coexistence for LTE Sidelink and NR Sidelink"<br>*3GPP TSG RAN WG1 #109-e R1-2203124*, 29 April 2022 (2022-04-29),<br>section 2 | 36-50 |

☑ Further documents are listed in the continuation of Box C.    ☑ See patent family annex.

| | | | |
| --- | --- | --- | --- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 September 2023** | **10 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/110227** |

**C.     DOCUMENTS CONSIDERED TO BE RELEVANT**

| Category* | Citation of document, with indication, where appropriate, of the relevant passages | Relevant to claim No. |
|---|---|---|
| A | US 2021385851 A1 (DATANG MOBILE COMMUNICATIONS EQUIPMENT CO., LTD.) 09 December 2021 (2021-12-09) entire document | 1-50 |
| A | WO 2022118301 A1 (LENOVO SINGAPORE PTE LTD.) 09 June 2022 (2022-06-09) entire document | 1-50 |
| PX | NOKIA et al. "On Co-channel Coexistence for LTE-sidelink and NR-sidelink" *3GPP TSG RAN WG1 #112 R1-2300038*, 17 February 2023 (2023-02-17), section 2.2 | 36-50 |

Form PCT/ISA/210 (second sheet) (July 2022)

## INTERNATIONAL SEARCH REPORT
### Information on patent family members

International application No.

**PCT/CN2023/110227**

| Patent document cited in search report | | | Publication date (day/month/year) | Patent family member(s) | | | Publication date (day/month/year) |
|---|---|---|---|---|---|---|---|
| WO | 2022108367 | A1 | 27 May 2022 | KR | 20230104128 | A | 07 July 2023 |
| US | 2021321421 | A1 | 14 October 2021 | WO | 2020049669 | A1 | 12 March 2020 |
| | | | | JPWO | 2020049669 | A1 | 12 August 2021 |
| | | | | EP | 3849275 | A1 | 14 July 2021 |
| | | | | EP | 3849275 | A4 | 27 July 2022 |
| | | | | CN | 112640572 | A | 09 April 2021 |
| CN | 114731623 | A | 08 July 2022 | WO | 2021196143 | A1 | 07 October 2021 |
| | | | | EP | 4050950 | A1 | 31 August 2022 |
| | | | | US | 2022279487 | A1 | 01 September 2022 |
| | | | | IN | 202227035353 | A | 07 October 2022 |
| | | | | CN | 115190545 | A | 14 October 2022 |
| | | | | EP | 4050950 | A4 | 23 November 2022 |
| | | | | KR | 20220163352 | A | 09 December 2022 |
| | | | | JP | 2023527606 | A | 30 June 2023 |
| CN | 111586722 | A | 25 August 2020 | None | | | |
| US | 2021385851 | A1 | 09 December 2021 | EP | 3876464 | A1 | 08 September 2021 |
| | | | | EP | 3876464 | A4 | 22 December 2021 |
| | | | | WO | 2020088049 | A1 | 07 May 2020 |
| | | | | CN | 116017362 | A | 25 April 2023 |
| | | | | CN | 111147202 | A | 12 May 2020 |
| WO | 2022118301 | A1 | 09 June 2022 | AU | 2021393140 | A1 | 08 June 2023 |
| | | | | KR | 20230110531 | A | 24 July 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211002244

- CN 202310405623